# EUROPEAN PATENT APPLICATION

(11) **EP 4 509 257 A1**
(43) Date of publication of application: **19.02.2025**
(21) Application number: 22937452.5
(22) Date of filing: 14.04.2022
(51) Int. Cl.: B23K 26/08

(54) **PROCESSING SYSTEM AND MEASUREMENT SYSTEM**

(71) Applicant: Nikon Corporation, Tokyo 140-8601 (JP)
(72) Inventor: ICHINOSE, Go, Tokyo 140-8601 (JP); KUSU, Shunta, Tokyo 140-8601 (JP)
(74) Representative: Arnold & Siedsma
(86) International application number: PCT/JP2022/017814
(87) International publication number: WO 2023/199473

(57) **Abstract**

A processing system includes: a processing apparatus configured to process an object by irradiating the object with a processing beam; a measuring apparatus configured to measure positions of the object and the processing apparatus; and a control apparatus configured to control the processing apparatus. The processing apparatus includes: a first movement apparatus configured to change a position of a processing head that emits the processing beam; and a second movement apparatus on which the first movement apparatus is mounted and which is configured to move together with the first movement apparatus. The control apparatus controls a movement due to the second movement apparatus based on a measuring result by the measurement apparatus and model information related to a shape of the object.

## Description

### Technical Field

The present invention relates to a processing system that is configured to process an object and a measurement system that is configured to measure an object, for example.

### Background Art

A Patent Literature 1 discloses, as a processing system that is configured to process an object, a processing system that processes an object by irradiating a surface of the object with processing light. This type of processing system is required to appropriately process the object. Moreover, a measurement system that is configured to measure an object is also required to appropriately measure the object.

### Citation List

### Patent Literature

Patent Literature 1: WO2000/054925A1

### Summary of Invention

A first aspect provides a processing system that processes an object, wherein the processing system includes: a processing apparatus that is configured to process the object by irradiating the object with a processing beam; a measuring apparatus that is configured to measure a position of the object and that is configured to measure a position of the processing apparatus; and a control apparatus that is configured to control the processing apparatus, the processing apparatus includes: a first movement apparatus that is configured to change a position of a processing head that emits the processing beam; and a second movement apparatus on which the first movement apparatus is mounted and which is configured to move together with the first movement apparatus, the control apparatus controls a movement due to the second movement apparatus based on a measuring result by the measurement apparatus and model information related to a shape of the object.

A second aspect provides a processing system that processes an object, wherein the processing system includes: a processing apparatus that is configured to process the object by irradiating the object with a processing beam; and a measurement apparatus including a measurement head that is configured to measure the object that is expected to be processed by the processing apparatus or the object that has been processed by the processing apparatus, the processing apparatus includes: a first movement apparatus that is configured to change a position of a processing head that emits the processing beam; and a second movement apparatus on which the first movement apparatus is mounted and which is configured to move together with the first movement apparatus, the measurement apparatus includes: a third movement apparatus that is configured to change a position of the measurement head; and a fourth movement apparatus on which the third movement apparatus is mounted and which is configured to move together with the third movement apparatus.

A third aspect provides a processing system that processes an object, wherein the processing system includes: a processing apparatus that is configured to process the object by irradiating the object with a processing beam; a measuring apparatus that is configured to measure a position of the object; and a control apparatus that is configured to control the processing apparatus, the processing apparatus includes: a first movement apparatus that is configured to change a position of a processing head that emits the processing beam; and a second movement apparatus on which the first movement apparatus is mounted and which is configured to move on a first plane, the control apparatus controls a movement on the first plane due to the second movement apparatus based on a measuring result by the measuring apparatus and model information related to a shape of the object.

A fourth aspect provides a processing system that processes an object, wherein the processing system includes: a processing apparatus that is configured to process the object by irradiating the object with a processing beam; an imaging apparatus that is configured to image the object; and a control apparatus that is configured to control the processing apparatus, the processing apparatus includes: a first movement apparatus that is configured to change a position of a processing head that emits the processing beam; and a second movement apparatus on which the first movement apparatus is mounted and which is configured to move on a first plane, the control apparatus controls a movement on the first plane due to the second movement apparatus based on an imaged result by the imaging apparatus and model information related to a shape of the object.

A fifth aspect provides a measurement system including: a measurement apparatus including a measurement head that is configured to measure a position or a shape of an object; a measuring apparatus that is configured to measure a position of the object and that is configured to measure a position of the measurement apparatus; and a control apparatus that is configured to control the measurement apparatus, wherein the measurement apparatus includes: a first movement apparatus that is configured to change a position of the measurement head; and a second movement apparatus on which the first movement apparatus is mounted and which is configured to move on a first plane, the control apparatus controls a movement on the first plane due to the second movement apparatus based on a measuring result by the measuring apparatus and model information related to a shape of the object.

A sixth aspect provides a measurement system including: a measurement apparatus including a measurement head that is configured to measure a position or a shape of an object; a measuring apparatus that is configured to measure a position of the object; and a control apparatus that is configured to control the measurement apparatus, wherein the measurement apparatus includes: a first movement apparatus that is configured to change a position of the measurement head; and a second movement apparatus on which the first movement apparatus is mounted and which is configured to move on a first plane, the control apparatus controls a movement on the first plane due to the second movement apparatus based on a measuring result by the measuring apparatus and model information related to a shape of the object.

A seventh aspect provides a measurement system including: a measurement apparatus including a measurement head that is configured to measure a position or a shape of an object; an imaging apparatus that is configured to image the object; and a control apparatus that is configured to control the measurement apparatus, wherein the measurement apparatus includes: a first movement apparatus that is configured to change a position of the measurement head; and a second movement apparatus on which the first movement apparatus is mounted and which is configured to move on a first plane, the control apparatus controls a movement on the first plane due to the second movement apparatus based on an imaged result by the imaging apparatus and model information related to a shape of the object.

A eighth aspect provides a processing system that processes an object, wherein the processing system includes: a processing apparatus that is configured to process the object by irradiating the object with a processing beam; a measuring apparatus that is configured to measure a position of the object; and a control apparatus that is configured to control the processing apparatus, the processing apparatus includes: a first movement apparatus that is configured to change a position of a processing head that emits the processing beam; and a second movement apparatus on which the first movement apparatus is mounted and which is configured to move on a first plane.

### Brief Description of Drawings

[FIG. 1] FIG. 1 is a schematical view that schematically illustrates one example of an entire configuration of a processing system in a present example embodiment.
[FIG. 2] FIG. 2 is a side view that illustrates an exterior appearance of a processing apparatus in the present example embodiment.
[FIG. 3] FIG. 3 is a block diagram that illustrates an entire configuration of the processing apparatus in the present example embodiment.
[FIG. 4] FIG. 4 is a schematical view that illustrates a configuration of a self-propelled driving system and an arm driving system.
[FIG. 5] FIG. 5 is a schematical view that illustrates a configuration of a micromotion driving system.
[FIG. 6] FIG. 6 is a side view that illustrates an exterior appearance of a measurement apparatus in the present example embodiment.
[FIG. 7] FIG. 7 is a block diagram that illustrates an entire configuration of the measurement apparatus in the present example embodiment.
[FIG. 8] FIG. 8 is a schematical view that illustrates a configuration of a self-propelled driving system and an arm driving system.
[FIG. 9] FIG. 9 is a front view that illustrates an exterior appearance of a position measuring apparatus in the present example embodiment.
[FIG. 10] FIG. 10 is a block diagram that illustrates a configuration of the position measuring apparatus in the present example embodiment.
[FIG. 11] FIG. 11 is a block diagram that illustrates a configuration of a control server 4 in the present example embodiment.
[FIG. 12] FIG. 12 illustrates a data structure of a processing information DB.
[FIG. 13] FIG. 13 illustrates a data structure of a measurement information DB.
[FIG. 14] FIG. 14 is a schematical view that illustrates one example of a workpiece that is processed by the processing apparatus and that is measured by the measurement apparatus.
[FIG. 15] FIG. 15 is a flowchart that illustrates a flow of a processing operation.
[FIG. 16] FIG. 16 is a top view that illustrates a positional relationship between the position measuring apparatus and an airplane that is one example of the workpiece.
[FIG. 17] FIG. 17 is a top view that illustrates the airplane that is one example of the workpiece.
[FIG. 18] FIG. 18 is a flowchart that illustrates a flow of an operation for moving a processing head at a step S112 in FIG. 15.
[FIG. 19] FIG. 19 is a top view that illustrates one example of a fine adjustment area.
[FIG. 20] FIG. 20 is a flowchart that illustrates a flow of a measurement operation.
[FIG. 21] Each of FIG. 21A and FIG. 21B is a cross-sectional view that illustrates the processing apparatus processing the workpiece and the measurement apparatus measuring the workpiece.
[FIG. 22] FIG. 22 is a cross-sectional view that illustrates the workpiece including a base material and a film.
[FIG. 23] FIG. 23 is a top view that conceptionally illustrates a non-processing area set on the workpiece.
[FIG. 24] FIG. 24 is a block diagram that illustrates a configuration of a processing system in a first modified example.
[FIG. 25] Each of FIG. 25A and FIG. 25B schematically illustrates one example of an usage of at least two processing apparatuses 1 and an usage of at least two measurement apparatuses 2.
[FIG. 26] FIG. 26 is a block diagram that illustrates a configuration of a processing apparatus in a second modified example.
[FIG. 27] FIG. 27 is a block diagram that illustrates a configuration of a control server in a third modified example.

### Example Embodiments

Next, with reference to drawings, an example embodiment of a processing system, a processing method, a measurement system, and a measurement method will be described. In the below-described description, the example embodiment of the processing system, the processing method, the measurement system, and the measurement method will be described by using a processing system SYS. However, the present invention is not limited to the below-described example embodiments.

Moreover, in the below-described description, a positional relationship of various components included in the processing system SYS will be described by using an XYZ rectangular coordinate system that is defined by an X-axis, a Y-axis, and a Z-axis that are perpendicular to one another. Note that each of an X-axis direction and a Y-axis direction is assumed to be a horizontal direction (namely, a predetermined direction in a horizontal plane), and a Z-axis direction is assumed to be a vertical direction (namely, a direction that is perpendicular to the horizontal plane, and substantially a vertical direction) in the below-described description, for convenience of the description. Moreover, rotational directions (in other words, inclination directions) around the X-axis, the Y-axis, and the Z-axis are referred to as a θX direction, a θY direction, and a θZ direction, respectively.

### (1) Configuration of Processing System SYS

First, a configuration of the processing system SYS in the present example embodiment will be described.

### (1-1) Entire Configuration of Processing System SYS

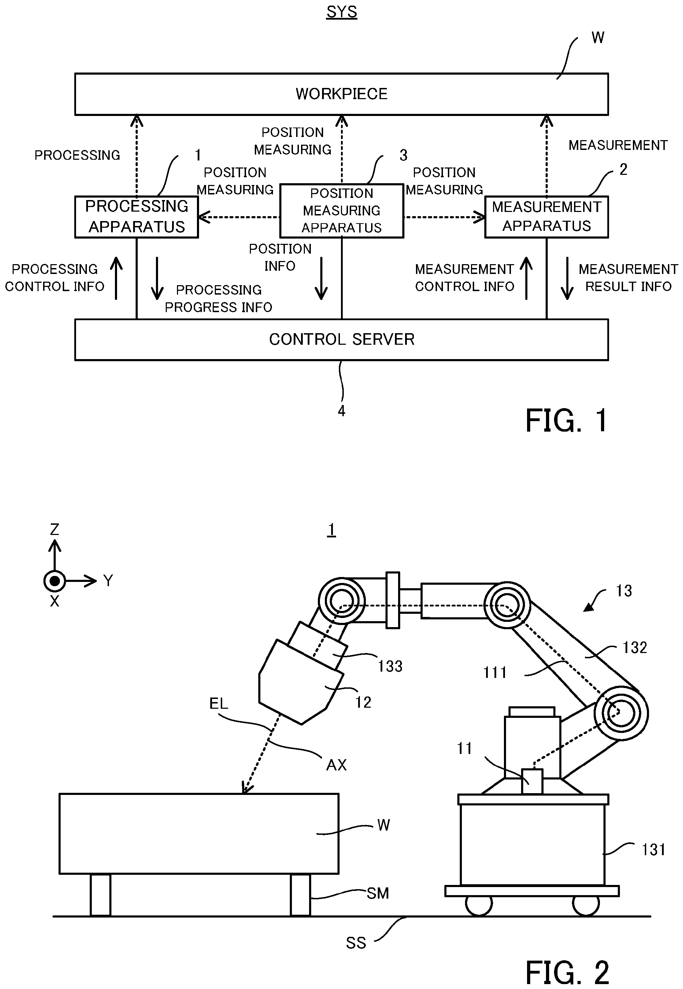

First, with reference to FIG. 1, an entire configuration of the processing system SYS in the present example embodiment will be described. FIG. 1 is a block diagram that illustrates the entire configuration of the processing system SYS in the present example embodiment.

As illustrated in FIG. 1, the processing system SYS includes a processing apparatus 1, a measurement apparatus 2, a position measuring apparatus 3, and a control server 4.

Each of the processing apparatus 1, the measurement apparatus 2, and the position measuring apparatus 3 is configured to communicate with the control server 4 through a communication network. Namely, the control server 4 is configured to communicate with each of the processing apparatus 1, the measurement apparatus 2, and the position measuring apparatus 3 through the communication network. The communication network may typically include a wireless communication network. A communication network compliant with IMT (International Mobile Telecommunication) standards (for example, communication network compliant with a 4G, a 5G or a 6G) is one example of the wireless communication network. A wireless LAN (Local Area Network) is another example of the wireless communication network. A communication network through which an optical wireless communication is allowed is another example of the wireless communication network.

The processing apparatus 1 is configured to process a workpiece W, which is one example of an object, under the control of the control server 4. The workpiece W may be a metal, may be an alloy (for example, duralumin and the like), may be a semiconductor (for example, silicon), may be a resin, may be a composited material such as a CFRP (Carbon Fiber Reinforced Plastic), a painting material (as one example a film of painting material that is coated on a base member), may be a glass or may be an object that is made from any other material, for example.

The processing apparatus 1 may perform an additive manufacturing on the workpiece W. Namely, the processing apparatus 1 may perform the additive manufacturing for building a build object on the workpiece W. The processing apparatus 1 may perform a subtractive manufacturing on the workpiece W. Namely, the processing apparatus 1 may perform the subtractive manufacturing for removing a part of the workpiece W. The processing apparatus 1 may perform a marking processing for forming a desired mark on the surface of the workpiece W. The processing apparatus 1 may perform a peening processing for changing a characteristic of the surface of the workpiece W. The processing apparatus 1 may perform a peeling process for peeling the surface of the workpiece W. The processing apparatus 1 may perform a welding processing for joining one workpiece W to another workpiece W. The processing apparatus 1 may perform a cutting processing for cutting the workpiece W.

The processing apparatus 1 may form a desired structure on the surface of the workpiece W by processing the workpiece W. However, the processing apparatus 1 may perform a processing that is different from a processing for forming the desired structure on the surface of the workpiece W.

A riblet structure is one example of the desired structure. The riblet structure may include a structure by which a resistance (especially, at least one of a frictional resistance and a turbulent frictional resistance) of the surface of the workpiece W to fluid is reducible. Therefore, the riblet structure may be formed on the workpiece W having a member that is placed (in other words, positioned) in the fluid. Note that the fluid here means any medium (for example, at least one of gas and liquid) that flows relative to the surface of the workpiece W. For example, in the case where the surface of workpiece W moves relative to the medium although the medium itself is static, this medium may be referred to as the fluid. Note that a state where the medium is static may mean a state where the medium does not move relative to a predetermined reference object (for example, a ground surface).

At least one of an airplane, a windmill, a turbine for an engine, and a turbine for a power generation is one example of the workpiece W on which the riblet structure is formed. In a case where the riblet structure is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W. For example, in a case where the workpiece W is a member exposed on a surface of the airplane (for example, at least a part of the airplane), the resistance that prevents the airplane from moving is reduced, and thereby a fuel saving of the airplane is achievable. For example, in a case where the workpiece W is the windmill (for example, at least a part of the windmill), the resistance that prevents the windmill from moving (typically, rotating) is reduced, and thereby a high efficiency of the windmill is achievable. For example, in a case where the workpiece W is the turbine for the engine (for example, at least a part of the turbine for the engine), the resistance that prevents the turbine for the engine from moving (typically, rotating) is reduced, and thereby a high efficiency and energy saving of the turbine for the engine is achievable. For example, in a case where the workpiece W is the turbine for the power generation (for example, at least a part of the turbine for the power generation), the resistance that prevents the turbine for the power generation from moving (typically, rotating) is reduced, and thereby a high efficiency and energy saving of the turbine for the power generation is achievable. There is a possibility that the processing apparatus 1 can contribute "13-2-2 Total Greenhous gas emission per year" in indicators included in Goal 13 (Take urgent action to combat climate change and its impact) of Sustainable Development Goals (SDGs) initiated by United Nations.

The measurement apparatus 2 is configured to measure the workpiece W under the control of the control server 4. For example, the measurement apparatus 2 may measure the workpiece W that is expected to be processed by the processing apparatus 1. For example, the measurement apparatus 2 may measure the workpiece W that has been already processed by the processing apparatus 1. The measurement apparatus 2 may be configured to measure a position of the workpiece W. Namely, a measurement of the workpiece W by the measurement apparatus 2 may include a measurement of the position of the workpiece W. The measurement apparatus 2 may be configured to measure a shape (for example, a three-dimensional shape) of the workpiece W. Namely, the measurement of the workpiece W by the measurement apparatus 2 may include a measurement of the shape of the workpiece W.

Incidentally, since the processing system SYS is configured to measure the workpiece W by using the measurement apparatus 2, the processing system SYS may be referred to as a measurement system.

The position measuring apparatus 3 is configured to measure a position of a measuring target object. An operation for measuring the position of the measuring target object may mean the operation for acquiring information directly or indirectly indicating the position of the measuring target object as a measuring result. The measuring target object may include the workpiece W. The measuring target object may include the processing apparatus 1. The measuring target object may include the measurement apparatus 2. Namely, the position measuring apparatus 3 may be configured to measure the position of at least one of the workpiece W, the processing apparatus 1, and the measurement apparatus 2.

The position measuring apparatus 3 is configured to measure a position of the measuring target object in a measuring coordinate system defined with respect to the position measuring apparatus 3. In the present example embodiment, an example in which the measuring coordinate system of the position measuring apparatus 3 is used as a reference coordinate system that is a baseline for the processing system SYS. The measuring coordinate system (namely, the reference coordinate system) may be a coordinate system in which each of an X-axis direction and a Y-axis direction is a horizontal direction, a Z-axis direction is a vertical direction, and a position of an origin is set based on a position at which the position measuring apparatus 3 is positioned, for example. In the below-described description, the X-axis, the Y-axis, and the Z-axis may mean the X-axis, the Y-axis, and the Z-axis in the measuring coordinate system (namely, the reference coordinate system), respectively, if there is no special notation. For example, the position measuring apparatus 3 may measure the position of the workpiece W in at least one of the X-axis direction, the Y-axis direction, the Z-axis direction, the θX direction, the θYdirection, and the θZ direction. For example, the position measuring apparatus 3 may measure the position of the processing apparatus 1 in at least one of the X-axis direction, the Y-axis direction, the Z-axis direction, the θX direction, the θYdirection, and the θZ direction. For example, the position measuring apparatus 3 may measure the position of the measurement apparatus 2 in at least one of the X-axis direction, the Y-axis direction, the Z-axis direction, the θX direction, the θY direction, and the θZ direction.

The position of the workpiece W measured by the position measuring apparatus 3 (namely, the position of the workpiece W indicated by the measuring result by the position measuring apparatus 3) may be used as a reference position that is a baseline for the workpiece W. In this case, the position measuring apparatus 3 may be considered to measure the reference position of the workpiece W. Similarly, the position of the processing apparatus 1 measured by the position measuring apparatus 3 (namely, the position of the processing apparatus 1 indicated by the measuring result by the position measuring apparatus 3) may be used as a reference position that is a baseline for the processing apparatus 1. In this case, the position measuring apparatus 3 may be considered to measure the reference position of the processing apparatus 1. Similarly, the position of the measurement apparatus 2 measured by the position measuring apparatus 3 (namely, the position of the measurement apparatus 2 indicated by the measuring result by the position measuring apparatus 3) may be used as a reference position that is a baseline for the measurement apparatus 2. In this case, the position measuring apparatus 3 may be considered to measure the reference position of the measurement apparatus 2.

The control server 4 may be configured to control the processing apparatus 1. For example, the control server 4 may control the processing apparatus 1 so that the processing apparatus 1 processes the workpiece W in a desired processing manner. In order to control the processing apparatus 1, the control server 4 may receive (namely, acquire) position information indicating the measuring result of the position of at least one of the workpiece W, the processing apparatus 1, and the measurement apparatuses 2 from the position measuring apparatus 3 through the communication network. The control server 4 may generate processing control information for controlling the processing apparatus 1 based on the position information. The control server 4 may transmit (namely, output) the generated processing control information to the processing apparatus 1 through the communication network. The processing apparatus 1 may process the workpiece W based on the processing control information transmitted from the control server 4.

The control server 4 may manage a progress of the processing of the workpiece W by the processing apparatus 1. In this case, the control server 4 may receive (namely, acquire) processing progress information related to the progress of the processing of the workpiece W by the processing apparatus 1 from the processing apparatus 1 through the communication network. The processing apparatus 1 may transmit (namely, output) the processing progress information to the control server 4 through the communication network.

The control server 4 may be configured to control the measurement apparatus 2 in addition to or instead of being configured to control the processing apparatus 1. For example, the control server 4 may control the measurement apparatus 2 so that the measurement apparatus 2 measures the workpiece W in a desired measurement manner. In order to control the measurement apparatus 2, the control server 4 may receive (namely, acquire) the position information indicating the measuring result of the position of at least one of the workpiece W, the processing apparatus 1, and the measurement apparatus 2 from the measurement apparatus 2 through the communication network. The control server 4 may generate measurement control information for controlling the measurement apparatus 2 based on the position information. The control server 4 may transmit (namely, output) the generated measurement control information to the measurement apparatus 2 through the communication network. The measurement apparatus 2 may measure the workpiece W based on the measurement control information transmitted from the control server 4.

The control server 4 may acquire a measured result of the workpiece W by the measurement apparatus 2. In this case, the control server 4 may receive (namely, acquire) measurement result information related to the measured result of the workpiece W by the measurement apparatus 2 from the measurement apparatus 2 through the communication network. The measurement apparatus 2 may transmit (namely, output) the measurement result information to the control server 4 through the communication network.

The control server 4 may control at least one of the processing apparatus 1 and the measurement apparatus 2 by using the measurement result information acquired from the measurement apparatus 2. For example, the control server 4 may generate the processing control information based on the above-described position information and the measurement result information. For example, the control server 4 may generate the measurement control information based on the above-described position information and the measurement result information.

Incidentally, the processing system SYS may include at least one of the processing apparatus 1, the measurement apparatus 2, and the position measuring apparatus 3, but may not include at least other one of the processing apparatus 1, the measurement apparatus 2, and the position measuring apparatus 3. For example, the processing system SYS may include the processing apparatus 1 and the measurement apparatus 2, but may not include the position measuring apparatus 3. For example, the processing system SYS may include the measurement apparatus 2 and the position measuring apparatus 3, but may not include the processing apparatus 1. For example, the processing system SYS may include the processing apparatus 1 and the position measuring apparatus 3, but may not include the measurement apparatus 2.

### (1-2) Configuration of Processing Apparatus 1

Next, a configuration of the processing apparatus 1 in the present example embodiment will be described.

### (1-2-1) Entire Configuration of Processing Apparatus 1

First, with reference to FIG. 2, an entire configuration of the processing apparatus 1 in the present example embodiment will be described. FIG. 2 is a side view that schematically illustrates an external appearance of the processing apparatus 1 in the present example embodiment.

As illustrated in FIG. 2, the processing apparatus 1 may process the workpiece W that is positioned on a support surface SS. In the example illustrated in FIG. 2, the workpiece W may be positioned on the support surface SS through a support member SM that supports the workpiece W on the support surface SS. The support member SM may be movable on the support surface SS. In this case, the support member SM may serve as a transport apparatus that transports the workpiece W to a desired position. Alternatively, the support member SM may not be movable on the support surface SS. The support member SM may be fixed to the support surface SS. Alternatively, the workpiece W may be positioned directly on the support surface SS. Incidentally, the workpiece W may be placed on a self-propelled system or a movable stage. In this case, the position of the workpiece W relative to the support surface SS is changeable.

In the present example embodiment, the processing apparatus 1 irradiates the workpiece W with processing light EL (namely, an energy beam in a form of light) in order to process the workpiece W. Namely, the processing apparatus 1 processes the workpiece W by irradiating the workpiece W with the processing light EL. The processing light EL may be any light as long as the workpiece W can be processed by irradiating the workpiece W with it. In the present example embodiment, an example in which the processing light EL is a laser light will be described. However, the processing light EL may be a light that is different from the laser light. Furthermore, a wavelength of the processing light EL may be any wavelength as long as the workpiece W can be processed by irradiating the workpiece W with it. For example, the processing light EL may be visible light or may be invisible light (for example, at least one of infrared light, ultraviolet light, extreme ultraviolet light, and the like). The processing light EL may include a pulsed light (for example, a pulsed light, an ON time of which is equal to or shorter than a pico-order second). Alternatively, the processing light EL may not include the pulsed light. In other words, the processing light EL may be a continuous light.

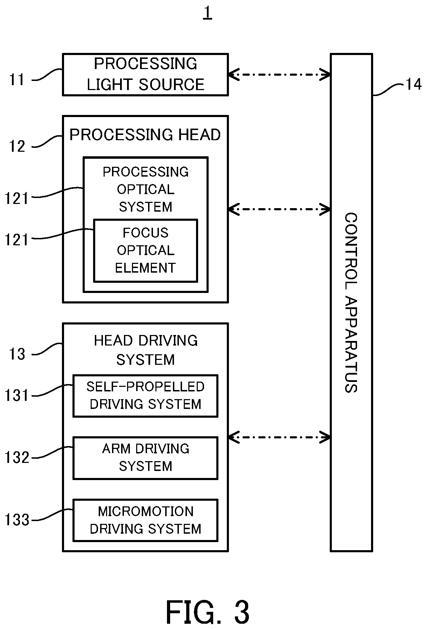

In order to process the workpiece W by using the processing light EL, the processing apparatus 1 includes a processing light source 11, a processing head 12, a head driving system 13, and a control apparatus 14, as illustrated in FIG. 2 and FIG. 3 that is a block diagram illustrating the entire configuration of the processing apparatus 1.

The processing light source 11 is configured to generate the processing light EL. The processing light source 11 emits the generated processing light EL toward the processing head 12 through an non-illustrated light transmitting member. Tt least one of an optical fiber and a light pipe is one example of the light transmitting member.

The processing head 12 irradiates the workpiece W with the processing light EL emitted from the processing light source 11. In order to irradiate the workpiece W with the processing light EL, the processing head 12 includes a processing optical system 121. The processing head 12 irradiates the workpiece W with the processing light EL through the processing optical system 121. Namely, the processing optical system 121 is an optical system for irradiating the workpiece W with the processing light EL. Therefore, the processing optical system 121 may be referred to as an irradiation optical system.

The processing optical system 121 may include a focus optical element 1211. For example, the focus optical element 1211 may be configured to change a converged position of the processing light EL. Especially, the focus optical element 1211 may be configured to change the converged position of the processing light EL in a direction along an optical axis AX of the processing optical system 121. Because the optical axis AX of the processing light EL typically intersects the surface of the workpiece W, the focus optical element 1211 may be configured to change the converged position of the processing light EL in a direction that intersects the surface of the workpiece W.

The head driving system 13 moves the processing head 12. Therefore, the head driving system 13 may be referred to as a movement apparatus. Specifically, the head driving system 13 moves the processing head 12 relative to the workpiece W. In order to move the processing head 12, the head driving system 13 includes a self-propelled driving system 131, an arm driving system 132, and a micromotion driving system 133. However, the head driving system 13 may not include at least one of the self-propelled driving system 131, the arm driving system 132, and the micromotion driving system 133.

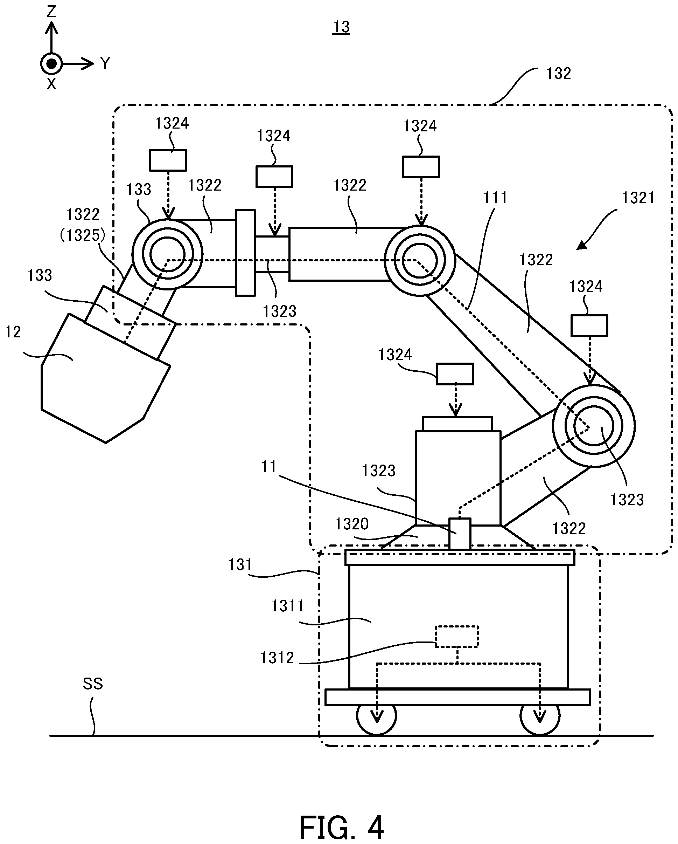

A configuration of each of the self-propelled driving system 131, the arm driving system 132, and the micromotion driving system 133 will be described later in detail with reference to FIG. 4 to FIG. 5. An overview of the self-propelled driving system 131, the arm driving system 132, and the micromotion driving system 133 is briefly described here. The self-propelled driving system 131 is configured to move on the support surface SS which supports the workpiece W or on which the workpiece W is positioned. Especially, the self-propelled driving system 131 is configured to move by itself on the support surface SS which supports the workpiece W or on which the workpiece W is positioned. The self-propelled driving system 131 moves the processing head 12 (namely, changes the position of the processing head 12) by moving by itself on the support surface SS. The arm driving system 132 is a driving system that is configured to serve as a robot arm for moving the processing head 12 (namely, changing the position of the processing head 12). The micromotion driving system 133 is also a driving system that is configured to move the processing head 12 (namely, change the position of the processing head 12), as with the arm driving system 132.

Each of the self-propelled driving system 131, the arm driving system 132, and the micromotion driving system 133 moves the processing head 12 along at least one of the X-axis direction, the Y-axis direction, the Z-axis direction, the θX direction, the θY direction, and the θZ direction. However, in the present example embodiment, the self-propelled driving system 131 moves by itself on the support surface SS. The support surface SS is typically a surface along the XY plane. Therefore, in the below-described description, an example in which the self-propelled driving system 131 is configured to move the processing head 12 along each of the X-axis direction and the Y-axis direction will be described. Furthermore, in the below-described description, an example in which the arm driving system 132 is configured to move the processing head 12 along each of the X-axis direction, the Y-axis direction, the Z-axis direction, the θX direction, the θY direction, and the θZ direction will be described. Note that moving the processing head 12 along at least one of the θX direction, the θY direction, and the θZ direction may be considered to be equivalent to changing a pose of the processing head 12 around at least one of the X-axis, the Y-axis, the Z-axis. Alternatively, moving the processing head 12 along at least one of the θX direction, the θY direction, and the θZ direction may be considered to be equivalent to rotationally moving the processing head 12 around at least one of the X-axis, the Y-axis, the Z-axis. Incidentally, the support surface SS may be a surface that is inclined with respect to the XY plane or may be a non-planar surface.

When the processing head 12 moves, a positional relationship between the processing head 12 and the workpiece W changes. Furthermore, when the positional relationship between the processing head 12 and the workpiece W changes, a positional relationship between the workpiece W and the processing optical system 121 of the processing head 12 changes. Therefore, moving the processing head 12 is equivalent to changing an irradiation position of the processing light EL on the workpiece W.

The control apparatus 14 controls an operation of the processing apparatus 1. For example, the control apparatus 14 may control at least one of the processing light source 11, the processing head 12, and the head driving system 13 of the processing apparatus 1 so as to process the workpiece W in a desired processing manner based on the processing control information transmitted from the control server 4. Furthermore, the control apparatus 14 may monitor the progress of the processing of the workpiece W by the processing apparatus 1 and generate the processing progress information related to the progress of the processing. The control apparatus 14 may transmit the generated processing progress information to the control server 4.

The control apparatus 14 may include an calculation apparatus and a storage apparatus, for example. The calculation apparatus may include at least one of a CPU (Central Processing Unit) and a GPU (Graphical Processing Unit), for example. The storage apparatus may include a memory, for example. The control apparatus 14 serves as an apparatus for controlling the operation of the processing apparatus 1 by means of the calculation apparatus executing a computer program. The computer program is a computer program that allows the calculation apparatus to execute (namely, to perform) a below-described operation that should be executed by the control apparatus 14. Namely, the computer program is a computer program that allows the control apparatus 14 to function so as to make the processing apparatus 1 execute the below-described operation. The computer program executed by the calculation apparatus may be recorded in the storage apparatus (namely, a recording medium) of the control apparatus 14, or may be recorded in any recording medium (for example, a hard disk or a semiconductor memory) that is built in the control apparatus 14 or that is attachable to the control apparatus 14. Alternatively, the calculation apparatus may download the computer program that should be executed from an apparatus positioned at the outside of the control apparatus 14 through a network interface.

The control apparatus 14 may control an emitting aspect of the processing light EL by the processing head 12. The emitting aspect may include at least one of an intensity of the processing light EL and an emitting timing of the processing light EL, for example. In a case where the processing light EL includes a plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 14 may control a movement aspect of the processing head 12 by the head driving system 13. The movement aspect may include at least one of a movement distance, a movement speed, a movement direction, and a movement timing (a movement period), for example.

The control apparatus 14 may not be positioned in the processing apparatus 1. For example, the control apparatus 14 may be positioned at an outside of the processing apparatus 1 as a server or the like. In this case, the control apparatus 14 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 14 and the processing apparatus 1 may be configured to transmit and receive various information through the network. Moreover, the control apparatus 14 may be configured to transmit information such as a command and a control parameter to the processing apparatus 1 through the network. The processing apparatus 1 may include a reception apparatus that is configured to receive the information such as the command and the control parameter from the control apparatus 14 through the network. The processing apparatus 1 may include a transmission apparatus that is configured to transmit the information such as the command and the control parameter to the control apparatus 14 through the network (namely, an output apparatus that is configured to output information to the control apparatus 14). Alternatively, a first control apparatus that is configured to perform a part of the arithmetic processing performed by the control apparatus 14 may be positioned in the processing apparatus 1 and a second control apparatus that is configured to perform another part of the arithmetic processing performed by the control apparatus 14 may be positioned at the outside of the processing apparatus 1. Incidentally, the control apparatus 14 or the second control apparatus positioned at the outside of the processing apparatus 1 may be positioned in a location that is different from a facility (for example, a hangar) in which the processing apparatus 1 is used.

An arithmetic model that is buildable by machine learning may be implemented in the control apparatus 14 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 14 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control apparatus 14. Moreover, the arithmetic model implemented in the control apparatus 14 may be updated by online machine learning on the control apparatus 14. Alternatively, the control apparatus 14 may control the operation of the processing apparatus 1 by using the arithmetic model implemented in an apparatus positioned at the outside of the control apparatus 14 (namely, an apparatus positioned at the outside of the processing apparatus 1), in addition to or instead of the arithmetic model implemented on the control apparatus 14.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 14. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control apparatus 14 by means of the control apparatus 14 (namely, a computer) executing the computer program, may be realized by a hardware such as a predetermined gate array (a FPGA, an ASIC) of the control apparatus 14, or may be realized in a form in which the logical process block and a partial hardware module that realizes a partial element of the hardware are combined.

Incidentally, the processing apparatus 1 may include an electric power source. For example, the processing apparatus 1 may include the electric power source positioned on a wheeled platform 1311 of the self-propelled driving system 131. The processing apparatus 1 may operate by using electric power supplied by the electric power source. For example, the processing light source 11 may generate the processing light EL by using electric power supplied by the electric power source. For example, the head driving system 13 may move the processing head 12 by using electric power supplied by the electric power source. The electric power source may be rechargeable. For example, the electric power source may be rechargeable by a non-contact charger (wireless charger).

### (1-2-2) Configuration of Head Driving System 13

Next, one example of the configuration of the head driving system 13 will be described. As described above, the head driving system 13 includes the self-propelled driving system 131, the arm driving system 132, and the micromotion driving system 133. Therefore, in the below-described description, the self-propelled driving system 131, the arm driving system 132, and the micromotion driving system 133 will be described in sequence.

### (1-2-2-1) Configuration of Self-Propelled Driving System 131

First, with reference to FIG. 4, a configuration of the self-propelled driving system 131 will be described. FIG. 4 is a cross-sectional view that illustrates the configuration of the self-propelled driving system 131.

As illustrated in FIG. 4, the self-propelled driving system 131 includes the wheeled platform 1311 and a motor 1312. The wheeled platform 1311 is a platform to which a wheel is attached. The wheeled platform 1311 is positioned on the support surface SS. The wheel of the wheeled platform 1311 is rotatable by using a driving force of the motor 1312. As a result, the wheeled platform 1311 is movable on the support surface SS by using the driving power of the motor 1312 that is driven under the control of the control apparatus 14. Namely, the wheeled platform 1311 is movable by itself on the support surface SS by using the driving power of the motor 1312.

Thus, the self-propelled driving system 131 is configured to move by itself on the support surface SS. Namely, the self-propelled driving system 131 is configured to move by itself along at least one of the X-axis direction and the Y-axis direction because the support surface SS is the surface along the XY plane as described above. Incidentally, "a state where the self-propelled driving system 131 moves by itself on the support surface SS" here may mean a state where the self-propelled driving system 131 moves with respect to the support surface SS by using a driving force generated by the self-propelled driving system 131 itself.

The arm driving system 132 is connected to the wheeled platform 1311. Specifically, the arm driving system 132 is attached (namely, fixed) to the wheeled platform 1311 (to an upper surface of the wheeled platform 1311 in an example illustrated in FIG. 4). Therefore, when the wheeled platform 1311 moves, the arm driving system 132 also moves. Namely, the self-propelled driving system 131 moves together with the arm driving system 132. Furthermore, the micromotion driving system 133 is connected to the arm driving system 132. Specifically, the micromotion driving system 133 is attached (namely, fixed) to the arm driving system 132. Therefore, when the wheeled platform 1311 moves, the micromotion driving system 133 also moves. Namely, the self-propelled driving system 131 moves together with the micromotion driving system 133. Furthermore, the processing head 12 is connected to the micromotion driving system 133. Specifically, the processing head 12 is attached (namely, fixed) to the micromotion driving system 133. Therefore, when the wheeled platform 1311 moves, the processing head 12 also moves. Namely, the self-propelled driving system 131 moves together with the processing head 12. Therefore, the self-propelled driving system 131 is configured to serve as a movement apparatus that moves the processing head 12 by moving by itself. The self-propelled driving system 131 is configured to serve as a movement apparatus that changes the position of the processing head 12.

### (1-2-2-2) Configuration of Arm Driving System 132

Next, with reference to FIG. 4, a configuration of the arm driving system 132 will be described. FIG. 4 is a cross-sectional view that illustrates the configuration of the arm driving system 132.

As illustrated in FIG. 4, the arm driving system 132 includes a base 1320. The base 1320 is connected to the self-propelled driving system 131 (specifically, the wheeled platform 1311). Namely, the base 1320 is attached (namely, fixed) to the wheeled platform 1311. One end part of a robot arm 1321 is attached to the base 1320. The base 1320 supports the robot arm 1321.

The robot arm 1321 includes a plurality of arm members 1322. The plurality of arm members 1322 are coupled to each other in a pivotable manner through at least one joint member 1323. The robot arm 1321 may be a manipulator having a three or more degree of freedom. Therefore, the arm driving system 132 may serve as a robot that has a vertically articulated structure. Note that the arm driving system 132 is not limited to the robot that has the vertically articulated structure. For example, the arm driving system 132 may serve as a polar robot that has a horizontally articulated structure, a cylindrical robot, a Cartesian robot, or a parallel link robot, for example.

The joint member 1323 may couple at least two arm members 1322 so that another arm member 1322 that is connected to the joint member 1323 is rotatable relative to one arm member 1322 that is connected to the joint member 1323 around one driving axis (for example, at least one of a rotational axis around the X-axis, a rotational axis around the Y-axis, and a rotational axis around the Z-axis). The joint member 1323 may couple at least two arm members 1322 so that another arm member 1322 that is connected to the joint member 1323 is movable relative to one arm member 1322 that is connected to the joint member 1323 along one driving axis (for example, at least one of a movement axis along the X-axis, a movement axis along the Y-axis, and a movement axis along the Z-axis).

Two arm member 1322 that are coupled through the joint member 1323 move by an actuator 1324 corresponding to each joint. FIG. 4 illustrates an example in which the arm driving system 132 includes four actuators 1324 corresponding to four joint members 1323. As a result, at least one arm member 1322 moves. Therefore, at least one arm member 1322 is movable relative to the workpiece W. Namely, at least one arm member 1322 is movable so that a relative positional relationship between at least one arm member 1322 and the workpiece W is changed.

The micromotion driving system 133 is connected to the arm driving system 132. Specifically, the micromotion driving system 133 is connected (namely, attached or fixed) to one arm member 1322, which is positioned at a position that is farthest from the base 1320, of the plurality of arm members 1322. In the below-described description, one arm member 1322 to which the micromotion driving system 133 is attached is referred to as a tip arm member 1325 for convenience of the description. The micromotion driving system 133 may be directly attached to the tip arm member 1325, or may be indirectly attached to the tip arm member 1325 through another member. The tip arm member 1325 may be referred to as a connection member to which the micromotion driving system 133 is connected.

When the tip arm member 1325 moves by the above-described actuator 1324, the tip arm member 1325 moves relative to the base 1320. Namely, when the tip arm member 1325 moves, a relative position of the tip arm member 1325 and the base 1320 changes. As a result, the micromotion driving system 133 that is attached to the tip arm member 1325 also moves. Therefore, the arm driving system 132 is configured to move the micromotion driving system 133. Specifically, the arm driving system 132 is configured to move the micromotion driving system 133 relative to the workpiece W. The arm driving system 132 is configured to move the micromotion driving system 133 so that a relative positional relationship between the micromotion driving system 133 and the workpiece W changes. Moreover, when the micromotion driving system 133 moves, the processing head 12 that is attached to the micromotion driving system 133 also moves. Therefore, the arm driving system 132 is configured to serve as a movement apparatus that moves the processing head 12. The arm driving system 132 is configured to serve as a movement apparatus that changes the position of the processing head 12. Here, the tip arm member 1325 of the robot arm 1321 may be referred to as a movable part.

### (1-2-2-3) Configuration of Micromotion Driving System 133

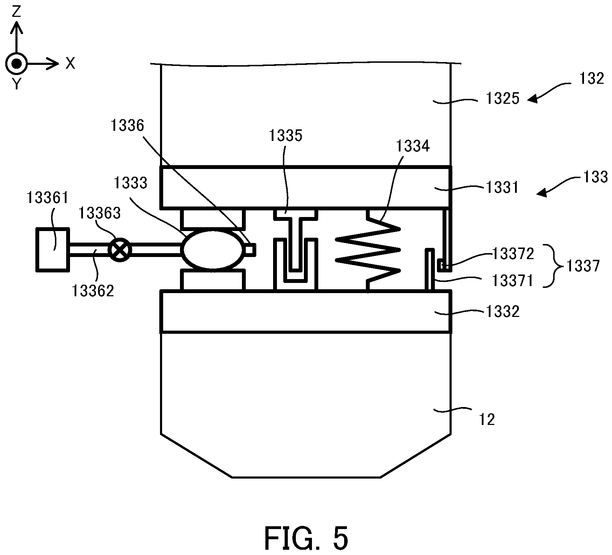

Next, with reference to FIG. 5, a configuration of the micromotion driving system 133 will be described. FIG. 5 is a cross-sectional view that illustrates the configuration of the micromotion driving system 133.

As illustrated in FIG. 5, the micromotion driving system 133 includes a support member 1331, a support member 1332, an air spring 1333, a damper member 1334, and a driving member 1335.

The support member 1331 is attached to the arm driving system 132. Specifically, the support member 1331 is attached (namely, fixed) to the tip arm member 1325 of the arm driving system 132. The support member 1332 is attached to the processing head 12.

The support member 1331 is coupled (in other words, interlocked or connected) to the support member 1332 through the air spring 1333, the damper member 1334, and the driving member 1335. Namely, each of the air spring 1333, the damper member 1334, and the driving member 1335 is attached to the support members 1331 and 1332 so as to couple the support member 1331 and the support member 1332. Since the arm driving system 132 is attached to the support member 1331 and the processing head 12 is attached to the support member 1332, each of the air spring 1333, the damper member 1334, and the driving member 1335 may be considered to be attached to the support members 1331 and 1332 so as to couple the arm driving system 132 and the processing head 12.

The air spring 1333 applies an elastic force caused by a pressure of gas (as one example, air) to at least one of the support members 1331 and 1332 under the control of the control apparatus 14. The air spring 1333 applies the elastic force caused by the pressure of the gas to at least one of the arm driving system 132 and the processing head 12 through at least one of the support members 1331 and 1332 under the control of the control apparatus 14. Especially, the air spring 1333 may apply the elastic force caused by the pressure of the gas to at least one of the arm driving system 132 and the processing head 12 along a direction (for example, the Z-axis direction) along which the support member 1331 and the support member 1332 are arranged.

In order to apply the elastic force caused by the pressure of the gas, the gas is supplied to the air spring 1333 from a gas supply apparatus 13361 through a pipe 13362 and a valve 13363. The control apparatus 14 controls at least one of the gas supply apparatus 13361 and the valve 13363 based on a measured result by a pressure sensor 1336 that measures a pressure of the gas in the air spring 1333.

The air spring 1333 may support a weight of the support member 1332 by using the elastic force under the control of the control apparatus 14. In this case, the air spring 1333 may serve as a weight canceller for cancel the weight of the processing head 12. The air spring 1333 may reduce (in other words, attenuate) a vibration, which is transmitted between the arm driving system 132 and the processing head 12 through the micromotion driving system 133, by using the elastic force under the control of the control apparatus 14.

The damper member 1334 applies an elastic force caused by a factor different from the pressure of the air to at least one of the support members 1331 and 1332. The damper member 1334 applies the elastic force caused by the factor different from the pressure of the air to at least one of the arm driving system 132 and the processing head 12 through at least one of the support members 1331 and 1332. Especially, the damper member 1334 may apply the elastic force to at least one of the arm driving system 132 and the processing head 12 along a direction (for example, the Z-axis direction) along which the support member 1331 and the support member 1332 are arranged.

The damper member 1334 may support the weight of the processing head 12 by using the elastic force, as with the air spring 1333. The damper member 1334 may reduce the vibration, which is transmitted between the arm driving system 132 and the processing head 12 through the micromotion driving system 133, by using the elastic force, as with the air spring 1333.

The damper member 1334 may be any member as long as it is configured to apply the elastic force. For example, the damper member 1334 may include a compressed spring coil. For example, the damper member 1334 may include a plate spring.

The driving member 1335 is configured to generate a driving force under the control of the control apparatus 14. The driving member 1335 is configured to apply the generated driving force to at least one of the support members 1331 and 1332. The driving member 1335 is configured to apply the generated driving force to at least one of the arm driving system 132 and the processing head 12 through at least one of the support members 1331 and 1332. The driving member 1335 may have any configuration as long as it is configured to generate the driving force. For example, the driving member 1335 may have a configuration that is configured to generate the driving force electrically. For example, the driving member 1335 may have a configuration that is configured to generate the driving force magnetically. As one example, FIG. 5 illustrates an example in which the driving member 1335 is a voice coil motor (VCM: Voice Coil Motor) that is configured to generate the driving force electrically.

The driving member 1335 may move at least one of the support members 1331 and 1332 by using the driving force under the control of the control apparatus 14. The driving member 1335 may move at least one of the arm driving system 132 and the processing head 12 by moving at least one of the support members 1331 and 1332 by using the driving force under the control of the control apparatus 14. In this case, the driving member 1335 may change a relative position between the arm driving system 132 and the processing head 12 by moving at least one of the arm driving system 132 and the processing head 12 by using the driving force.

The driving member 1335 may change the relative position between the arm driving system 132 and the processing head 12 based on a measured result by a position measurement apparatus 1337 of the micromotion driving system 133 under the control of the control apparatus 14. The position measurement apparatus 1337 measures the relative position between the arm driving system 132 and the processing head 12. For example, the position measurement apparatus 1337 may be an encoder that includes a detection part 13371 that is attached to the support member 1331 and a scale part 13372 that is attached to the support member 1332. The measured result by the position measurement apparatus 1337 includes an information related to the relative position between the support member 1331 and the support member 1332. Since the arm driving system 132 is attached to the support member 1331 and the processing head 12 is attached to the support member 1332, the information related to the relative position between the support member 1331 and the support member 1332 includes an information related to the relative position between the arm driving system 132 and the processing head 12. Therefore, the control apparatus 14 appropriately determines the relative position between the arm driving system 132 and the processing head 12. As a result, the control apparatus 14 appropriately changes the relative position between the arm driving system 132 and the processing head 12 based on the measured result by the position measurement apparatus 1337.

The driving member 1335 may move the processing head 12 relative to the workpiece W by changing the relative position between the arm driving system 132 and the processing head 12 (typically, moving the processing head 12 relative to the arm driving system 132) under the control of the control apparatus 14. The driving member 1335 may move (namely, may drive) the processing head 12 so that the relative positional relationship between the processing head 12 and the workpiece W is changed.

Here, since the driving member 1335 moves the support member 1332 to which the processing head 12 is attached, the support member 1332 may be referred to as a movable part. Since the arm driving system 132 moves the micromotion driving system 133, at least a part of components of the micromotion driving system 133 may also be referred to as a movable part.

The driving member 1335 may reduce the vibration, which is transmitted between the arm driving system 132 and the processing head 12 through the micromotion driving system 133, by changing the relative position between the arm driving system 132 and the processing head 12 by using the driving force under the control of the control apparatus 14. An apparatus that actively reduces the vibration by using the driving member 1335 and an elastic member such as the air spring 1333 may be referred to as an active vibration isolation apparatus. Therefore, the micromotion driving system 133 may be referred to as an active vibration isolation apparatus. The active vibration isolation apparatus may be referred to as an AVIS (Active Vibration Isolation System).

### (1-2-2-3-4) Relationship among Self-Propelled Driving System 131, Arm Driving System 132, and Micromotion Driving System 133

The arm driving system 132 moves the processing head 12 in a movement stroke that is shorter than the movement stroke by the self-propelled driving system 131. In other words, the self-propelled driving system 131 moves the processing head 12 in a movement stroke that is longer than the movement stroke by the arm driving system 132. Note that the movement stroke may mean a maximum moving distance along one direction. However, the arm driving system 132 may move the processing head 12 in the movement stroke that is equal to or longer than the movement stroke by the self-propelled driving system 131.

On the other hand, a moving accuracy (in other words, a moving resolution) of the processing head 12 by the arm driving system 132 is higher than the moving accuracy of the processing head 12 by the self-propelled driving system 131. In other words, the moving accuracy of the processing head 12 by the self-propelled driving system 131 is lower than the moving accuracy of the processing head 12 by the arm driving system 132. Note that the moving accuracy (the moving resolution) may mean a limit value of fineness of the movement (for example, a minimum moving distance). However, the moving accuracy of the processing head 12 by the arm driving system 132 may be equal to or may be lower than the moving accuracy of the processing head 12 by the self-propelled driving system 131.

The micromotion driving system 133 moves the processing head 12 in the movement stroke that is shorter than the movement stroke by the arm driving system 132. In other words, the arm driving system 132 moves the processing head 12 in the movement stroke that is longer than the movement stroke by the micromotion driving system 133. However, the micromotion driving system 133 may move the processing head 12 in the movement stroke that is equal to or longer than the movement stroke by the arm driving system 132.

On the other hand, the moving accuracy of the processing head 12 by the micromotion driving system 133 is higher than the moving accuracy of the processing head 12 by the arm driving system 132. In other words, the moving accuracy of the processing head 12 by the arm driving system 132 is higher than the moving accuracy of the processing head 12 by the micromotion driving system 133. However, the moving accuracy of the processing head 12 by the micromotion driving system 133 may be equal to or may be lower than the moving accuracy of the processing head 12 by the arm driving system 132.

In this case, the processing system SYS may adjust the position of the processing head 12 with respect to the workpiece W by using the self-propelled driving system 131. In parallel with or after the adjustment of the position of the processing head 12 by the self-propelled driving system 131, the processing system SYS may adjust the position of the processing head 12 with respect to the workpiece W by using the arm driving system 132 with a finer or higher accuracy than the self-propelled driving system 131. In parallel with or after the adjustment of the position of the processing head 12 by the arm driving system 132, the processing system SYS may adjust the position of the processing head 12 with respect to the workpiece W by using the micromotion driving system 133 with a finer or higher accuracy than the arm driving system 132. Alternatively, the processing system SYS may adjust the position of the processing head 12 with respect to the workpiece W by using the micromotion driving system 133 so that the positional relationship between the workpiece W and the processing head 12 is maintained in a desired positional relationship (for example, a distance between the workpiece W and the processing head 12 is maintained constant).

Incidentally, since the processing head 12 is moved by the self-propelled driving system 131, the arm driving system 132 and / or the micromotion driving system 133, the processing head 12 may be referred to as a movable part.

### (1-3) Configuration of Measurement Apparatus 2

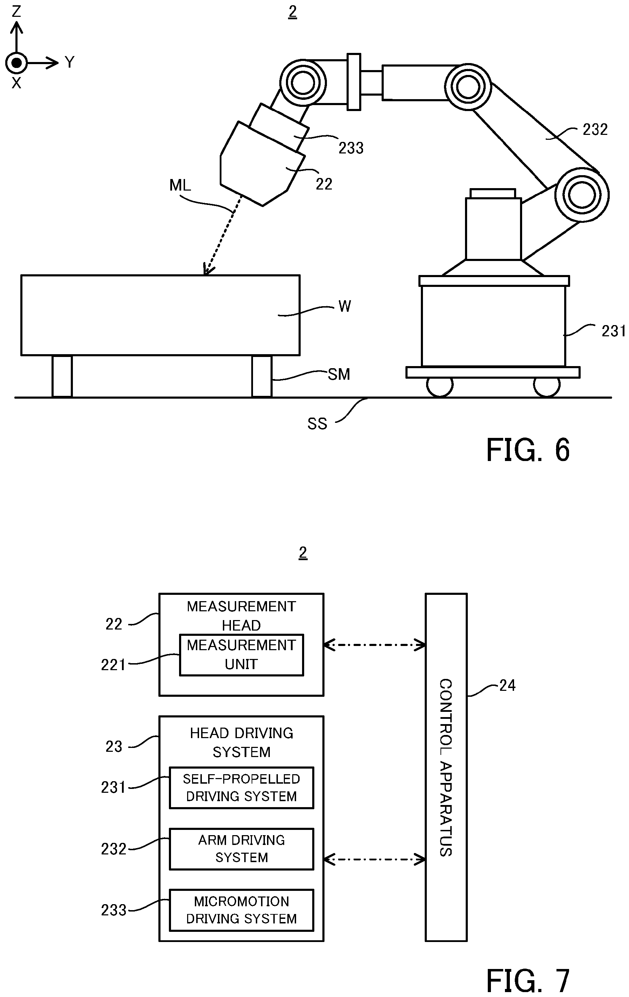

Next, with reference to FIG. 6, a configuration of the measurement apparatus 2 in the present example embodiment will be described. FIG. 6 is a side view that schematically illustrates an external appearance of the measurement apparatus 2 in the present example embodiment.

As illustrated in FIG. 6, the measurement apparatus 2 may measure the workpiece W that is positioned on the support surface SS. In order to measure the workpiece W, the measurement apparatus 2 includes a measurement head 22, a head driving system 23, and a control apparatus 24, as illustrated in FIG. 6 and FIG. 7 that is a block diagram illustrating an entire configuration of the measurement apparatus 2.

The measurement head 22 measures the workpiece W. For example, the measurement head 22 may measure a position of the workpiece W. For example, the measurement head 22 may measure a shape (for example, a three-dimensional shape) of the workpiece W.

The measurement head 22 may have any configuration as long as it is configured to measure the workpiece W. For example, the measurement head 22 may be a non-contact-type of measurement apparatus that is configured to measure the workpiece W without contacting the workpiece W. For example, the measurement head 22 may be a contact-type of measurement apparatus that is configured to measuring the workpiece W by contacting the workpiece W. An optical measurement apparatus that optically measures the workpiece W is one example of the non-contact-type of measurement apparatus. A probe-type of measurement apparatus that measures the workpiece W by contacting the workpiece W with a probe is one example of the contact-type of measurement apparatus.

A measurement apparatus (for example, an imaging apparatus such as a camera) that measures the workpiece W by imaging the workpiece W is one example of the optical measurement apparatus. A measurement apparatus that uses a pattern projection method is one example of the optical measurement apparatus. The measurement apparatus using the pattern projection method may measure the workpiece W by projecting slit light on the surface of the workpiece W and measuring a shape of the projected slit light. A measurement apparatus that uses the pattern projection method is one example of the optical measurement apparatus. The measurement apparatus using the pattern projection method may measure the workpiece W by projecting pattern light on the surface of the workpiece W and measuring a shape of the projected pattern light. A measurement apparatus that uses an interferometry is one example of the optical measurement apparatus. The measurement apparatus using the interferometry method may measure the workpiece W by measuring an interference pattern between object light that is through the workpiece W and reference light that is not through the workpiece W. A measurement apparatus that uses a time-of-flight method is one example of the optical measurement apparatus. The measurement apparatus using the time-of-flight method may measure the workpiece W by performing an operation, which projects measurement light on the surface of the workpiece W and measures a distance from the measurement apparatus to the workpiece W based on a time until the projected measurement light returns from the workpiece W to the measurement apparatus, at plurality of positions on the workpiece W. Moreover, a measurement apparatus that uses at least one of a moiré topography method (specifically, a grid irradiation method or a grid projection method), a holography interference method, an auto collimation method, a stereo method, an astigmatism method, a critical angle method, and a knife edge method is one example of the optical measurement apparatus.

The head driving system 23 moves the measurement head 22. Therefore, the head driving system 23 may be referred to as a movement apparatus. Specifically, the head driving system 23 moves the measurement head 22 relative to the workpiece W. In order to move the measurement head 22, the head driving system 23 includes a self-propelled driving system 231, an arm driving system 232, and a micromotion driving system 233. However, the head driving system 23 may not include at least one of the self-propelled driving system 231, the arm driving system 232, and the micromotion driving system 233.

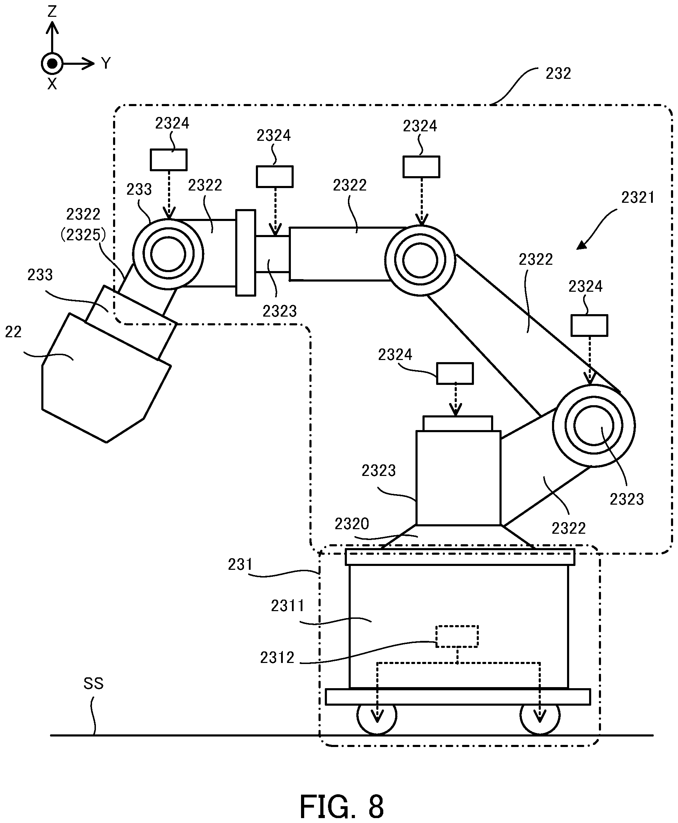

A configuration of the self-propelled driving system 231 of the measurement apparatus 2 may be the same as the configuration of the self-propelled driving system 131 of the processing apparatus 1. Specifically, as illustrated in FIG. 8 that is a cross-sectional view illustrating the configuration of the self-propelled driving system 231, the self-propelled driving system 231 includes a wheeled platform 2311 and a motor 2312. A feature of the wheeled platform 2311 may be the same as the feature of the wheeled platform 1311 illustrated in FIG. 4. A feature of the motor 2312 may be the same as the feature of the motor 1312 illustrated in FIG. 4. Therefore, the above-described description of the self-propelled driving system 131 may be used as a description of the self-propelled driving system 231 by replacing the terms of the wheeled platform 1311, the motor 2312, and the processing head 12 with the terms of the wheeled platform 2311, the motor 2312, and the measurement head 22, respectively. Therefore, a detailed description of the self-propelled driving system 231 is omitted.

A configuration of the arm driving system 232 of the measurement apparatus 2 may be the same as the configuration of the arm driving system 132 of the processing apparatus 1. Specifically, as illustrated in FIG. 8 that is a cross-sectional view illustrating the configuration of the arm driving system 232, the arm driving system 232 includes a base 2320, a robot arm 2321 (specifically, a plurality of arm members 2322 including a tip arm member 2325, a plurality of joint members 2323, and a plurality of actuators 2324). A feature of the base 2320 may be the same as the feature of the base 1320 illustrated in FIG. 4. A feature of the robot arm 2321 may be the same as the feature of the robot arm 1321 illustrated in FIG. 4. A feature of arm member 2322 may be the same as the feature of the arm member 1322 illustrated in FIG. 4. A feature of the joint member 2323 may be the same as the feature of the joint member 1323 illustrated in FIG. 4. A feature of the actuator 2324 may be the same as the feature of the actuator 1324 illustrated in FIG. 4. A feature of the tip arm member 2325 may be the same as the feature of the tip arm member 1325 illustrated in FIG. 4. Therefore, the above-described description of the arm driving system 132 may be used as a description of the arm driving system 232 by replacing the terms of the base 1320, the robot arm 1321, the arm member 1322, the joint member 1323, the actuator 1324, the tip arm member 1325, the self-propelled driving system 131, the micromotion driving system 133, and the processing head 12 with the terms of the base 2320, the robot arm 2321, the arm member 2322, the joint member 2323, the actuator 2324, the tip arm member 2325, the self-propelled driving system 231, the micromotion driving system 233, and the measurement head 22, respectively. Therefore, a detailed description of the arm driving system 232 is omitted.

A configuration of the micromotion driving system 233 of the measurement apparatus 2 may be the same as the configuration of the micromotion driving system 133 of the processing apparatus 1. Namely, the micromotion driving system 233 may have a configuration illustrated in FIG. 5 that illustrates the configuration of the micromotion driving system 133. Therefore, a detailed description of the micromotion driving system 233 is omitted.

Each of the self-propelled driving system 231, the arm driving system 232, and the micromotion driving system 233 moves the measurement head 22 along at least one of the X-axis direction, the Y-axis direction, the Z-axis direction, the θX direction, the θY direction, and the θZ direction. However, in the present example embodiment, the self-propelled driving system 231 moves by itself on the support surface SS. The support surface SS is typically a surface along the XY plane. Therefore, in the below-described description, an example in which the self-propelled driving system 231 is configured to move the measurement head 22 along each of the X-axis direction and the Y-axis direction will be described. Furthermore, in the below-described description, an example in which the arm driving system 232 is configured to move the measurement head 22 along each of the X-axis direction, the Y-axis direction, the Z-axis direction, the θX direction, the θY direction, and the θZ direction will be described. Note that moving the measurement head 22 along at least one of the θX direction, the θY direction, and the θZ direction may be considered to be equivalent to changing a pose of the measurement head 22 around at least one of the X-axis, the Y-axis, the Z-axis. Alternatively, moving the measurement head 22 along at least one of the θX direction, the θY direction, and the θZ direction may be considered to be equivalent to rotationally moving the measurement head 22 around at least one of the X-axis, the Y-axis, the Z-axis.

When the measurement head 22 moves, the positional relationship between the measurement head 22 and the workpiece W changes. When the positional relationship between the workpiece W and the measurement head 22 changes, the measuring area of the measurement head 22 moves on the workpiece W. Therefore, moving the measurement head 22 is equivalent to moving the measurement area on the workpiece W. Incidentally, since the self-propelled driving system 231, the arm driving system 232 and / or the micromotion driving system 233 moves the measurement head 22, the measurement head 22 may be referred to as a movable part.

The control apparatus 24 controls an operation of the measurement apparatus 2. For example, the control apparatus 24 may control at least one of the measurement head 22 and the head driving system 23 of the measurement apparatus 2 so as to measure the workpiece W in a desired measurement manner based on the measurement control information transmitted from the control server 4. Furthermore, the control apparatus 24 may transmit the measurement result information related to the measured result of the workpiece W by the measurement apparatus 2 to the control server 4.

The control apparatus 24 may include an calculation apparatus and a storage apparatus, for example. The calculation apparatus may include at least one of a CPU (Central Processing Unit) and a GPU (Graphical Processing Unit), for example. The storage apparatus may include a memory, for example. The control apparatus 24 serves as an apparatus for controlling the operation of the measurement apparatus 2 by means of the calculation apparatus executing a computer program. The computer program is a computer program that allows the calculation apparatus to execute (namely, to perform) a below-described operation that should be executed by the control apparatus 24. Namely, the computer program is a computer program that allows the control apparatus 24 to function so as to make the measurement apparatus 2 execute the below-described operation. The computer program executed by the calculation apparatus may be recorded in the storage apparatus (namely, a recording medium) of the control apparatus 24, or may be recorded in any recording medium (for example, a hard disk or a semiconductor memory) that is built in the control apparatus 24 or that is attachable to the control apparatus 24. Alternatively, the calculation apparatus may download the computer program that should be executed from an apparatus positioned at the outside of the control apparatus 24 through a network interface.

The control apparatus 24 may control a measurement aspect of the workpiece W by the measurement head 22. The measurement aspect may include at least one of a measurement position and a measurement time, for example. The control apparatus 24 may control a movement aspect of the measurement head 22 by the head driving system 23. The movement aspect may include at least one of a movement distance, a movement speed, a movement direction, and a movement timing (a movement period), for example.

The control apparatus 24 may not be positioned in the measurement apparatus 2. For example, the control apparatus 24 may be positioned at an outside of the measurement apparatus 2 as a server or the like. In this case, the control apparatus 24 may be connected to the measurement apparatus 2 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 24 and the measurement apparatus 2 may be configured to transmit and receive various information through the network. Moreover, the control apparatus 24 may be configured to transmit information such as a command and a control parameter to the measurement apparatus 2 through the network. The measurement apparatus 2 may include a reception apparatus that is configured to receive the information such as the command and the control parameter from the control apparatus 24 through the network. The measurement apparatus 2 may include a transmission apparatus that is configured to transmit the information such as the command and the control parameter to the control apparatus 24 through the network (namely, an output apparatus that is configured to output information to the control apparatus 24). Alternatively, a first control apparatus that is configured to perform a part of the arithmetic processing performed by the control apparatus 24 may be positioned in the measurement apparatus 2 and a second control apparatus that is configured to perform another part of the arithmetic processing performed by the control apparatus 24 may be positioned at the outside of the measurement apparatus 2.

An arithmetic model that is buildable by machine learning may be implemented in the control apparatus 24 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 24 may control the operation of the measurement apparatus 2 by using the arithmetic model. Namely, the operation for controlling the operation of the measurement apparatus 2 may include an operation for controlling the operation of the measurement apparatus 2 by using the arithmetic model. Note that the arithmetic model that has been built by off-line machine learning using training data may be implemented in the control apparatus 24. Moreover, the arithmetic model implemented in the control apparatus 24 may be updated by online machine learning on the control apparatus 24. Alternatively, the control apparatus 24 may control the operation of the measurement apparatus 2 by using the arithmetic model implemented in an apparatus positioned at the outside of the control apparatus 24 (namely, an apparatus positioned at the outside of the measurement apparatus 2), in addition to or instead of the arithmetic model implemented on the control apparatus 24.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 24. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control apparatus 24 by means of the control apparatus 24 (namely, a computer) executing the computer program, may be realized by a hardware such as a predetermined gate array (a FPGA, an ASIC) of the control apparatus 24, or may be realized in a form in which the logical process block and a partial hardware module that realizes a partial element of the hardware are combined.

Incidentally, the measurement apparatus 2 may include an electric power source. For example, the measurement apparatus 2 may include the electric power source positioned on the wheeled platform 2311 of the self-propelled driving system 231. The measurement apparatus 2 may operate by using electric power supplied by the electric power source. For example, a measurement unit 221 may measure the workpiece W by using electric power supplied by the electric power source. For example, the head driving system 23 may move the measurement head 22 by using electric power supplied by the electric power source. The electric power source may be rechargeable. For example, the electric power source may be rechargeable by a non-contact charger (wireless charger).

### (1-4) Configuration of Position Measuring Apparatus 3

Next, a configuration of the position measuring apparatus 3 will be described. As described above, the position measuring apparatus 3 may be configured to measure the position of at least one of the workpiece W, the processing apparatus 1, and the measurement apparatus 2. The position measuring apparatus 3 may have any configuration as long as it is configured to measure the position of at least one of the workpiece W, the processing apparatus 1, and the measurement apparatus 2.

In the present example embodiment, an example in which the position measuring apparatus 3 measures the position of a measuring target object, which includes at least one of the workpiece W, the processing apparatus 1, and the measurement apparatus 2, by using measuring light ML. In this case, the position measuring apparatus 3 may measure the position of the measuring target object by irradiating the measuring target object with the measuring light ML and detecting returned light of the measuring light ML from the measuring target object. The returned light of the measuring light ML from the measuring target object may include at least one of reflected light of the measuring light ML by the measuring target object and scattered light of the measuring light ML by the measuring target object.

In order to irradiate the measuring target object with the measuring light ML, the position measuring apparatus 3 may be positioned at a position that is away from the measuring target object. Namely, the position measuring apparatus 3 may be positioned at a position that is away from at least one of the workpiece W, the processing apparatus 1, and at least one of the measurement apparatuses 2. In this case, the position measuring apparatus 3 may irradiate the measuring target object with the measuring light ML from the position that is away from the measuring target object. The position measuring apparatus 3 may detect the returned light of the measuring light ML from the measuring target object at the position that is away from the measuring target object.

The position measuring apparatus 3 may irradiate a desired measuring target part of the measuring target object with the measuring light ML and detect the measuring light ML from the desired measuring target part of the measuring target object. In a case where a reflector that is configured to reflect (typically, retro-reflect) the measuring light ML is attached to the measuring target part, the position measuring apparatus 3 may irradiate the reflector with the measuring light ML and detect the measuring light ML from the reflector. In any case, the position measuring apparatus 3 can measure the position of the desired measuring target part of the measuring target object.

The position measuring apparatus 3 may irradiate each of a plurality of measuring target parts of the measuring target object with the measuring light ML and detect the measuring light ML from the plurality of measuring target parts of the measuring target object. In this case, the position measuring apparatus 3 can measure the positions of the plurality of measuring target parts of the measuring target object.

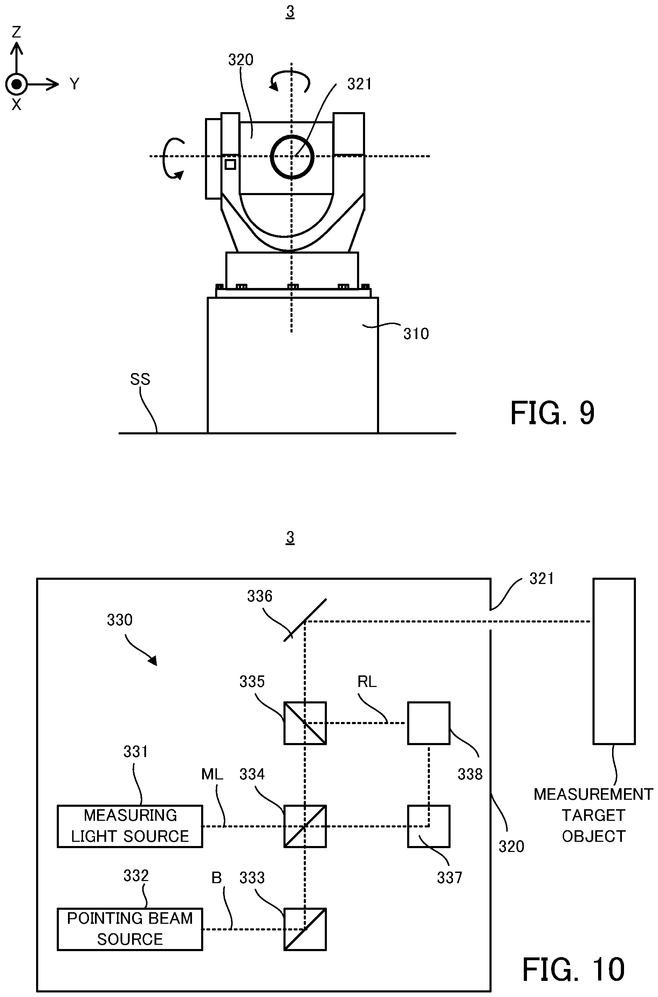

A measuring apparatus including a laser radar system (for example, a measuring apparatus that uses a frequency-modulated measuring light) disclosed in US2012/188557A1 is one example of the position measuring apparatus 3 that measures the position of the measuring target object by using the measuring light ML. Next, with reference to FIG. 9 and FIG. 10, one example of the position measuring apparatus 3 including the laser radar system disclosed in US2012/188557A1 will be described. FIG. 9 is a front elevation view that illustrates an exterior appearance of the position measuring apparatus 3. FIG. 10 is a block diagram that illustrates a configuration of the position measuring apparatus 3.

As illustrated in FIG. 9, the position measuring apparatus 3 includes a base 310 and a housing 320. The base 310 is a platform that supports the housing 320. The base 310 may be positioned on the support surface SS on which the workpiece W, the processing apparatus 1, and the measurement apparatus 2 are positioned, for example. The base 310 may be positioned on the support surface SS through a non-illustrated support member or may be directly positioned on the support surface SS. The housing 320 is a member in which an optical assembly 330 illustrated in FIG. 10 are contained. The housing 320 may be rotatable around a desired rotational axis. In an example illustrated in FIG. 9, the housing 320 is rotatable around a rotational axis along the Y-axis and a rotational axis along the Z-axis.

As illustrated in FIG. 10, the optical assembly 330 includes a measuring light source 331, a pointing beam source 332, a beam splitter 333, a beam splitter 334, a beam splitter 335, a mirror 336, an optical circuit 337, and a detector 338.

The measuring light source 331 generate the measuring light ML. A part of the measuring light ML generated by the measuring light source 331 is emitted from an emitting port 321 formed at the housing 320 through the beam splitters 334 and 335 and the mirror 336. The measuring light ML emitted from the emitting port 321 enters the measuring target object. When the housing 320 rotates around the rotational axis as described above, an emitting direction of the measuring light ML from the position measuring apparatus 3 changes. Therefore, the position measuring apparatus 3 may rotate the housing 320 so that the measuring light ML enters the desired measuring target part of the measuring target object. At least a part of the measuring light ML entering the reflected by the measuring target object (in the below-described description, it is referred to as a "returned light RL") enters the optical assembly 330 through the emitting port 321. The returned light RL entering the optical assembly 330 enters the detector 338 through the mirror 336 and the beam splitter 335. On the other hand, another part of the measuring light ML generated by the measuring light source 331 enters the detector 338 through the beam splitter 334 and the optical circuit 337 that is disclosed in US2012/188557A1 (alternatively, US4,733,606B). The position measuring apparatus 3 transmits a detected result by the detector 338 to the control server 4 as the position information indicating the measured result of the position of at least one of the workpiece W, the processing apparatus 1, and the measurement apparatus 2.

The control server 4 calculates the position of the measuring target object based on a detected result of the measuring light ML and the returned light RL by the detector 338. For example, the control server 4 calculates the position of the measuring target object based on the detected result of the measuring light ML and the returned light RL by the detector 338 by using an optical heterodyne type detection disclosed in US2012/188557A1 (alternatively, US4,733,606B).

The pointing beam source 332 generates a pointing beam B. The pointing beam B is used to detect a position on the measuring target object toward which the measuring light ML is directed. The pointing beam B may include visible light. The pointing beam B generated by the pointing beam source 332 is emitted from the emitting port 321 formed at the housing 320 through the beam splitters 333, 334 and 335 and the mirror 336. The pointing beam B emitted from the emitting port 321 enters the measuring target object. However, the optical assembly 330 may not emit the pointing beam B toward the measuring target object.

Note that the position measuring apparatus 3 is not limited to the measuring apparatus including the laser radar system disclosed in US2012/188557A1. For example, the position measuring apparatus 3 may be a measuring apparatus including a measuring apparatus disclosed in US7,800,758B (for example, a measuring apparatus that uses an intensity-modulated measuring light). For example, the position measuring apparatus 3 may be a measuring apparatus including an absolute distance meter disclosed in US6,847,436B (for example, a measuring apparatus that uses an intensity-modulated measuring light).

### (1-5) Configuration of Control Server 4

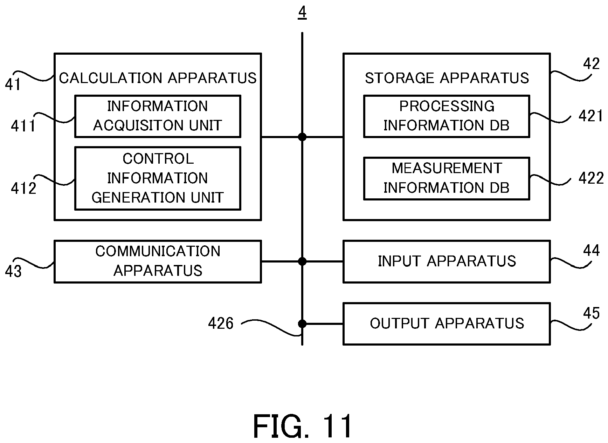

Next, with reference to FIG. 11, the control server 4 in the present example embodiment will be described. FIG. 11 is a block diagram that illustrates a configuration of the control server 4 in the present example embodiment.

As illustrated in FIG. 11, the control server 4 may include a calculation apparatus 41, a storage apparatus 42, a communication apparatus 43, an input apparatus 44, and an output apparatus 45. The calculation apparatus 41, the storage apparatus 42, the communication apparatus 43, the input apparatus 44, and the output apparatus 45 may be connected through a data bus 46.

The calculation apparatus 41 includes, for example, at least one of a CPU and a GPU. The calculation apparatus 41 reads a computer program. For example, the calculation apparatus 41 may read a computer program stored in the storage apparatus 42. For example, the calculation apparatus 41 may read a computer program stored in a computer-readable non-temporary recording medium by using a non-illustrated recording medium reading apparatus. The calculation apparatus 41 may acquire (namely, may download or read) the computer program from an non-illustrated apparatus positioned at an outside of the control server 4 through the communication apparatus 43. The calculation apparatus 41 executes the read computer program. As a result, a logical functional block for performing an operation that should be performed by the control server 4 is implemented in the calculation apparatus 41. Namely, the calculation apparatus 41 is configured to serve as a controller for implementing the logical functional block for performing the operation that should be performed by the control server 4.

An arithmetic model that is buildable by machine learning may be implemented in the calculation apparatus 41 by the calculation apparatus 41 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 41 may perform the operation, which should be performed by the control server 4, by using the arithmetic model. Note that the arithmetic model that has been built by off-line machine learning using training data may be implemented in the calculation apparatus 41. Moreover, the arithmetic model implemented in the calculation apparatus 41 may be updated by online machine learning on the calculation apparatus 41. Alternatively, the calculation apparatus 41 may perform the operation, which should be performed by the control server 4, by using the arithmetic model implemented in an apparatus positioned at the outside of the calculation apparatus 41 (namely, an apparatus positioned at the outside of the control server 4), in addition to or instead of the arithmetic model implemented on the calculation apparatus 41.

FIG. 11 illustrates an example of the logical functional block implemented in the calculation apparatus 41. As illustrated in FIG. 11, an information acquisition unit 411 and a control information generation unit 412 are implemented in the calculation apparatus 41. The information acquisition unit 411 may receive (namely, acquire) the processing progress information from the processing apparatus 1 by using the communication apparatus 43. The information acquisition unit 411 may receive (namely, acquire) the measurement result information from the measurement apparatus 2 by using the communication apparatus 43. The information acquisition unit 411 may receive (namely, acquire) the position information from the position measuring apparatus 3 by using the communication apparatus 43. The control information generation unit 412 may generate the processing control information and the measurement control information based on the position information.

The storage apparatus 42 is configured to store desired data. For example, the storage apparatus 42 may temporarily store the computer program that is executed by the calculation apparatus 41. The storage apparatus 42 may temporarily store data temporarily used by the calculation apparatus 41 when the calculation apparatus 41 executes the computer program. The storage apparatus 42 may store data stored for a long term by the control server 4. The storage apparatus 42 may include at least one of a RAM (Random Access Memory), a ROM (Read Only Memory), a hard disk apparatus, a magneto-optical disc, a SSD (Solid State Drive) and a disk array apparatus. Namely, the storage apparatus 42 may include a non-transitory recording medium.

In the present example embodiment, the storage apparatus 42 may store a processing information DB 421 and a measurement information DB 422. The processing information DB 421 is a database for storing information related to the processing apparatus 1. The measurement information DB 422 is a database for storing information related to measurement apparatus 2.

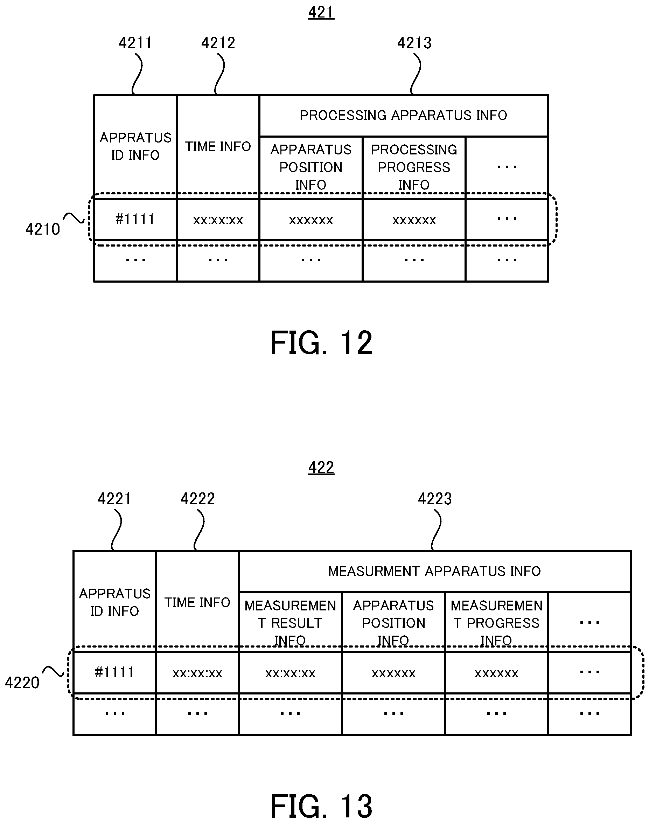

FIG. 12 illustrates one example of a data structure of the processing information DB 421. As illustrated in FIG. 12, the processing information DB 421 includes a plurality of processing information records 4210. Each processing information record 4210 may include apparatus identification information 4211, time information 4212, and processing apparatus information 4213. The apparatus identification information 4211 is information for uniquely identifying the processing apparatus 1. The time information 4212 is information indicating a time corresponding to the processing apparatus information 4213. The processing apparatus information 4213 is information related to the processing apparatus 1. For example, the processing apparatus information 4213 may include apparatus position information indicating a position of the processing apparatus 1 at the time indicated by the time information 4212. The processing apparatus information 4213 may include the processing progress information acquired by the information acquisition unit 411. The processing progress information may include information related to a progress of a processing operation at the time indicated by the time information 4212. Namely, the processing progress information may include information related to a percentage (namely, a progress rate) of a process completed by the processing apparatus 1 relative to whole process of the processing operation that should be performed by the processing apparatus 1. The processing progress information may include information related to a processing completion area of the workpiece W in which the processing apparatus 1 has completed the processing. The processing progress information may include information related to a processing uncompleted area of the workpiece W in which the processing apparatus 1 has not yet completed the processing. In a case where the processing apparatus 1 includes the electric power source, the processing apparatus information 4213 may include information related to a period during which the processing apparatus 1 can operate by using the electric power stored in the electric power source (namely, a remaining amount of the electric power source).

The information acquisition unit 411 may receive (namely, acquire) information necessary for generating the processing information DB 421 (for example, at least one of the apparatus identification information 4211, the time information 4212, and the processing apparatus information 4213) from the processing apparatus 1.

FIG. 13 illustrates one example of a data structure of the measurement information DB 422. As illustrated in FIG. 13, the measurement information DB 422 includes a plurality of measurement information records 4220. Each measurement information record 4220 may include apparatus identification information 4221, time information 4222, and measurement apparatus information 4223. The apparatus identification information 4221 is information for uniquely identifying the measurement apparatus 2. The time information 4222 is information indicating a time corresponding to the measurement apparatus information 4223. The measurement apparatus information 4223 is information related to the measurement apparatus 2. For example, the measurement apparatus information 4223 may include the measurement result information (namely, the measurement result information acquired by the information acquisition unit 411) indicating the measured result by the measurement apparatus 2 at the time indicated by the time information 4222. The measurement apparatus information 4223 may include the measurement progress information. The measurement progress information may include information related to a progress of a measurement operation at the time indicated by the time information 4222. Namely, the measurement progress information may include information related to a percentage (namely, a progress rate) of a process completed by the measurement apparatus 2 relative to whole process of the measurement operation that should be performed by the measurement apparatus 2. The measurement progress information may include information related to a measurement completion area of the workpiece W in which the measurement apparatus 2 has completed the measurement. The measurement progress information may include information related to a measurement uncompleted area of the workpiece W in which the measurement apparatus 2 has not yet completed the measurement. In a case where the measurement apparatus 2 includes the electric power source, the measurement apparatus information 4223 may include information related to a period during which the measurement apparatus 2 can operate by using the electric power stored in the electric power source (namely, a remaining amount of the electric power source).

The information acquisition unit 411 may receive (namely, acquire) information necessary for generating the measurement information DB 422 (for example, at least one of the apparatus identification information 4221, the time information 4222, and the measurement apparatus information 4223) from the measurement apparatus 2.

The storage apparatus 42 may store the processing information DB 421 having any data format (in other words, any file format). For example, the storage apparatus 42 may store the processing information DB 421 as data (file) in a table format illustrated in FIG. 12. Similarly, the storage apparatus 42 may store the measurement information DB 422 in any data format (in other words, any file format). For example, the storage apparatus 42 may store the measurement information DB 422 as data (file) in a table format illustrated in FIG. 13.

Again in FIG. 11, the communication apparatus 43 is configured to communicate with each of the processing apparatus 1, the measurement apparatus 2, and the position measuring apparatus 3 through a communication network.

The input apparatus 44 is an apparatus that receives an input of information from an outside of the control server 4 to the control server 4. For example, the input apparatus 44 may include an operating apparatus (for example, at least one of a keyboard, a mouse, and a touch panel) that is operable by an operator (for example, a user of the processing system SYS). For example, the input apparatus 44 may include a reading apparatus that is configured to read information recorded as data on a recording medium that is attachable to the control server 4. For example, the input apparatus 44 may include a reception apparatus that is configured to receive information transmitted by an apparatus outside the control server 4 to the control server 4 as data through the communication network.

The output apparatus 45 is an apparatus that outputs information to the outside of the control server 4. For example, the output apparatus 45 may output the information as an image. Namely, the output apparatus 45 may include a display apparatus (a so-called display) that is configured to display an image indicating the information that should be output. For example, the output apparatus 45 may output the information as audio. Namely, the output apparatus 45 may include an audio apparatus (so-called a speaker) that is configured output the audio. For example, the output apparatus 45 may output the information on a paper. Namely, the output apparatus 45 may include a printing apparatus (so-called a printer) that is configured to print desired information on the paper.

The output apparatus 45 may output (for example, display) information stored in at least one of the processing information DB 421 and the measurement information DB 422. For example, the output apparatus 45 may display a table (for example, the table illustrated in FIG. 12) indicating the information stored in the processing information DB 421. For example, the output apparatus 45 may display a table (for example, the table illustrated in FIG. 13) indicating the information stored in the measurement information DB 422.

Alternatively, the control server 4 may analyze the information stored in at least one of the processing information DB 421 and the measurement information DB 422, and the output apparatus 45 may output (for example, display) an analyzed result. For example, the output apparatus 45 may display the analyzed result in association with the workpiece W. For example, the output apparatus 45 may display the analyzed result in a display format in which the analyzed result is associated with the workpiece W (for example, a display format that is different from the above-described display using the table). As one example, the control server 4 may analyze a processing progress status included in the processing information DB 421, and the output apparatus 45 may display the workpiece W and the analyzed result in a display format in which each part of a display object imitating the workpiece W (for example, an airplane) is associated with the progress rate of the processing of each part. Namely, the output apparatus 45 may display a heat map indicating the progress rate of the processing in association with the workpiece W. As a result, the user of the processing system SYS can intuitively recognize the progress rate of the processing of each part of the workpiece W.

### (2) Operation of Processing System SYS

Next, the processing operation that is performed by the processing system SYS in order to process the workpiece W and the measurement operation that is performed by the processing system SYS in order to measure the workpiece W will be described.

### (2-1) Specific Example of Workpiece W that is target for Processing Operation and Measurement Operation

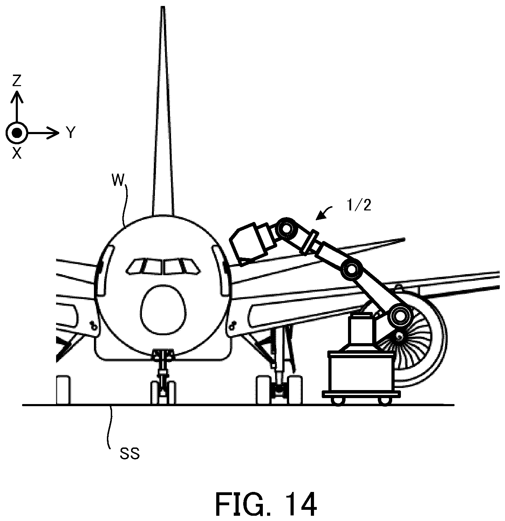

Firstly, with reference to FIG. 14, one specific example of the workpiece W that is a target for the processing operation and the measurement operation will be described.

As illustrated in FIG. 14, the processing apparatus 1 may process the workpiece W that is larger than the processing apparatus 1. In an example illustrated in FIG. 14, the processing apparatus 1 processes the workpiece W that corresponds to at least a part of an airplane. For example, the processing apparatus 1 may process at least a part of the airplane to form the above-described riblet structure on at least a part of a body, a main wing, a vertical tail and / or a horizontal tail of the airplane. However, the processing apparatus 1 may process the workpiece W that is smaller than the processing apparatus 1. The processing apparatus 1 may process the workpiece W a size of which is same as that of the processing apparatus 1.

As illustrated in FIG. 14, the measurement apparatus 2 may measure the workpiece W that is larger than the measurement apparatus 2. In an example illustrated in FIG. 14, the measurement apparatus 2 measures the workpiece W that corresponds to at least a part of an airplane. For example, the measurement apparatus 2 may measure at least a part of a body, a main wing, a vertical tail and / or a horizontal tail of the airplane. However, the measurement apparatus 2 may measure the workpiece W that is smaller than the measurement apparatus 2. The measurement apparatus 2 may measure the workpiece W a size of which is same as that of the measurement apparatus 2.

In the below-described description, the processing operation and the measurement operation performed in a case where the workpiece W is at least a part of the airplane will be described. However, in a case where the workpiece W is not at least a part of the airplane, the processing system SYS may perform the processing operation and the measurement operation described below.

### (2-2) Processing Operation

Next, the processing operation performed by the processing system SYS will be described.

### (2-2-1) Entire Flow of Processing Operation

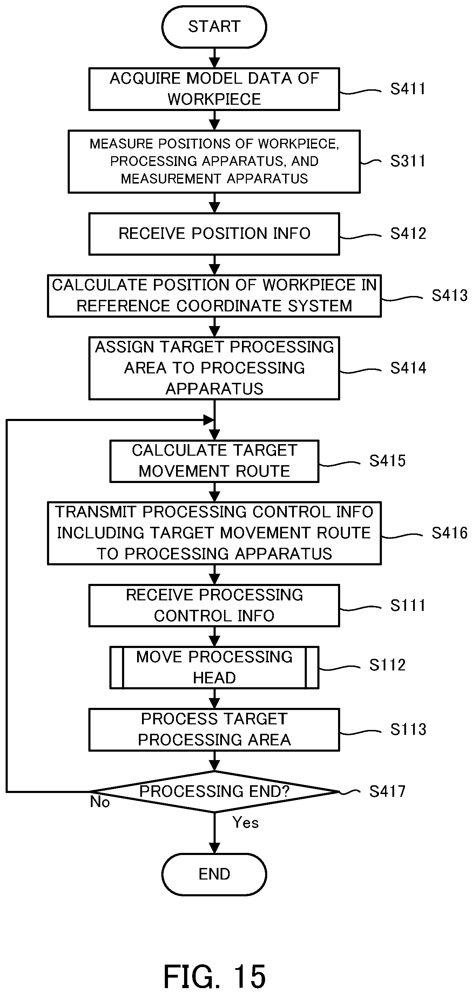

First, with reference to FIG. 15, an entire flow of processing operation will be described. FIG. 15 is a flowchart that illustrates the entire flow of the processing operation.

As illustrated in FIG. 15, first, the control information generation unit 412 of the control server 4 acquires model data indicating a three-dimensional model of the workpiece W that should be processed by the processing apparatus 1 (a step S411). Namely, the control information generation unit 412 acquires the model data indicating the three-dimensional model having a designed three-dimensional shape of the workpiece W that should be processed by the processing apparatus 1 (the step S411). CAD (Computer Aided Design) data is one example of model data. At least one of a DWF (Design Web Format), a DXF (Drawing Exchange Format), a DWG, a STEP (Standard for the Exchange of Product Data), and a STL (Stereolithography) is one example of a file format of the CAD data.

The model data may be stored in the storage apparatus 42 of the control server 4. In this case, the control information generation unit 412 may acquire the model data from the storage apparatus 42. The model data may be stored in the storage apparatus of the control apparatus 14 of the processing apparatus 1. In this case, the control information generation unit 412 may acquire the model data from the processing apparatus 1. The model data may be stored in an external apparatus that is different from the control server 4 and the processing apparatus 1. In this case, the control information generation unit 412 may acquire the model data from the external apparatus.

In parallel with, before or after the operation at the step S411, the position measuring apparatus 3 measures the position of each of the workpiece W, the processing apparatus 1, and the measurement apparatus 2 (a step S311). However, in the processing operation, the position measuring apparatus 3 may not necessarily measure the position of the measurement apparatus 2.

The position measuring apparatus 3 may measure the positions of the plurality of measuring target parts of the workpiece W. The measuring target part may include a feature part of the workpiece W. For example, in a case where the workpiece W is the airplane, the measuring target part may include at least one of a feature part (for example, a tip) of the main wing, a feature part (for example, a tip) of the horizontal tail, a feature part (for example, a tip) of the vertical tail, and a feature part (for example, a tip) of the body. However, the position measuring apparatus 3 may measure the position of a single measuring target part of the workpiece W. Incidentally, in a case where the position of the workpiece W is changeable, the position measuring apparatus 3 may set at least a part of a mechanism that changes the position of the workpiece W to the measuring target part, and measure the position of this mechanism.

The position measuring apparatus 3 may measure the positions of the plurality of measuring target parts of the processing apparatus 1. The measuring target part may include a feature part of the processing apparatus 1. For example, the measuring target part may include at least one of a feature part of the processing head 12, a feature part of the arm driving system 132, and a feature part of the self-propelled driving system 131. However, the position measuring apparatus 3 may measure the position of a single measuring target part of the processing apparatus 1.

The position measuring apparatus 3 may measure the positions of the plurality of measuring target parts of the measurement apparatus 2. The measuring target part may include a feature part of the measurement apparatus 2. For example, the measuring target part may include at least one of a feature part of the measurement head 22, a feature part of the arm driving system 232, and a feature part of the self-propelled driving system 231. However, the position measuring apparatus 3 may measure the position of a single measuring target part of the measurement apparatus 2.

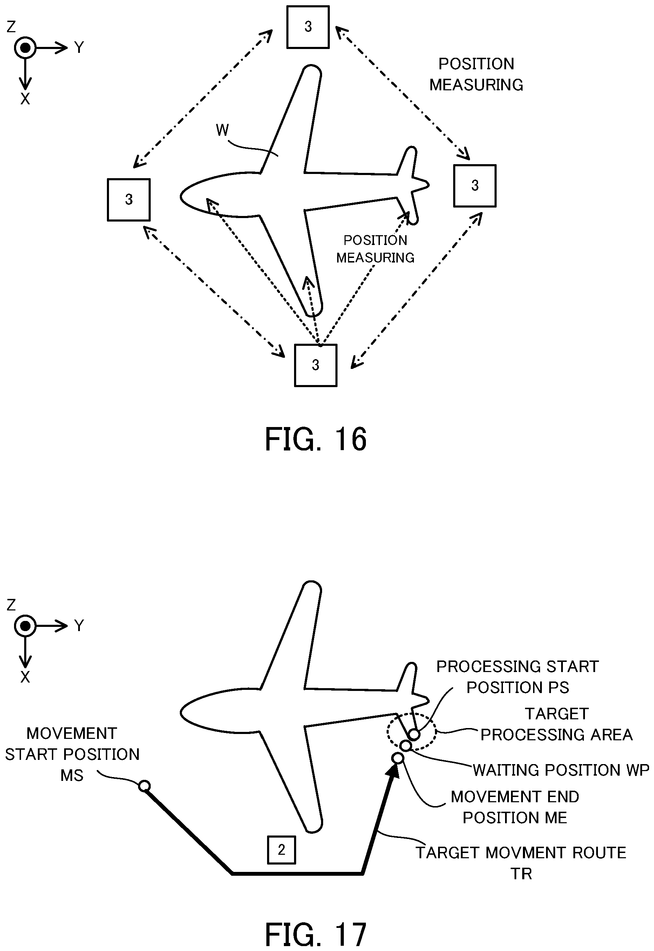

In a case where the workpiece W is a large object such as the airplane, there is a possibility that a part of the workpiece W is at an outside of a range that can be measured by the position measuring apparatus 3 (for example, a measurement field of view of the position measuring apparatus 3). As a result, there is a possibility that the position measuring apparatus 3 cannot appropriately measure the positions of the plurality of measuring target parts of the workpiece W. Therefore, as illustrated in FIG. 16 that illustrates a positional relationship between the workpiece W and the position measuring apparatus 3, the processing system SYS may include a plurality of position measuring apparatuses 3. In this case, a first position measuring apparatus 3 of the plurality of position measuring apparatuses 3 may be aligned with respect to the workpiece W so as to be capable of measuring the position of a first measuring target part of the workpiece W. On the other hand, a second position measuring apparatus 3 different from the first position measuring apparatus 3 of the plurality of position measuring apparatuses 3 may be aligned with respect to the workpiece W so as to be capable of measuring the position of a second measuring target part of the workpiece W different from the first measuring target part. As a result, the processing system SYS can appropriately measure the positions of the plurality of measuring target parts of the workpiece W by using the plurality of position measuring apparatuses 3.

As described above, the position measuring apparatus 3 may measure the position of the workpiece W by irradiating the reflector, which is attached to the workpiece W as the measuring target object, with the measurement light ML. In this case, the reflector may be attached to a position of the workpiece W that is determined in advance. Especially in a case where the workpiece W is the large object such as the airplane, a plurality of reflectors may be attached to at least three positions of the workpiece W, which are determined in advance, respectively. As one example, a first reflector may be attached to a vicinity of a cockpit of the airplane (for example, a vicinity of a tip of the airplane), a second reflector may be attached to a vicinity of a tip of the left wing of the airplane, and a third reflector may be attached to a vicinity of a tip of the right wing of the airplane. Other reflector may be attached to other position of the airplane. Incidentally, the number of the reflectors attached to the workpiece W may be larger than three or may be smaller than three.

As described above, the position measuring apparatus 3 may measure the position of the processing apparatus 1 by irradiating the reflector, which is attached to the processing apparatus 1 as the measuring target object, with the measurement light ML. In this case, the reflector may be attached to a position of the processing apparatus 1 that is determined in advance. For example, the reflector may be attached to a vicinity of a tip of the head driving system 13 of the processing apparatus 1 (for example, a position to which the processing head 12 is attached). For example, the reflector may be attached to the processing head 12. In this case, the position measuring apparatus 3 can appropriately measure the position of the processing head 12. For example, the reflector may be attached to the self-propelled driving system 131. In this case, the position measuring apparatus 3 can measure the rough position of the processing head 12.

As described above, the position measuring apparatus 3 may measure the position of the measurement apparatus 2 by irradiating the reflector, which is attached to the measurement apparatus 2 as the measuring target object, with the measurement light ML. In this case, the reflector may be attached to a position of the measurement apparatus 2 that is determined in advance. For example, the reflector may be attached to a vicinity of a tip of the head driving system 23 of the measurement apparatus 2 (for example, a position to which the measurement head 22 is attached). For example, the reflector may be attached to the measurement head 22. In this case, the position measuring apparatus 3 can appropriately measure the position of the measurement head 22. For example, the reflector may be attached to the self-propelled driving system 231. In this case, the position measuring apparatus 3 can measure the rough position of the measurement head 22.

As described above, in the present example embodiment, the measuring coordinate system defined with respect to the position measuring apparatus 3 is used as the reference coordinate system that is the baseline for the processing system SYS. In a case where the processing system SYS includes the plurality of position measuring apparatuses 3, a first measuring coordinate system determined with respect to a first position measuring apparatus 3 of the plurality of position measuring apparatuses 3 may be used as the reference coordinate system. On the other hand, a second position measuring apparatus 3 of the plurality of position measuring apparatuses 3 measures the position of each of the workpiece W, the processing apparatus 1, and the measurement apparatus 2 in a second measuring coordinate system defined with respect to the second position measuring apparatus 3. However, because the second measuring coordinate system is different from the reference coordinate system, the second position measuring apparatus 3 cannot measure the position of each of the workpiece W, the processing apparatus 1, and the measurement apparatus 2 in the reference coordinate system. Specifically, a technical problem occurs that there is a possibility that the control server 4 cannot calculate the position of each of the workpiece W, the processing apparatus 1, and the measurement apparatus 2 in the reference coordinate system from the position information indicating the measuring result by the second position measuring apparatus 3 (for example, the detected result of the measuring light ML and returned light RL by the detector 338 illustrated in FIG. 10 described above).

In order to solve this technical problem, either one of the first and second position measuring apparatuses 3 may measure a position of the other one of the first and second position measuring apparatuses 3. In this case, the control server 4 may acquires, as at least a part of the position information, the measuring result of the position of either one of the first and second position measuring apparatuses 3 by the other one of the first and second position measuring apparatuses 3. In this case, the control server 4 may calculate a relative positional relationship between the first and second position measuring apparatuses 3 based on the measuring result of the position of either one of the first and second position measuring apparatuses 3 by the other one of the first and second position measuring apparatuses 3. As a result, the control server 4 may transform a position in the second measuring coordinate system to a position in the first measuring coordinate system (namely, a position in the reference coordinate system) based on the relative positional relationship between the first and second position measuring apparatuses 3. Namely, the control server 4 can appropriately calculate the positions of the plurality of measuring target parts of the workpiece W in the reference coordinate system by using the position information acquired from each of the plurality of position measuring apparatuses 3.

Incidentally, the processing system SYS may include, as the plurality of position measuring apparatuses 3, the position measuring apparatus 3 for measuring the position of the workpiece W, the position measuring apparatus 3 for measuring the position of the processing apparatus 1, and the position measuring apparatus 3 for measuring the position of the measurement apparatus 2, separately. Namely, the processing system SYS may include the position measuring apparatus 3 that measures the position of the workpiece W, but may not measure the positions of the processing apparatus 1 and the measurement apparatus 2. The processing system SYS may include the position measuring apparatus 3 that measures the position of the processing apparatus 1, but may not measure the positions of the workpiece W and the measurement apparatus 2. The processing system SYS may include the position measuring apparatus 3 that measures the position of the measurement apparatus 2, but may not measure the position of the workpiece W and the processing apparatus 1. In this case, the workpiece W may be moved in at least a part of a period during which the processing operation is performed. Namely, the position of the workpiece W in the reference coordinate system may be changed in at least a part of the period during which the processing operation is performed.

Again in FIG. 15, the information acquisition unit 411 of the control server 4 receives (namely, acquires) the position information indicating the measuring result of the position of each of the workpiece W, the processing apparatus 1, and the measurement apparatus 2 at the step S311 from the position measuring apparatus 3 by using the communication apparatus 43 (a step S412).

Then, the control information generation unit 412 of the control server 4 calculates the position of the workpiece W in the reference coordinate system based on the model data acquired at the step S411 and the position information acquired at the step S412 (especially, the position information indicating the measuring result of the position of the workpiece W) (a step S413). For example, the control information generation unit 412 may calculate the position of the workpiece W in at least one of the X-axis direction, the Y-axis direction, and the Z-axis direction. For example, the control information generation unit 412 may calculate the position of the workpiece W in at least one of the θX direction, the θY direction, and the θZ direction (namely, the pose of the workpiece W).

Here, the position information indicating the measuring result of the position of the workpiece W indicates the position of the measuring target part of the workpiece W whose position is measured by the position measuring apparatus 3, but does not indicate the position of a non-measuring target part of the workpiece W whose position is not measured by the position measuring apparatus 3. Therefore, the control information generation unit 412 merely calculate the position of a part of the workpiece W in the reference coordinate system by simply using the position information. Namely, the control information generation unit 412 cannot calculate the position of a remaining part of the workpiece W in the reference coordinate system. Therefore, the control information generation unit 412 performs a fitting processing that positions a measuring target part of the three-dimensional model indicated by the model data at the position of the same measuring target part of the workpiece W indicated by the position information in the reference coordinate system. The fitting processing may include at least one of a processing that translates the three-dimensional model, a processing that scales the three-dimensional model, and a processing that rotates the three-dimensional model. Incidentally, the fitting processing may include a processing that performs an affine transformation of the three-dimensional model. The processing that performs the affine transformation of the three-dimensional model may include at least one of a processing that translate the three-dimensional model, a processing that scales the three-dimensional model, a processing that rotates the three-dimensional model, and a processing that skews the three-dimensional model. As a result, the three-dimensional model of the workpiece W is positioned at a position that is expected to be the same as the position of the workpiece W in the reference coordinate system. The three-dimensional model of the workpiece W is positioned in a pose that is expected to be the same as the pose of the workpiece W in the reference coordinate system. In this case, the control information generation unit 412 uses the position of the three-dimensional model of the workpiece W in the reference coordinate system as the position of the workpiece W in the reference coordinate system. Specifically, the control information generation unit 412 calculates the position of the measuring target part of the three-dimensional model of the workpiece W as the position of the measuring target part of the workpiece W. Furthermore, the control information generation unit 412 calculates the position of the non-measuring target part of the three-dimensional model of the workpiece W as the position of the non-measuring target part of the workpiece W. As a result, the control information generation unit 412 may generate map information indicating the workpiece W mapped in the reference coordinate system. Namely, the control information generation unit 412 may generate the map information indicating the position of each part of the workpiece W in the reference coordinate system. Incidentally, the map information may be referred to as workpiece position information or object position information because it is information indicating the position of an object that is the workpiece W.

Then, the control information generation unit 412 of the control server 4 assigns at least a part of the workpiece W to the processing apparatus 1 as a target processing area that should be processed by the processing apparatus 1 (a step S414). In this case, the processing apparatus 1 processes the target processing area assigned at the step S414.

In order to assign the target processing area to the processing apparatus 1, the control information generation unit 412 may set the target processing area in the workpiece W based on the map information generated at the step S413. For example, the control information generation unit 412 may set a position of the target processing area in the reference coordinate system. The control information generation unit 412 may set a single target processing area or may set a plurality of target processing areas. Then, in a case where the single target processing area is set, the control information generation unit 412 may assign the set target processing area to the processing apparatus 1. In a case where the plurality of target processing areas are set, the control information generation unit 412 may assign at least one of the plurality of target processing areas to the processing apparatus 1. Namely, the control information generation unit 412 may assign the plurality of target processing areas to the processing apparatus 1.

Then, the control information generation unit 412 of the control server 4 calculates a target movement route TR of the processing head 12 based on the map information generated at the step S413 and the target processing area assigned at the step S414 (a step S415). In a case where the plurality of target processing areas are assigned to the processing apparatus 1 at the step S414, the control information generation unit 412 calculates the target movement route TR of the processing head 12 based on the map information and one target processing area, which is not yet processed, of the plurality of target processing areas (the step S415). The target movement route TR in the processing operation includes a movement route for moving the processing head 12 toward a position at which the target processing area assigned at the step S414 can be processed. Especially, the target movement route TR may include a movement route along which the self-propelled driving system 131 moves. Namely, the target movement route TR may include a movement route along which the self-propelled driving system 131 moves the processing head 12.

Here, one example of an operation for calculating the target movement route TR will be described below with reference to FIG. 17. FIG. 17 is a top view illustrating the workpiece W.

As illustrated in FIG. 17, the control information generation unit 412 may set (in other words, acquire) a movement start position MS corresponding to a start point of the target movement route TR. Namely, the control information generation unit 412 may set the movement start position MS at which the processing head 12 starts moving along the target movement route TR. For example, the control information generation unit 412 may set the movement start position MS based on the position information acquired at the step S412. Namely, the movement start position MS may be input based on the position information. As one example, the control information generation unit 412 may calculate a current position of the processing apparatus 1 (for example, a current position of the processing head 12, the same may be applied to the below-described description) based on the position information and set the calculated current position of the processing apparatus 1 to the movement start position MS. Alternatively, the control information generation unit 412 may set a position that is different from the current position of the processing apparatus 1 to the movement start position MS. For example, in a case where the processing apparatus 1 includes the electric power source as described above, the control information generation unit 412 may set a position of a charging station, at which the processing apparatus 1 charges the electric power source, to the movement start position MS. Incidentally, since the processing head 12 moves in the reference coordinate system defined by the X-axis, the Y-axis, and the Z-axis as described above, the movement start position MS may include at least one of the X coordinate, the Y coordinate, and the Z coordinate.

As illustrated in FIG. 17, the control information generation unit 412 may set (in other words, acquire) a movement end position ME corresponding to an end point of the target movement route TR. Namely, the control information generation unit 412 may set the movement start position MS at which the processing head 12 ends the movement along the target movement route TR. For example, the control information generation unit 412 may set the movement end position ME based on the position of the target processing area assigned at the step S414. As one example, the control information generation unit 412 may set a position at which the processing head 12 can process the workpiece W without moving the processing head 12 by the self-propelled driving system 131 to the movement end position ME. Especially, the control information generation unit 412 may set a position at which the processing head 12 can process the target processing area without moving the processing head 12 by the self-propelled driving system 131 to the movement end position ME. As another example, the control information generation unit 412 may set a position at which a distance between the workpiece W and the processing head 12 is shorter than the movement stroke of the processing head 12 by the arm driving system 132 to the movement end position ME. Especially, the control information generation unit 412 may set a position at which a distance between the target processing area and the processing head 12 is shorter than the movement stroke of the processing head 12 by the arm driving system 132 to the movement end position ME. In both examples, the movement end position ME may be set at a position that is away from the workpiece W by a certain distance. Incidentally, the movement end position ME may include at least one of the X coordinate, the Y coordinate, and the Z coordinate.

Incidentally, since the target processing area is assigned based on the map information that is generated based on the model data, an operation for setting the movement end position ME based on the target processing area may be considered to be equivalent to an operation for setting the movement end position ME based on the model data.

Alternatively, the control information generation unit 412 may set the movement end position ME based on the movement start position MS. For example, the control information generation unit 412 may set a position that is away from the movement start position MS by a certain distance or more to the movement end position ME.

Then, the control information generation unit 412 may calculate a movement route between the movement start position MS and the movement end position ME as the target movement route TR. The control information generation unit 412 may calculate a movement route from the movement start position MS to the movement end position ME as the target movement route TR. In this case, the processing head 12 moves from the movement start position MS to the movement end position ME that is a target position (namely, a destination) along the target movement route TR.

As illustrated in FIG. 17, the control information generation unit 412 may calculate the target movement route TR that does not interfere with another object different from the processing apparatus 1. Namely, the control information generation unit 412 may calculate the target movement route TR that does not pass through an area in which another object is positioned. Specifically, the control information generation unit 412 may determine the area in which another object is positioned based on the map information generated at the step S413, and calculate the target movement route TR that does not pass through (namely, avoid) the determined area. For example, the control information generation unit 412 may calculate the shortest target movement route TR that allows a distance between another object and the processing apparatus 1 to be equal to or longer than a predetermined distance.

The workpiece W is one example of another object. In this case, the control information generation unit 412 may calculate the target movement route TR that does not interfere with the workpiece W, as illustrated in FIG. 17. Namely, the control information generation unit 412 may calculate the target movement route TR that does not pass through an area in which the workpiece W is positioned. Specifically, the control information generation unit 412 may determine the area in which the workpiece W is positioned based on the map information generated at the step S413, and calculate the target movement route TR that does not pass through (namely, avoid) the determined area. For example, the control information generation unit 412 may calculate the shortest target movement route TR that allows a distance between the workpiece W and the processing apparatus 1 to be equal or longer than the predetermined distance.

The measurement apparatus 2 is another example of another object. In this case, the control information generation unit 412 may calculate the target movement route TR that does not interfere with the measurement apparatus 2, as illustrated in FIG. 17. Namely, the control information generation unit 412 may calculate the target movement route TR that does not pass through an area in which the measurement apparatus 2 is positioned. Specifically, the control information generation unit 412 may determine the area in which the measurement apparatus 2 is positioned based on the position information acquired at the step S412 (especially, the position information indicating the measured result of the position of the measurement apparatus 2), and calculate the target movement route TR that does not pass through (namely, avoid) the determined area. For example, the control information generation unit 412 may calculate the shortest target movement route TR that allows a distance between the measurement apparatus 2 and the processing apparatus 1 to be equal or longer than the predetermined distance.

As described below, the measurement apparatus 2 may move. In this case, the control information generation unit 412 may calculate the target movement route TR that does not interfere with the moving measurement apparatus 2. Namely, the control information generation unit 412 may calculate the target movement route TR that prevents the measurement apparatus 2 and the processing apparatus 1 from being positioned at the same position at the same time. The control information generation unit 412 may calculate the target movement route TR that prevents the measurement apparatus 2 and the processing apparatus 1 from colliding with each other. Specifically, the control information generation unit 412 may calculate the target movement route TR of the processing apparatus 1 that does not interfere with the moving measurement apparatus 2 based on the target movement route TR of the measurement apparatus 2 calculated in the below-described measurement operation.

In a case where information related to an obstacle that a barrier for the movement of the processing head 12 is known to the control server 4, the control information generation unit 412 may calculate the target movement route TR that does not interfere with the obstacle. Namely, the control information generation unit 412 may calculate the target movement route TR that does not pass through an area in which the obstacle is positioned. For example, the control information generation unit 412 may calculate the shortest target movement route TR that allows a distance between the obstacle and the processing apparatus 1 to be equal or longer than the predetermined distance.

Incidentally, the control information generation unit 412 may use at least one of a pose of the arm driving system 132 in the processing apparatus 1 and a movable range of the processing head 12 with respect to the self-propelled driving system 131 in order to calculate the target movement route TR.

The control server 4 may typically acquire the information related to the obstacle before the processing operation is performed. For example, an obstacle detection apparatus may detect the obstacle before the processing operation is started, and the control server 4 may acquire a detected result by the obstacle detection apparatus as the information related to the obstacle. Alternatively, the operator may input the information related to the obstacle to the control server 4 by using the input apparatus 44. The control server 4 may acquire the information related to the obstacle at least a part of a period during which the processing operation is performed. For example, the control server 4 may acquire the information related to the obstacle before calculating the target movement route TR.

As illustrated in FIG. 17, the control information generation unit 412 may set (in other words, acquire) the processing start position PS corresponding to a position of the processing head 12 at a timing at which the processing head 12 actually starts processing the target processing area after completing the movement along the target movement route TR. For example, the control information generation unit 412 may set the processing start position PS based on the position of the target processing area assigned at the step S414. As one example, the control information generation unit 412 may set a desired position in the target processing area to the processing start position PS. Incidentally, since the target processing area is assigned based on the map information generated based on the model data, an operation for setting the processing start position PS based on the target processing area may be considered to be equivalent to an operation for setting the processing start position PS based on the model data. Incidentally, the processing start position PS may include at least one of the X coordinate, the Y coordinate, and the Z coordinate.

Alternatively, the control information generation unit 412 may set the processing start position PS based on the movement start position MS. For example, the control information generation unit 412 may set a position that is away from the movement start position MS by a certain distance to the processing start position PS.

In a case where the processing start position PS is set, the processing head 12 moves from the movement start position MS to the movement end position ME, which is a first target position (namely, a first destination), along the target movement route TR by the self-propelled driving system 131. Then, the processing head 12 moves from the movement end position ME to the processing start position PS, which is a second target position (namely, a second destination), by the arm driving system 132. In this case, the movement end position ME may be considered to be positioned between the movement start position MS and the processing start position PS on the movement route of the processing head 12 by the self-propelled driving system 131 and the arm driving system 132. In this case, typically, a length of the movement route from the movement start position MS to the movement end position ME may be longer than a length of the movement route from the movement end position ME to the processing start position PS. In other words, a movement distance of the processing head 12 by the self-propelled driving system 131 (namely, an amount of change in the position of the processing head 12, the same may be applied to the below-described description) may be larger than a movement distance of the processing head 12 by the arm driving system 132.

In a case where the processing start position PS is set, the control information generation unit 412 may set the movement end position ME based on the processing start position PS. For example, the control information generation unit 412 may set a position that is away from the processing start position PS toward a direction away from the workpiece W by a certain distance to the movement end position ME. As a result, there is a lower possibility that the processing apparatus 1, which has completed the movement along the target movement route TR, accidentally contacts the workpiece W. In this case, the control information generation unit 412 may set to a position that is away from the processing start position PS by a distance, which is shorter than the movement stroke of the processing head 12 by the arm driving system 132, to the movement end position ME. As a result, the self-propelled driving system 131 may not move the processing head 12 in order to move the processing head 12 from the movement end position ME to the processing start position PS.

As illustrated in FIG. 17, the control information generation unit 412 may set (in other words, acquire) a waiting position WP at which the processing head 12 temporarily waits after completing the movement along the target movement route TR. For example, the control information generation unit 412 may set, to the waiting position PS, a position that is away from the processing start position PS toward a direction away from the workpiece W by a certain distance and that is away from the movement end position ME toward a direction closer to the workpiece W by a certain distance. In this case, a distance between the processing start position PS and the waiting position WP is shorter than a distance between the processing start position PS and the movement end position ME. As a result, there is a lower possibility that the processing apparatus 1, which has completed the movement along the target movement route TR, accidentally contacts the workpiece W. Furthermore, a time required for the processing head 12 to move to the processing start position PS is reduced, compared to a case where the processing head 12 waits at the movement end position ME. Therefore, the processing head 12 can start processing quickly. Incidentally, the waiting position WP may include at least one of the X coordinate, the Y coordinate, and the Z coordinate.

In a case where the waiting position WP is set, the processing head 12 moves from the movement start position MS to the movement end position ME, which is the first target position (namely, the first destination), along the target movement route TR by the self-propelled driving system 131. Then, the processing head 12 moves from the movement end position ME to the waiting position WP, which is the second target position (namely, the second destination), by the arm driving system 132. Then, the processing head 12 moves from the waiting position WP to the processing start position PS, which is a third target position (namely, a third destination), by the arm driving system 132. In this case, the movement end position ME may be considered to be positioned between the movement start position MS and the waiting position WP on the movement route of the processing head 12 by the self-propelled driving system 131 and the arm driving system 132. The waiting position WP may be considered to be positioned between the movement end position ME and the processing start position PS.

Again in FIG. 15, then, the control information generation unit 412 generates the processing control information (a step S416). For example, the control information generation unit 412 may generate the processing control information for controlling the head driving system 13 to move the processing head 12 along the target movement route TR calculated at the step S415. For example, the control information generation unit 412 may generate the processing control information for controlling the processing apparatus 1 to process the target processing area assigned at the step S414.

Then, the control information generation unit 412 transmits the processing control information to the processing apparatus 1 by using the communication apparatus 43. As a result, the control apparatus 14 of the processing apparatus 1 receives the processing control information (a step S111).

Then, the control apparatus 14 of the processing apparatus 1 controls the head driving system 13 to move the processing head 12 based on the processing control information received at the step S111 (a step S112). Specifically, the self-propelled driving system 131 moves the processing head 12 along the target movement route TR. Namely, the self-propelled driving system 131 moves the processing head 12 along the target movement route TR by moving itself on the support surface SS along the target movement route TR. In a case where the waiting position WP is set, the arm driving system 132 may further move the processing head 12 positioned at the movement end position ME to the waiting position WP. In a case where the processing start position PS is set, the arm driving system 132 may further move the processing head 12 positioned at the movement end position ME or the waiting position WP to the processing start position PS.

Incidentally, the control apparatus 14 controls the movement of the processing head 12 based on the processing control information generated by the control server 4. In this case, the control server 4 may be considered to control the movement of the processing head 12.

After the processing head 12 completes the movement along the target movement area TR (namely, after the processing head 12 reaches the movement end position ME), the processing apparatus 1 processes the target processing area assigned at the step S414 (a step S113).

Then, the processing system SYS repeats the same operation until it is determined that the processing operation is ended (a step S417: Yes). For example, in a case where it is necessary to process another target processing area that is different from the target processing area processed at the step S113, the processing system SYS may determine that the processing operation is not ended (the step S417: No). In a case where it is not necessary to process another target processing area that is different from the target processing area processed at the step S113, the processing system SYS may determine that the processing operation is ended (the step S417: Yes). In a case where it is necessary to process another workpiece W that is different from the workpiece W processed at the step S113, the processing system SYS may determine that the processing operation is not ended (the step S417: No). In a case where it is not necessary to process another workpiece W that is different from the workpiece W processed at the step S113, the processing system SYS may determine that the processing operation is ended (the step S417: Yes).

In a case where it is determined that the processing operation is not ended (the step S417: No), the processing system SYS may perform the operation from the step S415 to the step S113 again. Namely, the control server 4 calculates the target movement route TR, which includes the travel route for moving the processing head 12 toward a position at which the processing apparatus 1 can process a new target processing area that should be processed next (the step S415). Then, the control server 4 generates the processing control information (the step S416). Then, the processing apparatus 1 receives the processing control information from the control server 4 (the step S111). Then, the processing apparatus 1 controls the head driving system 13 to move the processing head 12 based on the processing control information (the step S112). Then, the processing apparatus 1 processes a new target processing area that should be processed next (the step S113).

Incidentally, in a case where it is determined that the processing operation is not ended (the step S417: No), the processing system SYS may perform the operation from the step S311 to the step S113 again. Namely, in a case where it is determined that the processing operation is not ended (the step S417: No), the position measuring apparatus 3 may measure the position of each of the workpiece W, the processing apparatus 1, and the measurement apparatus 2 again (the step S311). Furthermore, the control server 4 may calculate the position of the workpiece W in the reference coordinate system again (the step S413). In this case, the control server 4 can accurately calculate the position of the workpiece W even in a case where at least one of a shape and a position of the workpiece W changes as the workpiece W is processed. As a result, the control server 4 can appropriately calculate the target movement route TR even in a case where at least one of the shape and the position of the workpiece W changes as the workpiece W is processed.

Incidentally, in a case where the processing apparatus 1 includes the electric power source as described above, the electric power source may be charged after the processing operation is ended. For example, after the processing operation is ended, the processing apparatus 1 may move to a charging station at which the processing apparatus 1 charges the electric power source, and charge the electric power source.

### (2-2-2) Modified Example of Operation for Moving Processing Head 12

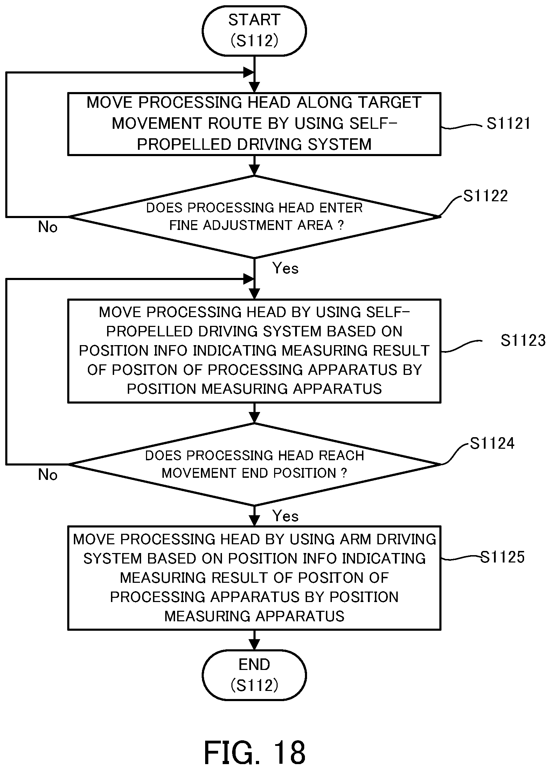

The processing system SYS may perform an operation illustrated in FIG. 18 when the processing head 12 is moved at the step S112 in FIG. 15 described above. FIG. 18 is a flowchart that illustrates a flow of an operation for moving the processing head 12 at the step S112 in FIG. 15. However, the processing system SYS may not perform the operation illustrated in FIG. 18.

As illustrated in FIG. 18, the control apparatus 14 of the processing apparatus 1 controls the head driving system 13 to move the processing head 12 based on the processing control information received at the step S111 in FIG. 15 (a step S1121). As a result, the processing head 12 moves along the target movement route TR.

Especially at the step S1121, the control apparatus 14 moves the processing head 12 by using the self-propelled driving system 131. Namely, the control apparatus 14 controls the self-propelled driving system 131 to move the processing head 12 based on the processing control information. As a result, the self-propelled driving system 131 moves along the target movement route TR together with the processing head 12. Namely, the processing head 12 moves along the target movement route TR.

In a period during which the processing head 12 moves along the target movement route TR, the control apparatus 14 of the processing apparatus 1 may determine whether or not the processing head 12 enters a fine adjustment area AA (a step S1122).

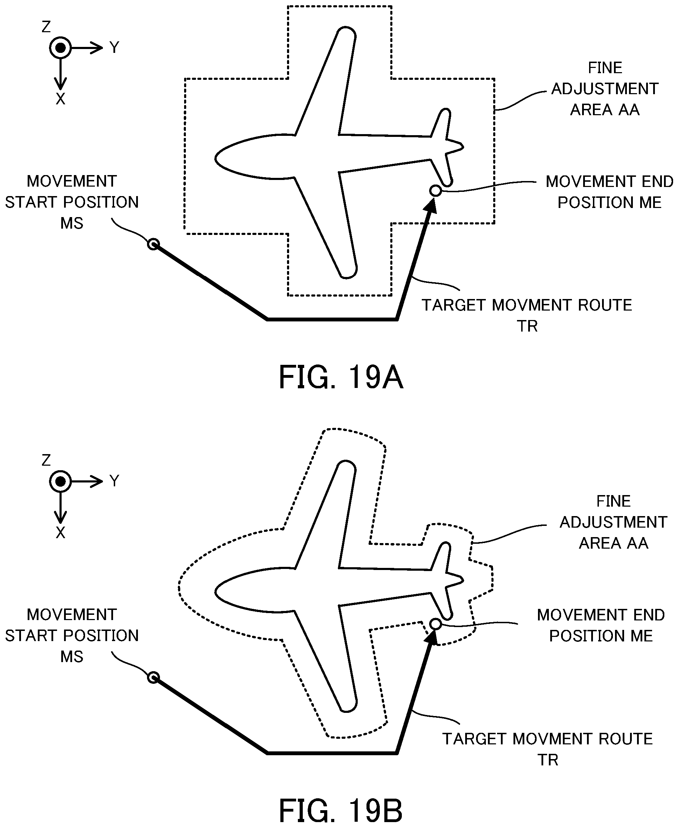

FIG. 19A and FIG. 19B illustrates one example of the fine adjustment area AA. As illustrated in FIG. 19A and FIG. 19B, the fine adjustment area AA may be an area determined with respect to the workpiece W. For example, the fine adjustment area AA may be an area that includes the workpiece W, as illustrated in FIG. 19A. For example, the fine adjustment area AA may be an area whose distance from the workpiece W is equal to or shorter than a predetermined first distance, as illustrated in FIG. 19B. However, the fine adjustment area AA may be an area that is determined independently of the workpiece W. Incidentally, information related to the fine adjustment area AA (for example, information related to a position of the fine adjustment area AA in the reference coordinate system) may be information known to the control apparatus 14.

In order to determine whether or not the processing head 12 enters the fine adjustment area AA, the control apparatus 14 may acquire the position information indicating the measuring result of the position of the processing apparatus 1 from the position measuring apparatus 3. Then, the control apparatus 14 may determine whether or not the processing head 12 enters the fine adjustment area AA based on the acquired position information and the information related to the fine adjustment area AA. Specifically, the control apparatus 14 may calculate the current position of the processing head 12 based on the position information, and determine whether or not the calculated current position of the processing head 12 is included in the fine adjustment area AA whose position is indicated by the information related to the fine adjustment area AA. In a case where it is determined that the current position of the processing head 12 is included in the fine adjustment area AA, the control apparatus 14 may determine that the processing head 12 enters the fine adjustment area AA.

In a case where the fine adjustment area AA is an area whose distance from the workpiece W is equal to or shorter than the predetermined first distance, the control apparatus 14 may calculate a distance between the processing head 12 and the workpiece W based on the position of the workpiece W calculated at the step S413 in FIG. 15 and the position information (especially, the position information indicating the measuring result of the position of the processing apparatus 1) acquired at the step S412 in FIG. 15, in order to determine whether or not the processing head 12 enters the fine adjustment area AA. The control apparatus 14 may determine that the processing head 12 enters the fine adjustment area AA in a case where the calculated distance is shorter than the first distance determining the fine adjustment area AA.

As described above, the movement end position ME, at which the self-propelled driving system 131 finish moving the processing head 12, is typically set at a position that is away from the workpiece W by certain distance. In this case, the fine adjustment area AA, which is determined with respect to the workpiece W, may be regarded as an area determined based on the movement end position ME that is away from the workpiece W by a certain distance. Specifically, the fine adjustment area AA may be an area whose distance from the movement end position ME is equal to or shorter than a predetermined second distance. In this case, the fine adjustment area AA may be set by the control server 4 that sets the movement end position ME. Furthermore, in this case, the control apparatus 14 may calculate a distance between the processing head 12 and the movement end position ME based on the position information indicating the measuring result of the position of the processing apparatus 1, in order to determine whether or not the processing head 12 enters the fine adjustment area AA. The control apparatus 14 may determine that the processing head 12 enters the fine adjustment area AA in a case where the calculated distance is shorter than the second distance determining the fine adjustment area AA.

Incidentally, at least one of the first distance and the second distance may be set based on the movable range of the processing head 12 with respect to the self-propelled driving system 131.

Again in FIG. 18, in a case where it is determined as a result of the determination at the step S1122 that the processing head 12 does not enter the fine adjustment area AA (for example, the distance between the processing head 12 and the movement end position ME is not shorter than the second distance) (the step S1122: No), the control apparatus 14 continues to move the processing head 12 along the target movement route TR by using the self-propelled driving system 131 (the step S1121).

On the other hand, even in a case where it is determined as a result of the determination at the step S1122 that the processing head 12 enters the fine adjustment area AA (for example, the distance between the processing head 12 and the movement end position ME is shorter than the second distance) (the step S1122: Yes), the control apparatus 14 continues to move the processing head 12 along the target movement route TR by using the self-propelled driving system 131 (a step S1123). However, at the step S1123, the control apparatus 14 newly acquires, from the position measuring apparatus 3, the position information indicating the measuring result of the position of the processing apparatus 1 by the position measuring apparatus 3, and moves the processing head 12 along the target movement route TR based on the newly acquired position information and the processing control information. In this case, the control apparatus 14 can calculate the accurate current position of the processing apparatus 1 (namely, the accurate current position of the processing head 12) based on the position information. Therefore, the control apparatus 14 can move the processing head 12 along the target movement route TR more appropriately, compared to a case where the position information is not used. Therefore, the processing apparatus 1 can prevent a collision between the processing apparatus 1 and the workpiece W caused by the control apparatus 14 not being capable of accurately recognizing the current position of the processing apparatus 1.

However, even before the processing head 12 enters the fine adjustment area AA, the control apparatus 14 may move the processing head 12 along the target movement route TR based on the position information indicating the measuring result of the position of the processing apparatus 1 by the position measuring apparatus 3. For example, the position measuring apparatus 3 may always keep measuring the position of the processing apparatus 1 in the period during which the processing head 12 moves. For example, the position measuring apparatus 3 may keep measuring the position of the processing apparatus 1 at a predetermined cycle in the period during which the processing head 12 moves. In this case, the control apparatus 14 does not lose the current position of the processing apparatus 1. Therefore, the control apparatus 14 can move the processing head 12 appropriately along the target movement route TR.

After the processing head 12 enters the fine adjustment area AA, the self-propelled driving system 131 may move the processing head 12 with a movement accuracy that is higher than a movement accuracy of the processing head 12 before the head 12 enters the fine adjustment area AA. Namely, the self-propelled driving system 131 may move the processing head 12 with a first movement accuracy until the processing head 12 enters the fine adjustment area AA, and the self-propelled driving system 131 may move the processing head 12 with a second movement accuracy that is higher than the first movement accuracy after the processing head 12 enters the fine adjustment area AA. As a result, the processing apparatus 1 can prevent the collision between the processing apparatus 1 and the workpiece W caused by a low movement accuracy of the processing head 12 at a position close to the workpiece W.

Then, the control apparatus 14 keeps moving the processing head 12 along the target movement route TR based on the position information by using the self-propelled driving system 131 (the step S1123) until the processing head 12 reaches the movement end position ME (a step S1124: No).

Then, after the processing head 12 reaches the movement end position ME (the step S1124: Yes), the control apparatus 14 may control the arm driving system 132 so that the processing head 12 that has reached the movement end position ME moves to the waiting position WP or the processing start position PS (a step S1125). At the step S1125, the control apparatus 14 may also move the processing head 12 based on the position information indicating the measuring result of the position of the processing apparatus 1 by the position measuring apparatus 3. As a result, even in a case where a target movement route from the movement end position ME to the waiting position WP or the processing start position PS is not set in advance, the control apparatus 14 can appropriately move the processing head 12 from the movement end position ME to the waiting position WP or the processing start position PS based on the position information. Furthermore, the processing apparatus 1 can prevent the collision between the processing apparatus 1 and the workpiece W caused by the control apparatus 14 not being capable of accurately recognizing the current position of the processing apparatus 1.

Moreover, the control apparatus 14 may control the arm driving system 132 to move the processing head 12 in at least a part of a period during which the self-propelled driving system 131 moves the processing head 12. In this case, a time required to move the processing head 12 to the waiting position WP or the processing start position PS is reduced, compared to a case where the arm driving system 132 moves the processing head 12 after the self-propelled driving system 131 finishes moving the head 12.

### (2-3) Measurement Operation

Next, the measurement operations performed by the processing system SYS will be described.

### (2-3-1) Entire Flow of Measurement Operation

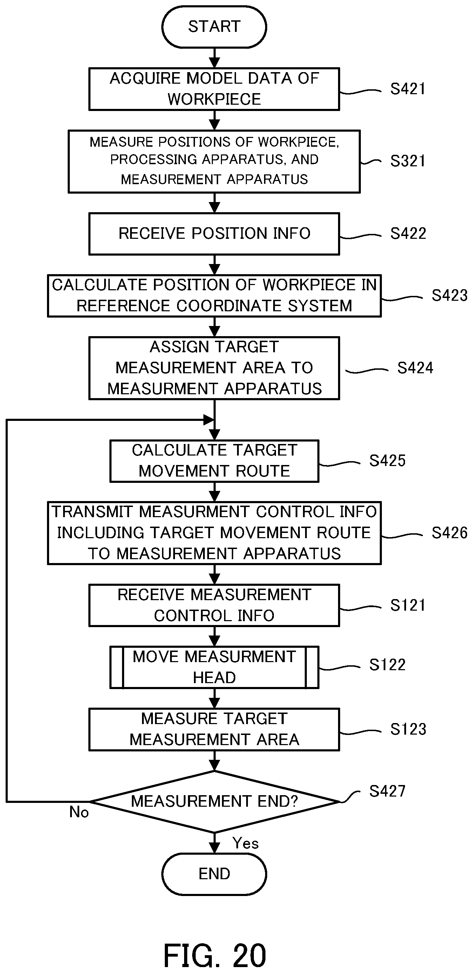

First, with reference to FIG. 20, an entire flow of the measurement operation will be described. FIG. 20 is a flowchart that illustrates the entire flow of the measurement operation.

As illustrated in FIG. 20, first, the control information generation unit 412 of the control server 4 acquires the model data indicating the three-dimensional model of the workpiece W that should be measured by the measurement apparatus 2 (a step S421). An operation at the step S421 may be the same as the operation at the step S411 in FIG. 15 described above.

In parallel with, before or after the operation at the step S421, the position measuring apparatus 3 measures the position of each of the workpiece W, the processing apparatus 1, and the measurement apparatus 2 (step S321). An operation at the step S321 may be the same as the operation at the step S311 in FIG. 15 described above. However, in the measurement operation, the position measuring apparatus 3 may not necessarily measure the position of the processing apparatus 1.

Then, the information acquisition unit 411 of the control server 4 receives (namely, acquires), from the position measuring apparatus 3, the position information indicating the measuring result of the position of each of the workpiece W, the processing apparatus 1, and the measurement apparatus 2 at the step S321 by using the communication apparatus 43 (a step S422).

Then, the control information generation unit 412 of the control server 4 calculates the position of the workpiece W in the reference coordinate system based on the model data acquired at the step S421 and the position information (especially, the position information indicating the measuring result of the position of the workpiece W) acquired at the step S412 (a step S423). An operation at the step S423 may be the same as the operation at the step S413 in FIG. 15 described above.

Then, the control information generation unit 412 of the control server 4 assigns at least a part of the workpiece W to the measurement apparatus 2 as a target measurement area that should be measured by the measurement apparatus 2 (a step S424). In this case, the measurement apparatus 2 measures the target measurement area assigned at the step S424. An operation at the step S424 may be the same as the operation at the step S414 in FIG. 15 described above. Specifically, the above-described description of the operation at the step S414 in FIG. 15 may be used as a description of the operation at the step S424 by replacing the terms of "processing apparatus 1" and "target processing area" with the terms of "measurement apparatus 2" and "target measurement area", respectively.

Then, the control information generation unit 412 of the control server 4 calculates the target movement route TR of the measurement head 22 based on the map information generated at the step S423 and the target measurement area assigned at the step S424 (a step S425). The target movement route TR in the measurement operation includes a movement route for moving the measurement head 22 toward a position at which the target measurement area assigned at the step S424 can be measured. Especially, the target movement route TR may include a movement route along which the self-propelled driving system 231 moves. Namely, the target movement route TR may include a movement route along which the self-propelled driving system 231 moves the measurement head 22.

An operation at the step S425 may be the same as the operation at the step S415 in FIG. 15 described above. Specifically, the above-described description of the operation at the step S415 in FIG. 15 may be used as a description of the operation at the step S425 by replacing the terms of "processing apparatus 1", "processing head 12", "self-propelled driving system 131", "arm driving system 132", "measurement apparatus 2", "processing operation", "target processing area", "processing start position", and "processing" with the terms of "measurement apparatus 2", "measurement head 22", "self-propelled driving system 231", "arm driving system 232", "processing apparatus 1", "measurement operation", "target measurement area", "measurement start position", and "measurement".

Then, the control information generation unit 412 generates the measurement control information (a step S426). For example, the control information generation unit 412 may generate the measurement control information for controlling the head driving system 23 to move the measurement head 22 along the target movement route TR calculated at the step S425. For example, the control information generation unit 412 may generate the measurement control information for controlling the measurement apparatus 2 to measure the target measurement area assigned at the step S424.

Then, the control information generation unit 412 transmits the measurement control information to the measurement apparatus 2 by using the communication apparatus 43. As a result, the control apparatus 24 of the measurement apparatus 2 receives the measurement control information (a step S121).

Then, the control apparatus 24 of the measurement apparatus 2 controls the head driving system 23 to move the measurement head 22 based on the measurement control information received at the step S121 (a step S122). An operation at the step S122 may be the same as the operation at the step S112 in FIG. 15 above. Specifically, the self-propelled driving system 231 moves the measurement head 22 along the target movement route TR. Namely, the self-propelled driving system 231 moves the measurement head 22 along the target movement route TR by moving itself on the support surface SS along the target movement route TR. In a case where the waiting position WP is set, the arm driving system 232 may further move the measurement head 22 positioned at the movement end position ME to the waiting position WP. In a case where the processing start position PS is set, the arm driving system 232 may further move the measurement head 22 positioned at the movement end position ME or the waiting position WP to the processing start position PS.

Furthermore, at the step S122, the processing system SYS may perform an operation that is the same as the operation illustrated in FIG. 18. Specifically, the above-described description of the operation illustrated in FIG. 18 may be used as the description of an operation that may be performed at the step S122 by replacing the terms of "processing apparatus 1", "processing head 12", "self-propelled driving system 131", "arm driving system 132", "control apparatus 14", "processing control information", "FIG. 15" and "step S413" with the terms of "measurement apparatus 2", "measurement head 22", "self-propelled driving system 231", "arm driving system 232", "control apparatus 24", "measurement control information", "FIG. 20", and "step S423", respectively.

Incidentally, the control apparatus 24 controls the movement of the measurement head 22 based on the measurement control information generated by the control server 4. In a case where the control server 4 is controlling the movement of the measurement head 22, the control server 4 may be considered to control the movement of the measurement head 22.

After the measurement head 22 completes the movement along the target movement area TR (namely, after the measurement head 22 reaches the movement end position ME), the measurement apparatus 2 measures the target measurement area assigned at the step S424 (a step S123).

Then, the processing system SYS repeats the same operation until it is determined that the measurement operation is ended (a step S427: Yes). For example, in a case where it is necessary to measure another target measurement area that is different from the target measurement area measured at the step S123, the processing system SYS may determine that the measurement operation is not ended (the step S427: No). In a case where it is not necessary to measure another target measurement area that is different from the target measurement area measured at the step S123, the processing system SYS may determine that the measurement operation is ended (the step S427: Yes). In a case where it is necessary to measure another workpiece W that is different from the workpiece W measured at the step S123, the processing system SYS may determine that the measurement operation is not ended (the step S427: No). In a case where it is not necessary to measure another workpiece W that is different from the workpiece W measured at the step S123, the processing system SYS may determine that the measurement operation is ended (the step S427: Yes).

### (2-3-2) Specific Example of Measurement Operation

Next, a specific example of the measurement operation will be described.

### (2-3-2-1-) Pre-Measurement

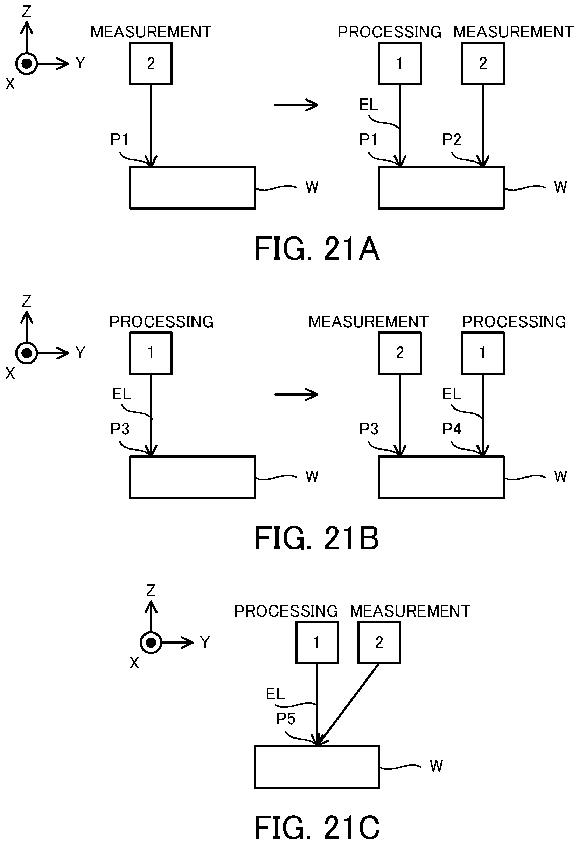

The measurement apparatus 2 may measure the workpiece W before the processing apparatus 1 processes the workpiece W. For example, as illustrated in FIG. 21A, the measurement apparatus 2 may measure a first part P1 of the workpiece W before the processing apparatus 1 processes the first part P1 by irradiating the first part P1 of the workpiece W with the processing light EL. The processing apparatus 1 may process the first part P1 of the workpiece W by irradiating the first part P1 of the workpiece W with the processing light EL after the measurement apparatus 2 has measured the first part P1 of the workpiece W.

The control information generation unit 412 may generate the processing control information for controlling the processing apparatus 1 to process the first part P1 based on the measured result of the first part P1 by the measurement apparatus 2. For example, the control information generation unit 412 may generate, based on the measured result of the first part P1 by the measurement apparatus 2, the processing control information including a processing path indicating the irradiation position of the processing light EL for processing the first part P1. In this case, the processing apparatus 1 can process the first part P1 of the workpiece W based on the measured result of the first part P1 of the workpiece W (namely, a pre-measurement that is performed before the first part P1 is processed). Namely, the processing apparatus 1 can process the workpiece W based on the result of the pre-measurement of the workpiece W. Therefore, the processing apparatus 1 can process the first part P1 of the workpiece W more appropriately, compared to a case where the result of the pre-measurement of the first part P1 of the workpiece W is not used. Namely, the processing apparatus 1 can process the workpiece W more appropriately, compared to a case where the result of the pre-measurement of the workpiece W is not used.

It can be said that FIG. 21A illustrates an example in which the measurement apparatus 2 measures the first part P1 of the workpiece W at a first time, and the processing apparatus 1 processes the first part P1 of the workpiece W at a second time that is after the first time. In this case, the measurement apparatus 2 may measure a second part P2, which is different from the first part P1, of the workpiece W at the second time at which the processing apparatus 1 processes the first part P1 of the workpiece W. In this case, the processing of the workpiece W by the processing apparatus 1 and the measurement of the workpiece W by the measurement apparatus 2 are performed in parallel, and therefore, a throughput related to the processing and the measurement of the workpiece W as a whole improves.

### (2-3-2-2) Post-Measurement

The measurement apparatus 2 may measure the workpiece W after the processing apparatus 1 has processed the workpiece W. For example, as illustrated in FIG. 21B, the measurement apparatus 2 may measure a third part P3 of the workpiece W after the processing apparatus 1 processes the third part P3 by irradiating the third part P3 of the workpiece W with the processing light EL. The processing apparatus 1 may process the third part P3 by irradiating the third part P3 of the workpiece W with the processing light EL before the measurement apparatus 2 measures the third part P3 of the workpiece W.

In this case, the control information generation unit 412 of the control server 4 may determine (in other words, evaluate) whether or not the processing performed by the processing apparatus 1 on the workpiece W is appropriate, based on the measurement result by the measurement apparatus 2. Especially, the control information generation unit 412 may determine (in other words, evaluate) whether or not the processing performed by the processing apparatus 1 on the third part P3 of the workpiece W is appropriate based on the measured result of the third part P3 by the measurement apparatus 2. For example, the control information generation unit 412 may calculate a shape of the third part P3 based on the measured result of the third part P3 by the measurement apparatus 2, and determine whether or not the calculated shape of the third part P3 is a target shape (namely, a shape which the processed third part P3 should have). In a case where the shape of the third part P3 is the target shape, the control information generation unit 412 may determine that the processing performed by the processing apparatus 1 on the third part P3 of the workpiece W is appropriate. On the other hand, in a case where the shape of the third part P3 is not the target shape, the control information generation unit 412 may determine that the processing performed by the processing apparatus 1 on the third part P3 of the workpiece W is not appropriate.

In a case where it is determined that the processing performed by the processing apparatus 1 on the third part P3 of the workpiece W is not appropriate, the control information generation unit 412 may control the processing apparatus 1 to additionally process the third part P3. For example, the control information generation unit 412 may generate the processing control information for controlling the processing apparatus 1 to performs the processing for making the shape of the third part P3 be the target shape. In this case, the processing apparatus 1 can process the third part P3 of the workpiece W based on the measured result of the third part P3 of the workpiece W (namely, a post-measurement performed after the third part P3 is processed). Namely, the processing apparatus 1 can process the workpiece W based on the result of the post-measurement of the workpiece W. Therefore, the processing apparatus 1 can process the third part P3 of the workpiece W more appropriately, compared to a case where the result of the post-measurement of the third part P3 of the workpiece W is not used. Namely, the processing apparatus 1 can process the workpiece W more appropriately, compared to a case where the result of the post-measurement of the workpiece W is not used.

In a case where it is determined that the processing performed by the processing apparatus 1 on the workpiece W is not appropriate, the control information generation unit 412 may store information related to a processing defective area, on which the processing is determined not to be performed appropriately, of the workpiece W in the processing information DB 421 (especially, the processing progress information) or the measurement information DB 422 (especially, the measurement progress information). The information related to the processing defective area stored in the processing information DB 421 or the measurement information DB 422 may be presented to the operator (for example, the user of the processing system SYS), as will be described later in detail in a third modified example.

It can be said that FIG. 21B illustrates an example in which the processing apparatus 1 processes the third part P3 of the workpiece W at a third time, and the measurement apparatus 2 measures the third part P3 of the workpiece W at a fourth time that is after the third time. In this case, the processing apparatus 1 may process a fourth part P4, which is different from the third part P3, of the workpiece W at the fourth time at which the measurement apparatus 2 measures the third part P3 of the workpiece W. In this case, the processing of the workpiece W by the processing apparatus 1 and the measurement of the workpiece W by the measurement apparatus 2 are performed in parallel, and therefore, a throughput related to the processing and the measurement of the workpiece W as a whole improves.

### (2-3-2-3) Simultaneous Measurement

The measurement apparatus 2 may measure the workpiece W in at least a part of a period during which the processing apparatus 1 processes the workpiece W. For example, as illustrated in FIG. 21C, the measurement apparatus 2 may measure a fifth part P5 of the workpiece W in at least a part of a period during which the processing apparatus 1 processes the fifth part P5 by irradiating the fifth part P5 of the workpiece W with the processing light EL. The processing apparatus 1 may process the fifth part P5 by irradiating the fifth part P5 of the workpiece W with the processing light EL in at least a part of a period during which the measurement apparatus 2 measures the fifth part P5 of the workpiece W. In this case, the processing of the workpiece W by the processing apparatus 1 and the measurement of the workpiece W by the measurement apparatus 2 are performed in parallel, and therefore, a throughput related to the processing and the measurement of the workpiece W as a whole improves.

In this case, the control information generation unit 412 of the control server 4 may generate the processing control information for controlling the processing apparatus 1 to process the fifth part P5 based on the measured result of the fifth part P5 by the measurement apparatus 2. The control information generation unit 412 may determine (in other words, evaluate) whether or not the processing performed by the processing apparatus 1 on the workpiece W (especially, the fifth part P5 thereof) is appropriate based on the measured result of the fifth part P5 by the measurement apparatus 2. In a case where it is determined that the processing performed by the processing apparatus 1 on the fifth part P5 of the workpiece W is not appropriate, the control information generation unit 412 may control the processing apparatus 1 to process the fifth part P5 appropriately.

### (2-3-2-) Film Thickness Measurement

The processing system SYS may perform a film thickness measurement described below as one example of the above-described pre-measurement. Next, the film thickness measurement will be described.

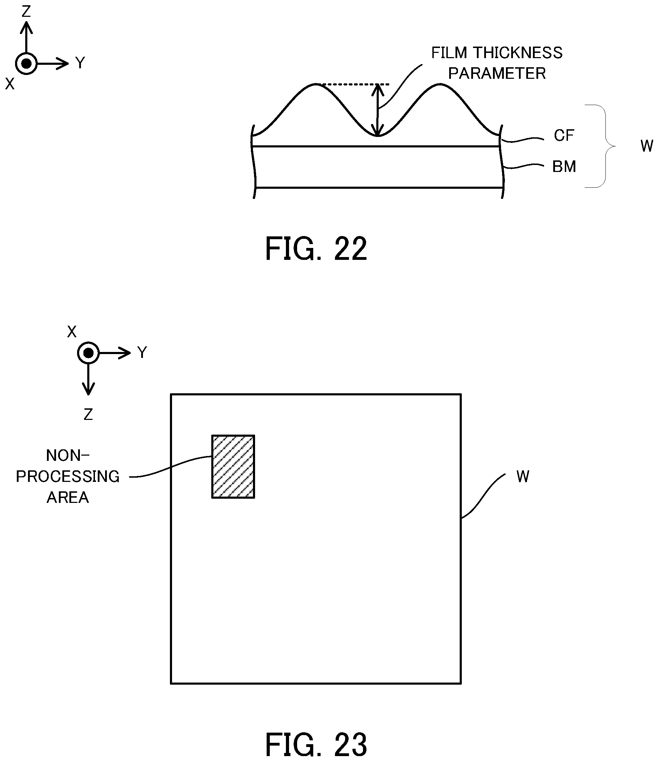

As illustrated in FIG. 22, the workpiece W may include a base material BM and a film CF formed on the surface of the base material BM. The film CF may include a paint film, for example. As one example, in a case where the workpiece W is the airplane, the base material BM may include the body of the airplane, and the film CF may include a paint film applied to the body of the airplane.

In this case, the processing apparatus 1 may perform the subtractive manufacturing for removing a part of the film CF. For example, the processing apparatus 1 may perform the subtractive manufacturing for forming the riblet structure on the film CF by removing a part of the film CF. In this case, the processing apparatus 1 may perform the subtractive manufacturing for removing a part of the film CF without exposing the base material BM from the film CF. For example, the processing apparatus 1 may perform the subtractive manufacturing for forming the above-described riblet structure on the film CF (the paint film) without exposing the base material BM, which corresponds to a bed of the body of the airplane, from the film CF, which corresponds to the paint film.

In this case, the control information generation unit 412 may calculate a thickness of the film CF based on the measured result of the workpiece W by the measurement apparatus 2. Specifically, the control information generation unit 412 may calculate a film thickness parameter that directly or indirectly indicates the thickness of the film CF based on the measured result of the workpiece W by the measurement apparatus 2. For example, the measured result of the workpiece W by the measurement apparatus 2 includes information related to the shape (for example, the three-dimensional shape) of the workpiece W. In this case, the control information generation unit 412 may calculate a difference in height between an uppermost part (namely, a mountain) of the film CF and a lowest part (namely, a groove) of the film CF in a certain local area of the workpiece W (namely, a height of the mountain) as the film thickness parameter directly or indirectly indicating the thickness of the film CF in the local area. In this case, the film CF is thinner as the film thickness parameter is smaller. This is because the mountain of the film corresponding to a thick part of the film CF is lower as the film thickness parameter is smaller.

As illustrated in FIG. 23, the control information generation unit 412 may set a non-processing area, which should not be processed by the processing apparatus 1, on the surface of the workpiece W based on the thickness of the film CF (namely, the film thickness parameter). For example, the control information generation unit 412 may set an area of the workpiece W in which the thickness of the film CF is thinner than a predetermined thickness threshold value to as the non-processing area. For example, the control information generation unit 412 may set an area in which the above-described film thickness parameter is smaller than the predetermined thickness threshold value to the non-processing area.

In a case where, the processing apparatus 1 does not process the non-processing area in which the thickness of the film CF is thin, and therefore, there is a lower possibility that the film CF is removed and the base material BM is exposed in the non-processing area. Therefore, the processing apparatus 1 can selectively process the film CF without exposing the base material BM from the film CF. For example, the processing apparatus 1 can selectively process the above-described riblet structure on the film CF without exposing the base material BM, which corresponds to the bead of the body of the airplane, from the film CF, which corresponds to the paint film.

Considering this technical effect, the predetermined thickness threshold value used to set the non-processing area may be set to be a desired value that can distinguish the thickness of the film CF that causes the exposure of the base material BM from the film CF due to the processing of the film CF by the processing apparatus 1 from the thickness of the film CF that does not cause the exposure of the base material BM from the film CF due to the processing of the film CF by the processing apparatus 1.

Alternatively, the processing apparatus 1 may process the non-processed area with a processed amount that is smaller than a usual processed amount. Namely, the processing apparatus 1 may process the non-machining area so that the processed amount in the non-processing area is smaller than the processed amount in an area on the workpiece W that is different from the non-processing area. For example, the processing apparatus 1 may process the non-processed area with the processed amount that is smaller than the usual processed amount by controlling the focus optical element 1211 so that a defocus amount of the processing light EL for processing the non-processing area is larger than a defocus amount of the processing light EL for processing an area that is different from the non-processing area. As a result, the processing apparatus 1 can selectively process the film CF without exposing the base material BM from the film CF even in the non-processing area.

Incidentally, the film CF may be re-formed in the non-processing area in which the thickness of the film CF is thin. For example, a paint film may be re-applied, as the film CF, in the non-processing area in which the thickness of the film CF is thin. In this case, for re-forming the film CF (for example, for re-applying the paint film), information related to a thickness distribution of the film CF may be output from the control information generation unit 412 to an apparatus that re-forms the film CF through the output apparatus 45.

Incidentally, the control information generation unit 412 may set the non-processing area based on the measured result of the workpiece W by the measurement apparatus 2, independent of the thickness of the film CF. Alternatively, the control information generation unit 412 may set the non-processing area based on the measured result of the workpiece W by the measurement apparatus 2, even in a case where the workpiece W does not include the base material BM and the film CF.

As one example, the control information generation unit 412 may determine, based on the measured result of the workpiece W by the measurement apparatus 2, whether or not the workpiece W has a defect. The defect may include a defect that makes an appropriate processing by the processing apparatus 1 difficult. In a case where it is determined that the workpiece W has the defect, the control information generation unit 412 may set a defective area of the workpiece W in which the defect is determined to exist to the non-processing area that should not be processed by the processing apparatus 1.

As another example, the control information generation unit 412 may determine, based on the measured result of the workpiece W by the measurement apparatus 2, whether or not the workpiece W has a structural object that should not be processed by the processing apparatus 1. For example, in a case where the workpiece W is the airplane, at least one of a rivet (especially, its head) and a bolt (especially, its head) is an example of the structural object that should not be processed by the processing apparatus 1. In a case where it is determined that the workpiece W has the structural object that should not be processed by the processing apparatus 1, the control information generation unit 412 may set an area of the workpiece W in which the structural objects that should not be processed by the processing apparatus 1 exists to the non-processing area that should not be processed by the processing apparatus 1.

In a case where the non-processing area is set, the control information generation unit 412 may store information related to the non-processing area in the processing information DB 421 related to the processing apparatus 1. The information related to the non-processing area stored in the processing information DB 421 may be presented to the operator (for example, the user of the processing system SYS), as will be detailed later in the third modified example.

### (3) Technical Effect of Processing System SYS

As described above, the processing system SYS in the present example embodiment includes the processing apparatus 1 that is movable and the measurement apparatus 2 that is movable independently of the processing apparatus 1. Therefore, there is a lower possibility that a processing position at which the processing apparatus 1 performs the processing is restricted by a measurement position at which the measurement apparatus 2 performs the measurement, compared to a processing system in a comparative example in which the processing apparatus 1 and the measurement apparatus 2 are integrated (namely, the processing apparatus 1 and the measurement apparatus 2 cannot move independently). Similarly, there is a lower possibility that the measurement position at which the measurement apparatus 2 performs the measurement is restricted by the processing position at which the processing apparatus 1 performs the processing. Therefore, the processing system SYS can efficiently process and measure the workpiece W by using processing apparatus 1 and measurement apparatus 2 independently.

Furthermore, in the present example embodiment, the processing system SYS can calculate the target movement route TR of each of the processing head 12 and the measurement head 22 based on the model data indicating the three-dimensional model of the workpiece W and the position information indicating the measuring result of the position of the workpiece W by the position measuring apparatus 3. Therefore, the processing system SYS can generate the target movement route TR with higher accuracy, compared to a case where the model data and the position information, which indicating the measuring result of the position of the workpiece W by the position measuring apparatus 3 that is specialized for measuring the position of the measuring target object, are not used.

Furthermore, in the present example embodiment, the processing system SYS can move the processing head 12 or the measurement head 22 based on the position information indicating the measuring result of the position of the processing apparatus 1 or the measurement apparatus 2 by the position measuring apparatus 3 after the processing head 12 or the measurement head 22 enters the fine adjustment area AA. Therefore, the processing system SYS can move the processing head 12 or the measurement head 22 to a more accurate position near the workpiece W. Furthermore, since the processing system SYS can recognize the accurate position of the processing head 12 or the measurement head 22, the processing system SYS can move the processing head 12 or the measurement head 22 while preventing the collision between the processing apparatus 1 or the measurement apparatus 2 and the workpiece W.

### (4) Modified Example

Next, a modified example of the processing system SYS will be described.

### (4-1) First Modified Example

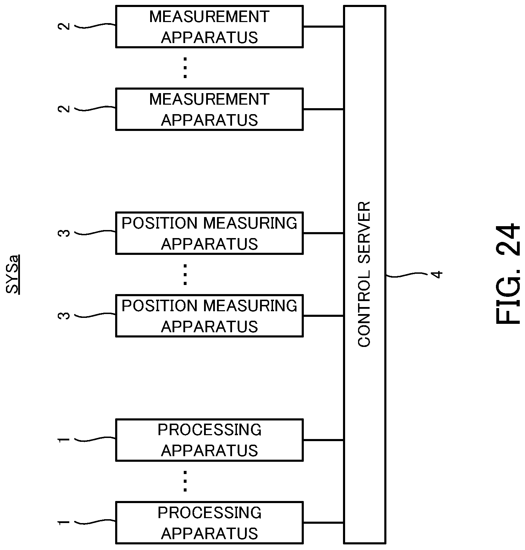

First, with reference to FIG. 24, a first modified example of the processing system SYS will be described. FIG. 24 is a block diagram that illustrates a configuration of the processing system SYS in the first modified example. Incidentally, in the below-described description, the processing system SYS in the first modified example is referred to as a "processing system SYSa.

As illustrated in FIG. 24, the processing system SYSa in the first modified example is different from the above-described processing system SYS in that the processing system SYSa may include a plurality of processing apparatuses 1 and a plurality of measurement apparatuses 2. However, the processing system SYSa may include the plurality of processing apparatuses 1 but include a single measurement apparatus 2. The processing system SYSa may include a single processing apparatus 1 but include the plurality of measurement apparatuses 2. Other feature of the processing system SYSa may be the same as other feature of the processing system SYS.

The number of processing apparatuses 1 may be the same as the number of measurement apparatuses 2. Alternatively, the number of processing apparatuses 1 may be different from the number of measurement apparatuses 2. For example, the number of processing apparatus 1 may be larger than the number of measurement apparatuses 2. For example, the number of measurement apparatuses 2 may be larger than the number of processing apparatuses 1.

The control server 4 may be configured to control the plurality of processing apparatuses 1. In a case where the plurality of processing apparatuses 1 are positioned at the same location, the control server 4 may serve as an edge server positioned at the location at which the plurality of processing apparatuses 1 are positioned. The control server 4 may serve as a cloud server that is positioned on a network as seen from the plurality of processing apparatuses 1. In a case where at least two of the plurality of processing apparatuses 1 are positioned at different locations, the control server 4 may serve as the cloud server that is positioned on the network as seen by the plurality of processing apparatuses 1.

The control server 4 may be configured to control the plurality of measurement apparatuses 2. In a case where the plurality of measurement apparatuses 2 are positioned at the same location, the control server 4 may serve as an edge server positioned at the location at which the plurality of measurement apparatuses 2 are positioned. The control server 4 may serve as a cloud server that is positioned on a network as seen from the plurality of measurement apparatuses 2. In a case where at least two of the plurality of measurement apparatuses 2 are positioned at different locations, the control server 4 may serve as the cloud server that is positioned on the network as seen by the plurality of measurement apparatuses 2.

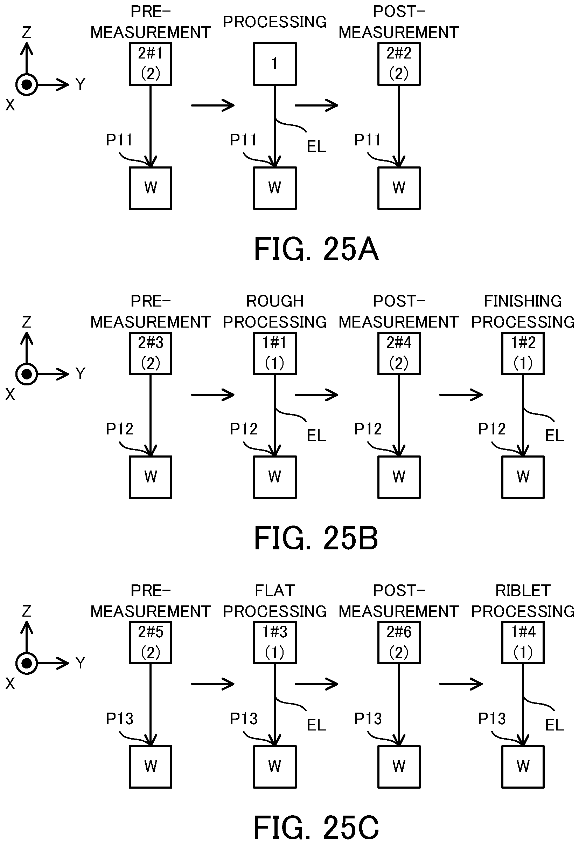

The processing system SYSa may use at least two of the plurality of processing apparatuses 1 for different usages. The processing system SYSa may use at least two of the plurality of measurement apparatuses 2 for different usages. Next, with reference to FIG. 25A to FIG. 25C, one example of the usages of at least two processing apparatuses 1 and the usage of at least two measurement apparatuses 2 will be described.

As illustrated in FIG. 25A, the processing system SYSa may use a first measurement apparatus 2 (2#1) for a usage of the above-described pre-measurement and may use a second measurement apparatus 2 (2#2), which is different from the first measurement apparatus 2#1, for a usage of the above-described post-measurement. In this case, as illustrated in FIG. 25A, the first measurement apparatus 2#1 may perform the pre-measurement for measuring a first part P11 of the workpiece W. Then, the control server 4 may generate the processing control information for controlling the processing apparatus 1 to process the first part P11 based on the result of the pre-measurement by the first measurement apparatus 2#1. Then, the processing apparatus 1 may process the first part P11 based on the processing control information. Then, the second measurement apparatus 2#2 may perform the post-measurement for measuring the first part P11 of the workpiece W processed by the processing apparatus 1.

As illustrated in FIG. 25B, the processing system SYSa may use a first processing apparatus 1 (1#1) for a usage of processing the workpiece W with a first processing accuracy, and may use a second processing apparatus 1 (1#2), which is different from the first processing apparatus 1#11, for a usage of processing the workpiece W with a second processing accuracy that is higher than the first processing accuracy. In this case, the processing by the first processing apparatus 1#1 may be referred to as a rough processing, and the processing by the second processing apparatus 1#2 may be referred to as a finishing processing or a fine processing. Furthermore, the processing system SYSa may use a third measurement apparatus 2 (2#3) for a usage of the pre-measurement for generating the processing control information of the first processing apparatus 1#1 and may use a fourth measurement apparatus 2 (2#4), which is different from the third measurement apparatus 2#3, for a usage of the pre-measurement for generating the processing control information of the second processing apparatus 1#2. In this case, as illustrated in FIG. 25B, the third measurement apparatus 2#3 may perform the pre-measurement for measuring a second part P12 of the workpiece W. Then, the control server 4 may generate first processing control information for controlling the first processing apparatus 1#1 to process the second part P12 based on the result of the pre-measurement by the third measurement apparatus 2#3. Then, the first processing apparatus 1#1 may process the second part P12 based on the first processing control information. Then, the fourth measurement apparatus 2#4 may perform the pre-measurement for measuring the second part P12 of the workpiece W processed by the first processing apparatus 1#1. Then, the control server 4 may generate second processing control information for controlling the second processing apparatus 1#2 to process the second part P12 based on the result of the pre-measurement by the fourth measurement apparatus 2#4. Then, the second processing apparatus 1#2 may process the second part P12 based on the second processing control information.

The first processing apparatus 1#1 may be different from the second processing apparatus 1#2 in that a characteristic of the processing light EL used by the first processing apparatus 1#1 is different from a characteristic of the processing light EL used by the second processing apparatus 1#2. For example, the first processing apparatus 1#1 may use the pulsed light whose pulse width is nanoseconds (for example, the pulsed light generated by using Co₂ laser) in order to process the workpiece W with the first processing accuracy. In this case, the processing by the first processing apparatus 1#1 may be a thermal processing. For example, the second processing apparatus 1#2 may use the pulsed light whose pulse width is picoseconds or femtoseconds in order to process the workpiece W with the second processing accuracy. In this case, the processing by the second processing apparatus 1#2 may be a non-thermal processing (for example, an ablation processing).

As illustrated in FIG. 25C, the processing system SYSa may use a third processing apparatus 1 (1#3) for a usage of processing the workpiece W so as to reduce a flatness of the surface of the workpiece W (namely, so that the surface of the workpiece W is closer to a flat surface) than before processing, and may use a fourth processing apparatus 1 (1#4), which is different from the third processing apparatus 1#3 for a usage of processing the workpiece W to form the above-described riblet structure on the workpiece W. Alternatively, the processing system SYSa may use the third processing apparatus 1 (1#3) for a usage of reducing or eliminating fine irregularities on the surface of the workpiece W (specifically, fine irregularities distributed at a pitch shorter than a pitch of an undulation of the entire surface of the workpiece W). In this case, the processing by the third processing apparatus 1#3 may be referred to as a flat processing, and the processing by the fourth processing apparatus 1#4 may be referred to as a riblet processing. Furthermore, the processing system SYSa may use a fifth measurement apparatus 2 (2#5) for a usage of the pre-measurement for generating the processing control information of the third processing apparatus 1#3, and may use a sixth measurement apparatus 2 (2#6), which is different from the fifth measurement apparatus 2#5, for a usage of the pre-measurement for generating the processing control information of the fourth processing apparatus 1#4. In this case, as illustrated in FIG. 25C, the fifth measurement apparatus 2#5 may perform the pre-measurement for measuring a third part P13 of the workpiece W. Then, the control server 4 may generate third processing control information for controlling the third processing apparatus 1#3 to process the third part P13 based on the result of the pre-measurement by the fifth measurement apparatus 2#5. Then, the third processing apparatus 1#3 may process the third part P13 based on the third processing control information. Then, the sixth measurement apparatus 2#6 may perform the pre-measurement for measuring the third part P13 of the workpiece W processed by the third processing apparatus 1#3. Then, the control server 4 may generate fourth processing control information for controlling the fourth processing apparatus 1#4 to process the third part P13 based on the result of the pre-measurement by the sixth measurement apparatus 2#6. Then, the fourth processing apparatus 1#4 may process the third part P13 based on the fourth processing control information.

However, in a case where the workpiece W includes the base material BM and the film CF as illustrated in FIG. 22 and the surface of the base material BM is a curved surface, the processing system SYS may use the third processing apparatus 1 (1#3) for a usage that is different from the usage of reducing the workpiece W than before processing. Specifically, the processing system SYS may use the third processing apparatus 1 (1#3) for a usage of making the surface of the workpiece W (in this case, the surface of the film CF) be a curved surface, which is similar to the surface of the base material BM, than before processing. Namely, the third processing apparatus 1 (1#3) may process the film CF so that the shape of the surface of the film CF is the curved that is similar to the surface of the base material BM. As one example, the third processing apparatus 1 (1#3) may determine a shape of a surface of the base material BM based on a three-dimensional model indicating a three-dimensional shape of the base material BM, and process, based on the determined shape of the surface of the base material BM, the film CF so that the shape of the surface of the film CF formed on a curved surface area, which is a curved surface, of the base material BM is a curved surface that is similar to the surface of the curved surface area of the base material BM. In this case, the third processing apparatus 1 (1#3) may process the film CF so that a curvature of radius of the surface of the film CF is smaller than a predetermined rate. The third processing apparatus 1 (1#3) may process the film CF so as to reduce or eliminate the fine irregularities on the surface of the film CF (specifically, the fine irregularities distributed at a pitch shorter than a pitch of an undulation of the entire surface of the film CF).

### (4-2) Second Modified Example

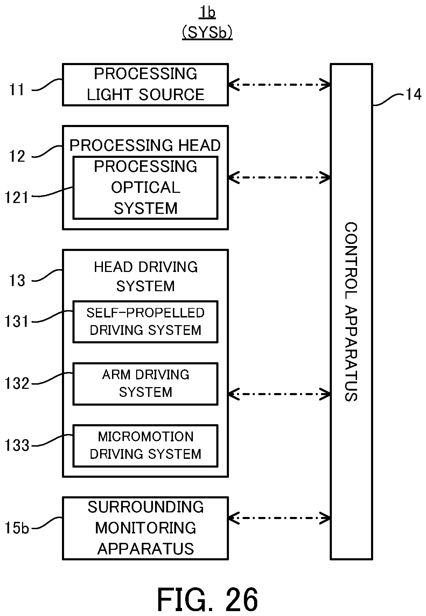

Next, a second modified example of the processing system SYS will be described. Incidentally, in the below-described description, the processing system SYS in the second modified example is referred to as a "processing system SYSb". The processing system SYSb in the second modified example is different from the above-described processing system SYS or SYSa in that the processing system SYSb includes a processing apparatus 1b instead of the processing apparatus 1. Other feature of the processing system SYSb may be the same as other feature of the processing system SYS or SYSa. Therefore, in the below-described description, a configuration of the processing apparatus 1b in the second modified example will be described with reference to FIG. 26. FIG. 26 is a block diagram that illustrates the configuration of the processing apparatus 1b in the second modified example.

As illustrated in FIG. 26, the processing apparatus 1b in the second modified example is different from the above-described processing apparatus 1 in that the processing apparatus 1b further includes a surrounding monitoring apparatus 15b. Other feature of the processing apparatus 1b may be the same as other feature of the processing apparatus 1.

The surrounding monitoring apparatus 15b is an apparatus that is configured to monitor a situation around the processing apparatus 1. For example, the surrounding monitoring apparatus 15b may include an object detection apparatus that is configured to detect an object existing around the processing apparatus 1. At least one of the workpiece W, another processing apparatus 1, the measurement apparatus 2, and another obstacle is one example of the object existing around one processing apparatus 1. At least one of a 3D scanner, an imaging apparatus, a radar, and a LiDAR (Light Detection and Ranging) is one example of the surrounding monitoring apparatus 15b.

When the processing apparatus 1 moves along the target movement route TR, the processing apparatus 1 may perform a SLAM (Simultaneous Localization and Mapping) movement by using a monitored result by the surrounding monitoring apparatus 15b. Specifically, the processing apparatus 1 may estimate the position of the processing apparatus 1 itself based on the monitored result by the surrounding monitoring apparatus 15b. Furthermore, the processing apparatus 1 may reflect the monitored result by the surrounding monitoring apparatus 15b in the map information generated by the control server 4. For example, the processing apparatus 1 may update the map information so that the map information generated by the control server 4 includes information related to an object that is detected by the surrounding monitoring apparatus 15b as the object existing around the processing apparatus 1. Therefore, in a case where the SLAM movement is performed, the processing apparatus 1 may acquire the map information from the control server 4 and update the acquired map information. Then, the processing apparatus 1 may move along the target movement route TR based on an estimated result of the position of the processing apparatus 1 itself and the updated map information. In this case, the processing apparatus 1 can move with relatively high accuracy, even in a case where the position measuring apparatus 3 does not measure the position of the processing apparatus 1 in the process of moving the processing apparatus 1 along the target movement route TR. Alternatively, the processing apparatus 1 can move with relatively high accuracy, even in a case where the processing apparatus 1 moves out of the measurement field of view of the position measuring apparatus 3 in the process of moving the processing apparatus 1 along the target movement route TR. Alternatively, the processing apparatus 1 can move with relatively high accuracy, even in a case where the processing apparatus 1 is positioned in a blind spot for the measurement field of view of the position measuring apparatus 3 in the process of moving the processing apparatus 1 along the target movement route TR.

The processing apparatus 1 may transmit information related to the monitored result by the surrounding monitoring apparatus 15b to the control server 4. The control server 4 may reflect the monitored result by the surrounding monitoring apparatus 15b in the map information. For example, the control server 4 may update the map information so that the map information includes the information related to the objects that is detected by the surrounding monitoring apparatus 15b as the object existing around the processing apparatus 1. Then, the control server 4 may calculate the target movement route TR based on the updated map information. Namely, the control server 4 may generate the processing control information (furthermore, the measurement control information) including the target movement route TR based on the updated map information.

In a case where the processing apparatus 1 includes a plurality of different types of surrounding monitoring apparatuses 15b, the processing apparatus 1 may select at least one monitored result whose reliability is high from among a plurality of monitored result by the plurality of different types of surrounding monitoring apparatuses 15b, and perform the SLAM movement based on the at least one selected monitored result. The control server 4 may select at least one monitored result whose reliability is high from among the plurality of monitored result by the plurality of different types of surrounding monitoring apparatuses 15b, and update the map information (namely, calculate the target movement route TR) based on the at least one selected monitored result. As one example, in a case where the processing apparatus 1 includes the 3D scanner, the imaging apparatus, and the LiDAR as the plurality of different types of surrounding monitoring apparatuses 15b, the reliability of the monitored result by the LiDAR is the highest, the reliability of the monitored result by the imaging apparatus is the second highest, and the reliability of the monitored result by the 3D scan is the third highest. In this case, the processing apparatus 1 may perform the SLAM movement by using the monitored result by the LiDAR, as a general rule. In a case where the monitored result by the LiDAR is not available, the processing apparatus 1 may perform the SLAM movement by using the monitored result by the imaging apparatus. In a case where the monitored result by the imaging apparatus is not available, the processing apparatus 1 may perform the SLAM movement by using the monitored result by 3D scan. The control server 4 may update the map information by using the monitored result by the LiDAR, as a general rule. In a case where the monitored result by the LiDAR is not available, the control server 4 may update the map information by using the monitored result by the imaging apparatus. In a case where the monitored result by the imaging apparatus is not available, the control server 4 may update the map information by using the monitored result by 3D scan.

Incidentally, in the above-described description, the processing apparatus 1b includes the surrounding monitoring apparatus 15b, however, the measurement apparatus 2 may include the surrounding monitoring apparatus 15b. In this case, the surrounding monitoring apparatus 15b of the measurement apparatus 2 may monitor a situation around the measurement apparatus 2. When the measurement apparatus 2 moves along the target movement route TR, the measurement apparatus 2 may perform the SLAM movement by using the measured result by the surrounding monitoring apparatus 15b. The control server 4 may update the map information so that the map information includes information related to an object detected by the surrounding monitoring apparatus 15b as an object existing around the measurement apparatus 2.

Moreover, in a case where the processing apparatus 1b (alternatively, the measurement apparatus 2) includes the imaging apparatus as the surrounding monitoring apparatus 15b, an image generated by the imaging apparatus (namely, a imaged result by the imaging apparatus) may be used for a maintenance work by the operator (for example, the user of the processing system SYS), in addition to or instead of being used for the SLAM movement as described above. For example, in a case where the workpiece W is the airplane, the image generated by the imaging apparatus may be used for a maintenance work of the airplane by the operator.

Alternatively, the processing system SYSb may include the imaging apparatus, in addition to or instead of the processing apparatus 1b (alternatively, the measurement apparatus 2) including the imaging apparatus as the surrounding monitoring apparatus 15b. For example, the processing system SYSb may include the imaging apparatus that images the workpiece W from a position from which the workpiece W can be viewed overhead. Even in this case, the image generated by the imaging apparatus may be used for the maintenance work by the operator (for example, the user of the processing system SYSb).

In a case where the processing system SYSb includes the imaging apparatus, the imaging apparatus may be used as the position measuring apparatus 3 that is configured to measure the position of the workpiece W (furthermore, the position of each of the processing apparatus 1 and the measurement apparatus 2). Namely, the processing system SYSb may include the imaging apparatus that is configured to serve as the position measuring apparatus 3. For example, the processing system SYSb may include a monocular camera or a stereo camera as the imaging apparatus that is configured to serve as the position measuring apparatus 3. Even in this case, the control server 4 is still capable of calculating the position of the measuring target object (namely, at least one of the workpiece W, the processing apparatus 1, and the measurement apparatuses 2) based on the image generated by the imaging apparatus. Therefore, the processing system SYSb can appropriately perform the processing and measurement operations described above.

### (4-3) Third Modified Example

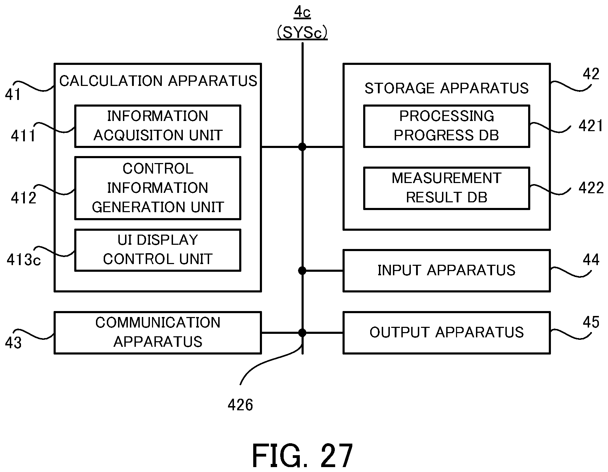

Next, a third modified example of the processing system SY will be described. Incidentally, in the below-described description, the processing system SYS in the third modified example is referred to as a "processing system SYSc". The processing system SYSc in the third modified example is different from the above-described processing system SYS, SYSa, or SYSb in that the processing system SYSc includes a control server 4c instead of the control server 4. Other feature of the processing system SYSc may be the same as other feature of the processing system SYS, SYSa or SYSb. Therefore, in the below-described description, a configuration of the control server 4c in the third modified example will be described with reference to FIG. 27. FIG. 27 is a block diagram that illustrates the configuration of the control server 4c in the third modified example.

As illustrated in FIG. 27, the control server 4c in the third modified example is different from the above-described control server 4 in that a UI (User Interface) display control unit 413c is implemented in the calculation apparatus 41. Other feature of the control server 4c may be the same as other feature of the control server 4.

The UI display control unit 413c controls the display apparatus, which is one example of the output apparatus 45, to display a route setting UI that is operatable by the operator (for example, the user of the processing system SYSc) to set the target movement route TR. In this case, the operator may set the target movement route TR by using the input apparatus 44 to operate the route setting UI. Namely, in the third modified example, the target movement route TR may be automatically calculated by the control information generation unit 412, and may be set manually by the operator.

For example, the operator may set the above-described movement start position MS (see FIG. 17) by using the route setting UI. Namely, the operator may input information related to the movement start position MS to the control server 4 by using the route setting UI. For example, the operator may set the above-described movement end position ME (see FIG. 17) by using the route setting UI. Namely, the operator may input information related to the movement end position ME to the control server 4 by using the route setting UI. For example, the operator may set the above-described processing start position PS (see FIG. 17) by using the route setting UI. Namely, the operator may input information related to the processing start position PS to the control server 4 by using the route setting UI. For example, the operator may set the above-described waiting position WP (see FIG. 17) by using the route setting UI. Namely, the operator may input information related to the waiting position WP to the control server 4 by using the route setting UI.

The control information generation unit 412 of the control server 4 may calculate the target movement route TR based on the information set by the operator. For example, the control information generation unit 412 may calculate the target movement route TR whose start point is set to be the movement start position MS set by the operator. For example, the control information generation unit 412 may calculate the target movement route TR whose end point is set to be the movement end position ME set by the operator. As a result, the control information generation unit 412 can calculate the target movement route that reflects the operator's wishes.

The control information generation unit 412 may calculate a plurality of different movement routes as candidates for the target movement route TR. In this case, the UI display control unit 413c may control the display apparatus, which is one example of the output apparatus 45, to display the route setting UI including a screen that allows the operator to select one of the plurality of different movement routes as the target movement route TR. The operator may select one of the plurality of different movement routes as the target movement route TR. The control information generation unit 412 may generate the processing control information or the measurement control information that includes the target movement route TR selected by the operator. As a result, the control information generation unit 412 can calculate the target movement route TR that reflects the operator's wishes.

The UI display control unit 413c may control the display apparatus, which is one example of the output apparatus 45, to display the route setting UI including a screen that displays the calculated target movement route TR. For example, the UI display control unit 413c may control the display apparatus, which is one example of the output apparatus 45, to display the route setting UI including the screen that displays the target movement route TR in a three-dimensional space corresponding to the reference coordinate system (namely, displaying it three-dimensionally). For example, the UI display control unit 413c may control the display apparatus, which is one example of the output apparatus 45, to display the route setting UI including the screen that displays the target movement route TR in a two-dimensional plane that is acquired by projecting the three-dimensional space corresponding to the reference coordinate system onto a predetermined plane (for example, an XY plane). As a result, the operator can intuitively recognize the target movement route TR.

The UI display control unit 413c may control the display apparatus, which is one example of the output apparatus 45, to display the route setting UI including a screen that allows the operator to set an entry prohibited area that prohibits the processing apparatus 1 or the measurement apparatus 2 from entering thereto. The operator may set the entry prohibited area by using the route setting UI. The control information generation unit 412 may calculate the target movement route TR that does not pass through (namely, avoids) the entry prohibited area set by the operator. As a result, the control information generation unit 412 can calculate the target movement route TR that reflects the operator's wishes.

The UI display control unit 413c may control the display apparatus, which is one example of the output apparatus 45, to display information related to the processing apparatus 1 in addition to or instead of displaying the above-described route setting GUI. For example, the UI display control unit 413c may display information related to a current position of the processing apparatus 1. For example, the UI display control unit 413c may display information related to a time required for the processing apparatus 1 to move along the target movement route TR. For example, the UI display control unit 413c may display information stored in the processing information DB 421. As a result, the operator can appropriately recognize a status of the processing apparatus 1.

The UI display control unit 413c may control the display apparatus, which is one example of the output apparatus 45, to display information related to the measurement apparatus 2 in addition to or instead of displaying the above-described route setting GUI. For example, the UI display control unit 413c may display information related to a current position of the measurement apparatus 2. For example, the UI display control unit 413c may display information related to a time required for the measurement apparatus 2 to move along the target movement route TR. For example, the UI display control unit 413c may display information stored in the measurement information DB 422. As a measured result, the operator (for example, the user of the processing system SYS) can appropriately recognize a status of the measurement apparatus 2.

In a case where the processing system SYS includes the imaging apparatus that is configured to image the workpiece W as described in the second modified example, the UI display control unit 413c may control the display apparatus, which is one example of the output apparatus 45, to display an image of the workpiece W generated by the imaging apparatus. In this case, the UI display control unit 413c may superimpose information related to the workpiece W on the image of the workpiece W. For example, the UI display control unit 413c may superimpose information related to the workpiece W stored in at least one of the processing information DB 421 and the measurement information DB 422 on the image of the workpiece W. At least one of the information related to the processing completion area of the workpiece W in which the processing apparatus 1 has completed the processing, the information related to the processing uncompleted area of the workpiece W in which the processing apparatus 1 has not yet completed the processing, the information related to the measurement completion area of the workpiece W in which the measurement apparatus 2 has completed the measurement, the information related to the measurement uncompleted area of the workpiece W in which the measurement apparatus 2 has not yet completed the measurement, the information related to the non-processing area of the workpiece W which should not be processed by the processing apparatus 1, and the information related to the processing defective area of the workpiece W on which the processing is determined not to be performed appropriately is one example of the information related to the workpiece W stored in at least one of the processing information DB 421 and the measurement information DB 422. As a result, the operator can appropriately recognize a status of the workpiece W.

### (4-4) Other Modified Example

In the above-described description, the head driving system 13 of the processing apparatus 1 includes the self-propelled driving system 131 that is configured to move by itself on the support surface SS. However, the head driving system 13 may include a flying driving system such as a drone that is configured to move in a three-dimensional space, in addition to or instead of the self-propelled driving system 131. The flying driving system is a driving system that is configured to fly. The flying driving system is a driving system that moves the arm driving system 132, the micromotion driving system 133, and the processing head 12 by flying together with the arm driving system 132, the micromotion driving system 133, and the processing head 12. Incidentally, the head driving system 23 of the measurement apparatus 2 may also include a flying driving system that moves the arm driving system 232, the micromotion driving system 233, and the measurement head 22 by flying together with the arm driving system 232, the micromotion driving system 233, and the measurement head 22, in addition to or instead of the self-propelled driving system 231. Incidentally, the head driving system 13 may include a three-dimensional driving mechanism that moves the arm driving system 132, the micromotion driving system 133, and the processing head 12 (the arm driving system 232, the micromotion driving system 233, and the measurement head 22) in the three-dimensional space in addition to or instead of the flying driving system that is configured to move in the three-dimensional space. The head driving system 23 may include a three-dimensional driving mechanism that moves the arm driving system 232, the micromotion driving system 233, and the measurement head 22 in the three-dimensional space, in addition to or instead of the flying driving system that is configured to move in the three-dimensional space. A gantry stage is one example of the three-dimensional driving mechanism, for example.

In the above-described description, the processing apparatus 1 processes the workpiece W and the measurement apparatus 2 measures the workpiece W. However, the processing apparatus 1 may process the workpiece W and may measure the workpiece W. For example, the processing apparatus 1 may process the workpiece W by irradiating the workpiece W with the processing light EL through the processing optical system 121 and may measure the workpiece W by irradiating the workpiece W with the measurement light ML through the same processing optical system 121. Similarly, the processing apparatus 1 may measure the workpiece W and may process the workpiece W. For example, the measurement apparatus 2 may measure the workpiece W by irradiating the workpiece W with the measurement light ML through an non-illustrated measurement optical system of the measurement unit 221, and may process the workpiece W by irradiating the workpiece W with the processing light EL through the same measurement optical system.

In this case, the processing system SYS may include: the processing apparatus 1 that is configured to process the workpiece W and to measure the workpiece W; and the measurement apparatus 2 that is configured to process the workpiece W and to measure the workpiece W. The processing system SYS may include: the processing apparatus 1 that is configured to process the workpiece W and to measure the workpiece W; and the measurement apparatus 2 that is configured to measure the workpiece W but that is not configured to process the workpiece W. The processing system SYS may include: the processing apparatus 1 that is configured to process the workpiece W but that is not configured to measure the workpiece W; and the measurement apparatus 2 that is configured to process the workpiece W and to measure the workpiece W.

In the above-described description, the control server 4 calculates the target movement route TR of each of the processing head 12 and the measurement head 22. However, an apparatus that is different from the control server 4 may calculate the target movement route TR of at least one of the processing head 12 and the measurement head 22. For example, the control apparatus 14 of the processing apparatus 1 may calculate the target movement route TR of at least one of the processing head 12 and the measurement head 22. For example, the control apparatus 24 of the measurement apparatus 2 may calculate the target movement route TR of at least one of the processing head 12 and the measurement head 22.

The processing system SYS may include a drawing apparatus that draws a line marker, which indicates the target movement route TR, on the support surface SS. For example, the processing system SYS may include, as the drawing apparatus, a projection apparatus that projects the line marker, which indicates the target movement route TR, on the support surface SS. The processing system SYS may include, as the drawing apparatus, a laser irradiation apparatus that draws the line marker, which indicates the target movement route TR, on the support surface SS with laser light. Each of the processing apparatus 1 and the measurement apparatus 2 may move along the line marker projected on the support surface SS (namely, along the target movement route TR). For example, the processing apparatus 1 may include an imaging apparatus that images the line markers projected on the support surface SS, and may move based on an image generated by the imaging apparatus so that the self-propelled driving system 131 may move along the line marker. For example, the measurement apparatus 2 may include an imaging apparatus that images the line markers projected on the support surface SS, and may move based on an image generated by the imaging apparatus so that the self-propelled driving system 231 may move along the line marker. In this case, the control server 4 may not transmit information related to the target movement route TR to each of the processing apparatus 1 and the measurement apparatus 2.

The processing system SYS may include a movement restriction apparatus that restricts the movement of each of the processing apparatus 1 and the measurement apparatus 2. For example, the processing system SYS may include, as the movement restriction apparatus, an infrared transmission and reception apparatus that is configured to set entry prohibited area, which prohibits the processing apparatus 1 and the measurement apparatus 2 from entering thereto, by using infrared light. In this case, the processing system SYS can appropriately prevent the processing apparatus 1 and the measurement apparatus 2 from entering the entry prohibited area. Incidentally, the control server 4 may switch a state of the infrared transmission and reception apparatus between an ON state where the entry prohibited area is set and an OFF state where the entry prohibited area is not set.

In the above-described description, the processing system SYS may include a holding apparatus with an end-effector that is configured to hold the workpiece W. The holding apparatus may be an apparatus that is different from the processing apparatus 1 in that the holding apparatus includes the end-effector instead of the processing head 12. The holding apparatus may be an apparatus that is different from the measurement apparatus 2 in that the holding apparatus includes the end-effector instead of the measurement head 22. The end-effector may include a robot hand that is configured to grip the workpiece W. The end effector may include a suction mechanism that is configured to suction the workpiece W.

In the above-described description, the processing system SYS processes the workpiece W by irradiating the workpiece W with the processing light EL. However, the processing system SYS may process the workpiece W by irradiating the workpiece W with any energy beam (this energy beam may be referred to as a "processing beam") that is different from light. In this case, the processing system SYS may include a beam source that is configured to generate any energy beam in addition to or instead of the processing light source 11. A charged particle beam such as an electron beam, an ion beam and the like is one example of any energy beam An electromagnetic wave is another example of any energy beam.

The processing apparatus 1 may process the workpiece W by irradiating the workpiece W with a single processing beam (for example, single processing light EL). Alternatively, the processing apparatus 1 may process the workpiece W by irradiating the workpiece W with a plurality of processing beams (for example, a plurality of processing lights EL) simultaneously. In a case where the workpiece W is irradiated with the plurality of processing beams simultaneously, the processing apparatus 1 may form a plurality of grooves forming the above-described riblet structure by the plurality of processing beams, respectively.

In a case where the riblet structure is formed by using the plurality of processing beams, the control server 4 may calculate a pitch of the grooves that should be formed on the surface of the workpiece W by performing a fluid analysis for analyzing a flow of the fluid on the surface of the workpiece W. The processing apparatus 1 may form the ribbed structure by irradiating different positions on the surface of the workpiece W with the plurality of processing beams, respectively, based on the pitch calculated by the control server 4. Even in a case where the pitch of the grooves varies based on the position on the surface of the workpiece W, a number of aperture of the processing optical system 121 of the processing apparatus 1 may be constant.

Alternatively, the processing apparatus 1 may form the riblet structure by using interference light generated by an interference between at least two of the plurality of processing beams. For example, the processing apparatus 1 may form an interference fringe on the surface of the workpiece W by using the interference light to thereby remove a part of the workpiece W that is irradiated with a bright part of the interference fringe. As a result, the riblet structure whose pitch is based on the interference fringe is formed.

### (5) Supplementary Note

Regarding the above-described example embodiment, below described Supplementary notes are further disclosed.

### [Supplementary Note 1]

A processing system that processes an object, wherein
the processing system includes:
a processing apparatus that is configured to process the object by irradiating the object with a processing beam;
a measuring apparatus that is configured to measure a position of the object and that is configured to measure a position of the processing apparatus; and
a control apparatus that is configured to control the processing apparatus,
the processing apparatus includes:
   a first movement apparatus that is configured to change a position of a processing head that emits the processing beam; and
   a second movement apparatus on which the first movement apparatus is mounted and which is configured to move together with the first movement apparatus,
   the control apparatus controls a movement due to the second movement apparatus based on a measuring result by the measurement apparatus and model information related to a shape of the object.

### [Supplementary Note 2]

The processing system according to Supplementary Note 1, wherein
the control apparatus calculates, based on the measuring result and the model information, a target movement route that is a movement route from a movement start position at which the movement due to the second movement apparatus is started to a first target position, and
the second movement apparatus is configured to move along the target movement route.

### [Supplementary Note 3]

The processing system according to Supplementary Note 2, wherein
the second movement apparatus moves the processing head along the target movement route until a distance between the processing head and the first target position is shorter than a predetermined distance,
at least one of the first movement apparatus and the second movement apparatus moves the processing head to the first target position based on the measuring result by the measuring apparatus after the distance between the processing head and the first target position is shorter than the predetermined distance.

### [Supplementary Note 4]

The processing system according to any one of Supplementary Notes 1 to 3, wherein
the second movement apparatus
moves the processing apparatus with a first movement accuracy until a distance between the processing apparatus and a movement end position at which the movement due to the second movement apparatus is ended is shorter than a predetermined distance, and
moves the processing apparatus with a second movement accuracy, which is higher than the first movement accuracy, after the distance between the processing apparatus and the movement end position is shorter than the predetermined distance.

### [Supplementary Note 5]

The processing system according to any one of Supplementary Notes 1 to 4, wherein
the processing apparatus includes a monitoring apparatus that is configured to monitor a situation around the processing apparatus,
the control apparatus calculates, based on the measuring result, the model information, and a monitored result by the monitoring apparatus, a target movement route that is a movement route from a movement start position at which the movement due to the second movement apparatus is started to a first target position.

### [Supplementary Note 6]

The processing system according to any one of Supplementary Notes 1 to 5, wherein
the control apparatus
acquires, as the measuring result, position information related to at least a position of a first part of the object,
performs a fitting processing that positions the first part of a three-dimensional model of the object, which has a shape indicated by the model information, at a position of the first part of the object in a coordinate system of the position information to generate object position information that indicates a position of the first part of the object and a position of a second part, which is different from the first part, of the object in the coordinate system, and
calculates, based on the object position information, a target movement route that is a movement route from a movement start position at which the movement due to the second movement apparatus is started to a first target position.

### [Supplementary Note 7]

The processing system according to Supplementary Note 2 or 3, wherein
the movement start position is input based on the measuring result by the measuring apparatus.

### [Supplementary Note 8]

The processing system according to Supplementary Note 2, 3, or 7, wherein
the movement start position is input by an operator.

### [Supplementary Note 9]

The processing system according to Supplementary Note 2, 3, 7, or 8, wherein
the first movement apparatus is configured to move the position of the processing head from the first target position to a second target position,
a distance between the second target position and a processing start position at which the processing by the processing apparatus is started is shorter than a distance between the first target position and the processing start position, or the processing start position is the second target position.

### [Supplementary Note 10]

The processing system according to Supplementary Note 9, wherein
at least one of the movement start position and the processing start position is input by an operator.

### [Supplementary Note 11]

The processing system according to Supplementary Note 9 or 10, wherein
at least one of the first target position and the second target position is input by an operator.

### [Supplementary Note 12]

The processing system according to any one of Supplementary Notes 9 to 11, wherein
the control apparatus:
acquires the first target position based on at least one of the movement start position, the processing start position, and the model information; and
acquires the second target position based on at least one of the movement start position, the processing start position, and the model information.

### [Supplementary Note 13]

The processing system according to any one of Supplementary Notes 9 to 12, wherein
the second target position is the processing start position, and
the first target position is positioned between the movement start position and the processing start position.

### [Supplementary Note 14]

The processing system according to any one of Supplementary Notes 1 to 13, wherein
the first movement apparatus is configured to move the position of the processing head from a first target position to a second target position,
a distance between the second target position and a processing start position at which the processing by the processing apparatus is started is shorter than a distance between the first target position and the processing start position, or the processing start position is the second target position.

### [Supplementary Note 15]

The processing system according to any one of Supplementary Notes 1 to 14, wherein
the measuring apparatus is configured to measure the position of the object from a position that is away from the object and the processing apparatus, and
the control apparatus acquires, as the measuring result, position information of the object from the measuring apparatus.

### [Supplementary Note 16]

The processing system according to any one of Supplementary Notes 1 to 15, wherein
the measuring apparatus is configured to measure the position of each of a plurality of parts of the object.

### [Supplementary Note 17]

The processing system according to any one of Supplementary Notes 1 to 16, wherein
the processing system includes a plurality of measuring apparatuses, and
a first measurement apparatus of the plurality of measuring apparatuses is configured to measure a position of a second measurement apparatus of the plurality of measuring apparatuses.

### [Supplementary Note 18]

The processing system according to any one of Supplementary Notes 1 to 17, wherein
an amount of change in the position of the processing head by the second movement apparatus is larger than an amount of change in the position of the processing head by the first movement apparatus.

### [Supplementary Note 19]

The processing system according to any one of Supplementary Notes 1 to 18, wherein
the object processed by the processing apparatus includes at least one of an airplane, a windmill, a turbine for an engine, and a turbine for a power generation.

### [Supplementary Note 20]

The processing system according to any one of Supplementary Notes 1 to 19, wherein
the second movement apparatus is configured to move the processing head in a first axis direction and a second axis direction that intersect a gravity direction, and
the first movement apparatus is configured to move the processing head in the first axis direction, the second axis direction, and a third axis direction that intersects the first and second axis directions.

### [Supplementary Note 21]

The processing system according to Supplementary Note 20, wherein
the first movement apparatus is configured to move the processing head in a first rotational direction around a rotational axis along the first axis direction, a second rotational direction around a rotational axis along the second axis direction, and a third rotational direction around a rotational axis along the third axis direction.

### [Supplementary Note 22]

A processing system that processes an object, wherein
the processing system includes:
a processing apparatus that is configured to process the object by irradiating the object with a processing beam; and
a measurement apparatus including a measurement head that is configured to measure the object that is expected to be processed by the processing apparatus or the object that has been processed by the processing apparatus,
the processing apparatus includes:
   a first movement apparatus that is configured to change a position of a processing head that emits the processing beam; and
   a second movement apparatus on which the first movement apparatus is mounted and which is configured to move together with the first movement apparatus,
   the measurement apparatus includes:
      a third movement apparatus that is configured to change a position of the measurement head; and
      a fourth movement apparatus on which the third movement apparatus is mounted and which is configured to move together with the third movement apparatus.

### [Supplementary Note 23]

The processing system according to Supplementary Note 22, wherein
the measurement apparatus measures a first part of the object, and
the processing apparatus processes the first part by irradiating the first part with the processing beam after the measurement apparatus measures the first part.

### [Supplementary Note 24]

The processing system according to Supplementary Note 22 or 23, wherein
the processing apparatus processes a second part by irradiating the second part of the object with the processing beam after, and
the measurement apparatus measures the second part after the processing apparatus processes the second part.

### [Supplementary Note 25]

The processing system according to any one of Supplementary Notes 22 to 24, wherein
the processing apparatus processes a third part by irradiating the third part of the object with the processing beam after, and
the measurement apparatus measures the third part in at least a part of a period during which the processing apparatus processes the third part.

### [Supplementary Note 26]

The processing system according to Supplementary Note 22, wherein
the measurement apparatus measures a first part of the object at a first time, and measures a second part of the object at a second time that is after the first time, and
the processing apparatus processes the first part at the second time by using a measured result of the first part by the measurement apparatus.

### [Supplementary Note 27]

The processing system according to Supplementary Note 22, wherein
the processing apparatus processes a first part of the object at a first time, and processes a second part of the object at a second time that is after the first time, and
the measurement apparatus measures the first part, which has been processed by the processing apparatus, at the second time.

### [Supplementary Note 28]

The processing system according to any one of Supplementary Notes 22 to 27, wherein
the processing system includes a plurality of processing apparatuses.

### [Supplementary Note 29]

The processing system according to Supplementary Note 28, wherein
a first processing apparatus of the plurality of processing apparatuses processes a fourth part by irradiating the fourth part of the object with the processing beam, and
a second processing apparatus, which is different from the first processing apparatus, of the plurality of processing apparatuses processes the fourth part by irradiating the fourth part with the processing beam after the first processing apparatus processes the fourth part.

### [Supplementary Note 30]

The processing system according to Supplementary Note 29, wherein
the first processing apparatus processes the fourth part with a first processing accuracy, and
the second processing apparatus processes the fourth part with a second processing accuracy that is higher than the first processing accuracy.

### [Supplementary Note 31]

The processing system according to Supplementary Note 29, wherein
the first processing apparatus processes the fourth part so that a flatness of a surface of the fourth part is reduced than before processing, and
the second processing apparatus processes the fourth part to form a desired structure on the fourth part.

### [Supplementary Note 32]

The processing system according to any one of Supplementary Notes 22 to 31, wherein
the processing system includes a plurality of measurement apparatuses.

### [Supplementary Note 33]

The processing system according to Supplementary Note 32, wherein
a first measurement apparatus of the plurality of measurement apparatuses measures a fifth part of the object and
a second measurement apparatus, which is different from the first measurement apparatus, of the plurality of measurement apparatuses measures the fifth part after the first measurement apparatus measures the fifth part.

### [Supplementary Note 34]

The processing system according to any one of Supplementary Notes 22 to 33, wherein
the processing system includes a control apparatus that controls at least one of the processing apparatus and the measurement apparatus.

### [Supplementary Note 35]

The processing system according to Supplementary Note 34, wherein
the control apparatus controls, based on a measured result of the object by the measurement apparatus, the processing apparatus to process the object.

### [Supplementary Note 36]

The processing system according to Supplementary Note 34 or 35, wherein
the control apparatus determines, based on a measured result of the object by the measurement apparatus, a processing performed by the processing apparatus is appropriate.

### [Supplementary Note 37]

The processing system according to Supplementary Note 36, wherein
the control apparatus controls the processing apparatus to process the object in a case where it is determined that the processing performed by the processing apparatus is not appropriate.

### [Supplementary Note 38]

The processing system according to any one of Supplementary Notes 34 to 37, wherein
the processing system includes a measuring apparatus that is configured to measure a position of the object and that is configured to measure a position of the processing apparatus,
the control apparatus calculates, based on a measuring result by the measuring apparatus, a first target movement route that is a movement route from a first movement start position at which the movement due to the second movement apparatus is started to a first target position, and
the second movement apparatus is configured to move along the first target movement route.

### [Supplementary Note 39]

The processing system according to Supplementary Note 38, wherein
the measuring apparatus is further configured to measure a position of the measurement apparatus,
the control apparatus calculates, based on the measuring result, a second target movement route that is a movement route from a second movement start position at which the movement due to the fourth movement apparatus is started to a second target position, and
the fourth movement apparatus is configured to move along the second target movement route.

### [Supplementary Note 40]

The processing system according to any one of Supplementary Notes 22 to 39, wherein
an amount of change in the position of the processing head by the second movement apparatus is larger than an amount of change in the position of the processing head by the first movement apparatus, and
an amount of change in the position of the measurement head by the fourth movement apparatus is larger than an amount of change in the position of the measurement head by the third movement apparatus.

### [Supplementary Note 41]

The processing system according to any one of Supplementary Notes 34 to 39, wherein
the object includes a base material and a film that is formed on the base material, and
the control apparatus calculates a thickness of the film based on a measures result of the object by the measurement apparatus, and controls the processing apparatus based on the calculated thickness of the film.

### [Supplementary Note 42]

The processing system according to Supplementary Note 41, wherein
the control apparatus determines, based on the calculated thickness of the film, a non-processing part of the object that should not be processed by the processing apparatus, and controls the processing apparatus not to process the non-processing part.

### [Supplementary Note 43]

The processing system according to Supplementary Note 41 or 42, wherein
the processing apparatus includes an optical element that is configured to change a converged position of the processing beam in a direction intersecting a surface of the object, and
the control apparatus controls the optical element based on the calculated thickness of the film.

### [Supplementary Note 44]

The processing system according to any one of Supplementary Notes 22 to 43, wherein
the object processed by the processing apparatus includes at least one of an airplane, a windmill, a turbine for an engine, and a turbine for a power generation.

### [Supplementary Note 45]

The processing system according to any one of Supplementary Notes 22 to 44, wherein
the second movement apparatus is configured to move the processing head in a first axis direction and a second axis direction that intersect a gravity direction,
the first movement apparatus is configured to move the processing head in the first axis direction, the second axis direction, and a third axis direction that intersects the first and second axis directions.
the fourth movement apparatus is configured to move the measurement head in the first axis direction and the second axis direction, and
the third movement apparatus is configured to move the measurement head in the first axis direction, the second axis direction, and the third axis direction.

### [Supplementary Note 46]

The processing system according to Supplementary Note 45, wherein
the first movement apparatus is configured to move the processing head in a first rotational direction around a rotational axis along the first axis direction, a second rotational direction around a rotational axis along the second axis direction, and a third rotational direction around a rotational axis along the third axis direction, and
the third movement apparatus is configured to move the measurement head in the first rotational direction, the second rotational direction, and the third rotational direction.

### [Supplementary Note 47]

A processing system that processes an object, wherein
the processing system includes:
a processing apparatus that is configured to process the object by irradiating the object with a processing beam;
a measuring apparatus that is configured to measure a position of the object; and
a control apparatus that is configured to control the processing apparatus,
the processing apparatus includes:
   a first movement apparatus that is configured to change a position of a processing head that emits the processing beam; and
   a second movement apparatus on which the first movement apparatus is mounted and which is configured to move on a first plane,
   the control apparatus controls a movement on the first plane due to the second movement apparatus based on a measuring result by the measuring apparatus and model information related to a shape of the object.

### [Supplementary Note 48]

A processing system that processes an object, wherein
the processing system includes:
a processing apparatus that is configured to process the object by irradiating the object with a processing beam;
an imaging apparatus that is configured to image the object; and
a control apparatus that is configured to control the processing apparatus,
the processing apparatus includes:
   a first movement apparatus that is configured to change a position of a processing head that emits the processing beam; and
   a second movement apparatus on which the first movement apparatus is mounted and which is configured to move on a first plane,
   the control apparatus controls a movement on the first plane due to the second movement apparatus based on an imaged result by the imaging apparatus and model information related to a shape of the object.

### [Supplementary Note 49]

A measurement system including:
a measurement apparatus including a measurement head that is configured to measure a position or a shape of an object;
a measuring apparatus that is configured to measure a position of the object and that is configured to measure a position of the measurement apparatus; and
a control apparatus that is configured to control the measurement apparatus,
wherein
the measurement apparatus includes:
   a first movement apparatus that is configured to change a position of the measurement head; and
   a second movement apparatus on which the first movement apparatus is mounted and which is configured to move on a first plane,
   the control apparatus controls a movement on the first plane due to the second movement apparatus based on a measuring result by the measuring apparatus and model information related to a shape of the object.

### [Supplementary Note 50]

A measurement system including:
a measurement apparatus including a measurement head that is configured to measure a position or a shape of an object;
a measuring apparatus that is configured to measure a position of the object; and
a control apparatus that is configured to control the measurement apparatus,
wherein
the measurement apparatus includes:
   a first movement apparatus that is configured to change a position of the measurement head; and
   a second movement apparatus on which the first movement apparatus is mounted and which is configured to move on a first plane,
   the control apparatus controls a movement on the first plane due to the second movement apparatus based on a measuring result by the measuring apparatus and model information related to a shape of the object.

### [Supplementary Note 51]

A measurement system including:
a measurement apparatus including a measurement head that is configured to measure a position or a shape of an object;
an imaging apparatus that is configured to image the object; and
a control apparatus that is configured to control the measurement apparatus,
wherein
the measurement apparatus includes:
   a first movement apparatus that is configured to change a position of the measurement head; and
   a second movement apparatus on which the first movement apparatus is mounted and which is configured to move on a first plane,
   the control apparatus controls a movement on the first plane due to the second movement apparatus based on an imaged result by the imaging apparatus and model information related to a shape of the object.

### [Supplementary Note 52]

A processing system that processes an object, wherein
the processing system includes:
a processing apparatus that is configured to process the object by irradiating the object with a processing beam;
a measuring apparatus that is configured to measure a position of the object; and
a control apparatus that is configured to control the processing apparatus,
the processing apparatus includes:
   a first movement apparatus that is configured to change a position of a processing head that emits the processing beam; and
   a second movement apparatus on which the first movement apparatus is mounted and which is configured to move on a first plane.

### [Supplementary Note 53]

A processing method that processes an object by using a processing apparatus that includes: a first movement apparatus configured to change a position of a processing head that emits a processing beam; and a second movement apparatus on which the first movement apparatus is mounted and which is configured to move together with the first movement apparatus, wherein
the processing method includes:
processing the object by irradiating the object with the processing beam from the processing head;
measuring a position of the object and that is configured to measure a position of the processing apparatus by using a measuring apparatus; and
controlling a movement due to the second movement apparatus based on a measuring result by the measurement apparatus and model information related to a shape of the object.

### [Supplementary Note 54]

A processing method that processes an object, wherein
the processing method includes:
processing the object by irradiating the object with a processing beam from a processing apparatus; and
measuring the object that is expected to be processed by the processing apparatus or the object that has been processed by the processing apparatus by using a measurement head of a measurement apparatus,
the processing apparatus includes:
   a first movement apparatus that is configured to change a position of a processing head that emits the processing beam; and
   a second movement apparatus on which the first movement apparatus is mounted and which is configured to move together with the first movement apparatus,
   the measurement apparatus includes:
      a third movement apparatus that is configured to change a position of the measurement head; and
      a fourth movement apparatus on which the third movement apparatus is mounted and which is configured to move together with the third movement apparatus.

### [Supplementary Note 55]

A processing method that processes an object by using a processing apparatus that includes: a first movement apparatus that is configured to change a position of a processing head that emits a processing beam; and a second movement apparatus on which the first movement apparatus is mounted and which is configured to move on a first plane, wherein
the processing method includes:
processing the object by irradiating the object with the processing beam from the processing head;
measuring a reference position that is a baseline for the object by using a measuring apparatus; and
controlling a movement on the first plane due to the second movement apparatus based on a measuring result by the measuring apparatus and model information related to a shape of the object.

### [Supplementary Note 56]

A processing method that processes an object by using a processing apparatus that includes: a first movement apparatus that is configured to change a position of a processing head that emits a processing beam; and a second movement apparatus on which the first movement apparatus is mounted and which is configured to move on a first plane, wherein
the processing method includes:
processing the object by irradiating the object with the processing beam from the processing head;
imaging the object by using an imaging apparatus; and
controlling a movement on the first plane due to the second movement apparatus based on an imaged result by the imaging apparatus and model information related to a shape of the object.

### [Supplementary Note 57]

A measurement method that measures an object by using a measurement apparatus that includes: a first movement apparatus that is configured to change a position of a measurement head; and a second movement apparatus on which the first movement apparatus is mounted and which is configured to move on a first plane, wherein
the measurement method includes:
measuring a position or a shape of an object by using a measurement head;
measuring a position of the object and a position of the measurement apparatus by using a measuring apparatus; and
controlling a movement on the first plane due to the second movement apparatus based on a measuring result by the measuring apparatus and model information related to a shape of the object.

### [Supplementary Note 58]

A measurement method that measures an object by using a measurement apparatus that includes: a first movement apparatus that is configured to change a position of a measurement head; and a second movement apparatus on which the first movement apparatus is mounted and which is configured to move on a first plane, wherein
the measurement method includes:
measuring a position or a shape of an object by using a measurement head;
measuring a position of the object by using a measuring apparatus; and
controlling a movement on the first plane due to the second movement apparatus based on a measuring result by the measuring apparatus and model information related to a shape of the object.

### [Supplementary Note 59]

A measurement method that measures an object by using a measurement apparatus that includes: a first movement apparatus that is configured to change a position of a measurement head; and a second movement apparatus on which the first movement apparatus is mounted and which is configured to move on a first plane, wherein
the measurement method includes:
measuring a position or a shape of an object by using a measurement head;
imaging the object by using an imaging apparatus; and
controlling a movement on the first plane due to the second movement apparatus based on an imaged result by the imaging apparatus and model information related to a shape of the object.

The features of each example embodiment described above may be appropriately combined with each other. A part of the features of each example embodiment described above may not be used. The feature of each example embodiment described above may be appropriately replaced with the feature of another example embodiment described above. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing system, a processing method, a measurement system, and a measurement method, which involve such changes, are also intended to be within the technical scope of the present invention.

### Description of Reference Codes

- 1: processing apparatus
- 12: processing head
- 13: head driving system
- 131: self-propelled driving system
- 132: arm driving system
- 14: control apparatus
- 2: measurement apparatus
- 22: measurement head
- 23: head driving system
- 231: self-propelled driving system
- 232: arm driving system
- 24: control apparatus
- 3: position measuring apparatus
- 4: control server
- EL: processing light
- W: workpiece
- SYS: processing system

## Claims

1. A processing system that processes an object, wherein
the processing system comprises:
a processing apparatus that is configured to process the object by irradiating the object with a processing beam;
a measuring apparatus that is configured to measure a position of the object and that is configured to measure a position of the processing apparatus; and
a control apparatus that is configured to control the processing apparatus,
the processing apparatus includes:
a first movement apparatus that is configured to change a position of a processing head that emits the processing beam; and
a second movement apparatus on which the first movement apparatus is mounted and which is configured to move together with the first movement apparatus,
the control apparatus controls a movement due to the second movement apparatus based on a measuring result by the measurement apparatus and model information related to a shape of the object.

2. The processing system according to claim 1, wherein
the control apparatus calculates, based on the measuring result and the model information, a target movement route that is a movement route from a movement start position at which the movement due to the second movement apparatus is started to a first target position, and
the second movement apparatus is configured to move along the target movement route.

3. The processing system according to claim 2, wherein
the second movement apparatus moves the processing head along the target movement route until a distance between the processing head and the first target position is shorter than a predetermined distance,
at least one of the first movement apparatus and the second movement apparatus moves the processing head to the first target position based on the measuring result by the measuring apparatus after the distance between the processing head and the first target position is shorter than the predetermined distance.

4. The processing system according to any one of claims 1 to 3, wherein
the second movement apparatus
moves the processing apparatus with a first movement accuracy until a distance between the processing apparatus and a movement end position at which the movement due to the second movement apparatus is ended is shorter than a predetermined distance, and
moves the processing apparatus with a second movement accuracy, which is higher than the first movement accuracy, after the distance between the processing apparatus and the movement end position is shorter than the predetermined distance.

5. The processing system according to any one of claims 1 to 4, wherein
the processing apparatus includes a monitoring apparatus that is configured to monitor a situation around the processing apparatus,
the control apparatus calculates, based on the measuring result, the model information, and a monitored result by the monitoring apparatus, a target movement route that is a movement route from a movement start position at which the movement due to the second movement apparatus is started to a first target position.

6. The processing system according to any one of claims 1 to 5, wherein
the control apparatus
acquires, as the measuring result, position information related to at least a position of a first part of the object,
performs a fitting processing that positions the first part of a three-dimensional model of the object, which has a shape indicated by the model information, at a position of the first part of the object in a coordinate system of the position information to generate object position information that indicates a position of the first part of the object and a position of a second part, which is different from the first part, of the object in the coordinate system, and
calculates, based on the object position information, a target movement route that is a movement route from a movement start position at which the movement due to the second movement apparatus is started to a first target position.

7. The processing system according to claim 2 or 3, wherein
the movement start position is input based on the measuring result by the measuring apparatus.

8. The processing system according to claim 2, 3, or 7, wherein
the movement start position is input by an operator.

9. The processing system according to claim 2, 3, 7, or 8, wherein
the first movement apparatus is configured to move the position of the processing head from the first target position to a second target position,
a distance between the second target position and a processing start position at which the processing by the processing apparatus is started is shorter than a distance between the first target position and the processing start position, or the processing start position is the second target position.

10. The processing system according to claim 9, wherein
at least one of the movement start position and the processing start position is input by an operator.

11. The processing system according to claim 9 or 10, wherein
at least one of the first target position and the second target position is input by an operator.

12. The processing system according to any one of claims 9 to 11, wherein
the control apparatus:
acquires the first target position based on at least one of the movement start position, the processing start position, and the model information; and
acquires the second target position based on at least one of the movement start position, the processing start position, and the model information.

13. The processing system according to any one of claims 9 to 12, wherein
the second target position is the processing start position, and
the first target position is positioned between the movement start position and the processing start position.

14. The processing system according to any one of claims 1 to 13, wherein
the first movement apparatus is configured to move the position of the processing head from a first target position to a second target position,
a distance between the second target position and a processing start position at which the processing by the processing apparatus is started is shorter than a distance between the first target position and the processing start position, or the processing start position is the second target position.

15. The processing system according to any one of claims 1 to 14, wherein
the measuring apparatus is configured to measure the position of the object from a position that is away from the object and the processing apparatus, and
the control apparatus acquires, as the measuring result, position information of the object from the measuring apparatus.

16. The processing system according to any one of claims 1 to 15, wherein
the measuring apparatus is configured to measure the position of each of a plurality of parts of the object.

17. The processing system according to any one of claims 1 to 16, wherein
the processing system comprises a plurality of measuring apparatuses, and
a first measurement apparatus of the plurality of measuring apparatuses is configured to measure a position of a second measurement apparatus of the plurality of measuring apparatuses.

18. The processing system according to any one of claims 1 to 17, wherein
an amount of change in the position of the processing head by the second movement apparatus is larger than an amount of change in the position of the processing head by the first movement apparatus.

19. The processing system according to any one of claims 1 to 18, wherein
the object processed by the processing apparatus includes at least one of an airplane, a windmill, a turbine for an engine, and a turbine for a power generation.

20. The processing system according to any one of claims 1 to 19, wherein
the second movement apparatus is configured to move the processing head in a first axis direction and a second axis direction that intersect a gravity direction, and
the first movement apparatus is configured to move the processing head in the first axis direction, the second axis direction, and a third axis direction that intersects the first and second axis directions.

21. The processing system according to claim 20, wherein
the first movement apparatus is configured to move the processing head in a first rotational direction around a rotational axis along the first axis direction, a second rotational direction around a rotational axis along the second axis direction, and a third rotational direction around a rotational axis along the third axis direction.

22. A processing system that processes an object, wherein
the processing system comprises:
a processing apparatus that is configured to process the object by irradiating the object with a processing beam; and
a measurement apparatus including a measurement head that is configured to measure the object that is expected to be processed by the processing apparatus or the object that has been processed by the processing apparatus,
the processing apparatus includes:
a first movement apparatus that is configured to change a position of a processing head that emits the processing beam; and
a second movement apparatus on which the first movement apparatus is mounted and which is configured to move together with the first movement apparatus,
the measurement apparatus includes:
a third movement apparatus that is configured to change a position of the measurement head; and
a fourth movement apparatus on which the third movement apparatus is mounted and which is configured to move together with the third movement apparatus.

23. The processing system according to claim 22, wherein
the measurement apparatus measures a first part of the object, and
the processing apparatus processes the first part by irradiating the first part with the processing beam after the measurement apparatus measures the first part.

24. The processing system according to claim 22 or 23, wherein
the processing apparatus processes a second part by irradiating the second part of the object with the processing beam after, and
the measurement apparatus measures the second part after the processing apparatus processes the second part.

25. The processing system according to any one of claims 22 to 24, wherein
the processing apparatus processes a third part by irradiating the third part of the object with the processing beam after, and
the measurement apparatus measures the third part in at least a part of a period during which the processing apparatus processes the third part.

26. The processing system according to claim 22, wherein
the measurement apparatus measures a first part of the object at a first time, and measures a second part of the object at a second time that is after the first time, and
the processing apparatus processes the first part at the second time by using a measured result of the first part by the measurement apparatus.

27. The processing system according to claim 22, wherein
the processing apparatus processes a first part of the object at a first time, and processes a second part of the object at a second time that is after the first time, and
the measurement apparatus measures the first part, which has been processed by the processing apparatus, at the second time.

28. The processing system according to any one of claims 22 to 27, wherein
the processing system comprises a plurality of processing apparatuses.

29. The processing system according to claim 28, wherein
a first processing apparatus of the plurality of processing apparatuses processes a fourth part by irradiating the fourth part of the object with the processing beam, and
a second processing apparatus, which is different from the first processing apparatus, of the plurality of processing apparatuses processes the fourth part by irradiating the fourth part with the processing beam after the first processing apparatus processes the fourth part.

30. The processing system according to claim 29, wherein
the first processing apparatus processes the fourth part with a first processing accuracy, and
the second processing apparatus processes the fourth part with a second processing accuracy that is higher than the first processing accuracy.

31. The processing system according to claim 29, wherein
the first processing apparatus processes the fourth part so that a flatness of a surface of the fourth part is reduced than before processing, and
the second processing apparatus processes the fourth part to form a desired structure on the fourth part.

32. The processing system according to any one of claims 22 to 31, wherein
the processing system comprises a plurality of measurement apparatuses.

33. The processing system according to claim 32, wherein
a first measurement apparatus of the plurality of measurement apparatuses measures a fifth part of the object and
a second measurement apparatus, which is different from the first measurement apparatus, of the plurality of measurement apparatuses measures the fifth part after the first measurement apparatus measures the fifth part.

34. The processing system according to any one of claims 22 to 33, wherein
the processing system comprises a control apparatus that controls at least one of the processing apparatus and the measurement apparatus.

35. The processing system according to claim 34, wherein
the control apparatus controls, based on a measured result of the object by the measurement apparatus, the processing apparatus to process the object.

36. The processing system according to claim 34 or 35, wherein
the control apparatus determines, based on a measured result of the object by the measurement apparatus, a processing performed by the processing apparatus is appropriate.

37. The processing system according to claim 36, wherein
the control apparatus controls the processing apparatus to process the object in a case where it is determined that the processing performed by the processing apparatus is not appropriate.

38. The processing system according to any one of claims 34 to 37, wherein
the processing system comprises a measuring apparatus that is configured to measure a position of the object and that is configured to measure a position of the processing apparatus,
the control apparatus calculates, based on a measuring result by the measuring apparatus, a first target movement route that is a movement route from a first movement start position at which the movement due to the second movement apparatus is started to a first target position, and
the second movement apparatus is configured to move along the first target movement route.

39. The processing system according to claim 38, wherein
the measuring apparatus is further configured to measure a position of the measurement apparatus,
the control apparatus calculates, based on the measuring result, a second target movement route that is a movement route from a second movement start position at which the movement due to the fourth movement apparatus is started to a second target position, and
the fourth movement apparatus is configured to move along the second target movement route.

40. The processing system according to any one of claims 22 to 39, wherein
an amount of change in the position of the processing head by the second movement apparatus is larger than an amount of change in the position of the processing head by the first movement apparatus, and
an amount of change in the position of the measurement head by the fourth movement apparatus is larger than an amount of change in the position of the measurement head by the third movement apparatus.

41. The processing system according to any one of claims 34 to 39, wherein
the object includes a base material and a film that is formed on the base material, and
the control apparatus calculates a thickness of the film based on a measures result of the object by the measurement apparatus, and controls the processing apparatus based on the calculated thickness of the film.

42. The processing system according to claim 41, wherein
the control apparatus determines, based on the calculated thickness of the film, a non-processing part of the object that should not be processed by the processing apparatus, and controls the processing apparatus not to process the non-processing part.

43. The processing system according to claim 41 or 42, wherein
the processing apparatus includes an optical element that is configured to change a converged position of the processing beam in a direction intersecting a surface of the object, and
the control apparatus controls the optical element based on the calculated thickness of the film.

44. The processing system according to any one of claims 22 to 43, wherein
the object processed by the processing apparatus includes at least one of an airplane, a windmill, a turbine for an engine, and a turbine for a power generation.

45. The processing system according to any one of claims 22 to 44, wherein
the second movement apparatus is configured to move the processing head in a first axis direction and a second axis direction that intersect a gravity direction,
the first movement apparatus is configured to move the processing head in the first axis direction, the second axis direction, and a third axis direction that intersects the first and second axis directions.
the fourth movement apparatus is configured to move the measurement head in the first axis direction and the second axis direction, and
the third movement apparatus is configured to move the measurement head in the first axis direction, the second axis direction, and the third axis direction.

46. The processing system according to claim 45, wherein
the first movement apparatus is configured to move the processing head in a first rotational direction around a rotational axis along the first axis direction, a second rotational direction around a rotational axis along the second axis direction, and a third rotational direction around a rotational axis along the third axis direction, and
the third movement apparatus is configured to move the measurement head in the first rotational direction, the second rotational direction, and the third rotational direction.

47. A processing system that processes an object, wherein
the processing system comprises:
a processing apparatus that is configured to process the object by irradiating the object with a processing beam;
a measuring apparatus that is configured to measure a position of the object; and
a control apparatus that is configured to control the processing apparatus,
the processing apparatus includes:
a first movement apparatus that is configured to change a position of a processing head that emits the processing beam; and
a second movement apparatus on which the first movement apparatus is mounted and which is configured to move on a first plane,
the control apparatus controls a movement on the first plane due to the second movement apparatus based on a measuring result by the measuring apparatus and model information related to a shape of the object.

48. A processing system that processes an object, wherein
the processing system comprises:
a processing apparatus that is configured to process the object by irradiating the object with a processing beam;
an imaging apparatus that is configured to image the object; and
a control apparatus that is configured to control the processing apparatus,
the processing apparatus includes:
a first movement apparatus that is configured to change a position of a processing head that emits the processing beam; and
a second movement apparatus on which the first movement apparatus is mounted and which is configured to move on a first plane,
the control apparatus controls a movement on the first plane due to the second movement apparatus based on an imaged result by the imaging apparatus and model information related to a shape of the object.

49. A measurement system comprising:
a measurement apparatus including a measurement head that is configured to measure a position or a shape of an object;
a measuring apparatus that is configured to measure a position of the object and that is configured to measure a position of the measurement apparatus; and
a control apparatus that is configured to control the measurement apparatus,
wherein
the measurement apparatus includes:
a first movement apparatus that is configured to change a position of the measurement head; and
a second movement apparatus on which the first movement apparatus is mounted and which is configured to move on a first plane,
the control apparatus controls a movement on the first plane due to the second movement apparatus based on a measuring result by the measuring apparatus and model information related to a shape of the object.

50. A measurement system comprising:
a measurement apparatus including a measurement head that is configured to measure a position or a shape of an object;
a measuring apparatus that is configured to measure a position of the object; and
a control apparatus that is configured to control the measurement apparatus,
wherein
the measurement apparatus includes:
a first movement apparatus that is configured to change a position of the measurement head; and
a second movement apparatus on which the first movement apparatus is mounted and which is configured to move on a first plane,
the control apparatus controls a movement on the first plane due to the second movement apparatus based on a measuring result by the measuring apparatus and model information related to a shape of the object.

51. A measurement system comprising:
a measurement apparatus including a measurement head that is configured to measure a position or a shape of an object;
an imaging apparatus that is configured to image the object; and
a control apparatus that is configured to control the measurement apparatus,
wherein
the measurement apparatus includes:
a first movement apparatus that is configured to change a position of the measurement head; and
a second movement apparatus on which the first movement apparatus is mounted and which is configured to move on a first plane,
the control apparatus controls a movement on the first plane due to the second movement apparatus based on an imaged result by the imaging apparatus and model information related to a shape of the object.

52. A processing system that processes an object, wherein
the processing system comprises:
a processing apparatus that is configured to process the object by irradiating the object with a processing beam;
a measuring apparatus that is configured to measure a position of the object; and
a control apparatus that is configured to control the processing apparatus,
the processing apparatus includes:
a first movement apparatus that is configured to change a position of a processing head that emits the processing beam; and
a second movement apparatus on which the first movement apparatus is mounted and which is configured to move on a first plane.
